(19) **Europäisches Patentamt**
**European Patent Office**
**Office européen des brevets**

(11) **EP 4 327 143 B1**

(12) **EUROPÄISCHE PATENTSCHRIFT**

(45) Veröffentlichungstag und Bekanntmachung des Hinweises auf die Patenterteilung:
**24.06.2026 Patentblatt 2026/26**

(21) Anmeldenummer: **22725999.1**

(22) Anmeldetag: **21.04.2022**

(51) Internationale Patentklassifikation (IPC):
*G02B 5/28* (2006.01)     *G02B 1/115* (2015.01)
*G02C 7/10* (2006.01)

(52) Gemeinsame Patentklassifikation (CPC):
**G02C 7/104; G02B 1/115; G02C 7/107**

(86) Internationale Anmeldenummer:
**PCT/EP2022/060538**

(87) Internationale Veröffentlichungsnummer:
**WO 2022/223685 (27.10.2022 Gazette 2022/43)**

(54) **ANTIREFLEX-BESCHICHTUNG MIT IR-SCHUTZ UND VERSPIEGELUNG UNTER HÖHEREN EINFALLSWINKELN**

ANTI-REFLECTIVE COATING HAVING IR PROTECTION AND MIRRORING AT HIGHER ANGLES OF INCIDENCE

REVÊTEMENT ANTIREFLET AYANT UNE PROTECTION ANTI-RI ET REFLÉTANT À DES ANGLES D'INCIDENCE SUPÉRIEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2021 DE 102021204079**

(43) Veröffentlichungstag der Anmeldung:
**28.02.2024 Patentblatt 2024/09**

(73) Patentinhaber: **Rodenstock GmbH**
**80687 München (DE)**

(72) Erfinder:
• **SCHERSCHLICHT, Rüdiger**
**82008 Unterhaching (DE)**
• **RADÜNZ, Stefan**
**82205 Gilching (DE)**

(74) Vertreter: **Müller-Boré & Partner Patentanwälte PartG mbB**
**Friedenheimer Brücke 21**
**80639 München (DE)**

(56) Entgegenhaltungen:
EP-A1- 3 702 830     WO-A1-2016/110339
US-A- 4 556 599     US-A1- 2015 293 284

**Beschreibung**

Die Erfindung betrifft ein Schichtsystem, ein Brillenglas mit einem Schichtsystem sowie ein Verfahren zur Herstellung eines Schichtsystems, welches beispielsweise in optischen Elementen, wie Linsen, insbesondere für Brillengläser Anwendung findet.

Ferner kann die Erfindung auch für Glasscheiben, insbesondere für Displaygläser zum Schutz von Bildschirmen bzw. Displays im Mobilfunk und Computerbereich Anwendung finden.

Die Erfindung kann darüber hinaus auch bei Glasscheiben, insbesondere bei der Beschichtung von Fahrzeugscheiben angewandt werden.

Transparente optische Systeme mit UV-Verspiegelung sind bekannt. Beispielsweise werden in bekannten Materialien für Brillengläser oft UV-Absorber zum Schutz des Auges vor schädlicher UV-Strahlung integriert. Eine Alternative zu diesem im Material implementierten UV-Schutz kann eine Beschichtung eines Brillenglases darstellen, welche auch einen wirksamen Schutz vor UV-Strahlung erzielt. Beispielsweise ist ein solches Schichtsystem aus WO 2016/110339 A1 bekannt. Dabei werden im Wesentlichen im spektralen UV-Wellenlängenbereich (UV-Bereich) hohe Werte für die Reflektivität erreicht, insbesondere über 60 %, wobei dieselben Systeme im Wesentlichen relativ durchlässig für elektromagnetische Strahlung bzw. Licht im sichtbaren und im infraroten Bereich sind. Die Reflexion im UV-Bereich hat insbesondere für Brillengläser und/oder Fahrzeugscheiben den Vorteil, dass ein Benutzer vor schädlicher UV-Strahlung geschützt bzw. abgeschirmt werden kann. Es besteht jedoch auch weiterhin eine Nachfrage nach verbesserten Systemen zum Schutz eines Benutzers vor schädlicher elektromagnetischer Strahlung.

Das Dokument EP 3 702 830 A1 offenbart ein Brillenglas mit einer organischen oder mineralischen Brillenglas-Basis und optional mit einer in die Basis eingebrachten Tönung zur Verwendung des Brillenglases als Sonnenschutzglas. Das Brillenglas weist eine Beschichtung zum Schutz vor Infrarot-Strahlung auf, insbesondere vor Infrarot-A-Strahlung und vor Infrarot-B-Strahlung, wobei die Beschichtung entweder aus einem jeweils auf beide Seiten der Brillenglas-Basis aufgebrachten Interferenz-Schichtenstapel besteht, oder durch eine metallische Beschichtung mit darauf folgender Anti-Reflexionsschicht gebildet wird. Weiterhin wird die Verwendung eines getönten Sonnenschutzglases mit IR-A/IR-B-Filtern sowie insbesondere die Verwendung eines Brillenglases mit IR-Schutz im Nachgang zu Kataraktoperationen vorgeschlagen.

Das Dokument US 2015/0 293 284 A1 offenbart ein Nahinfrarot-Sperrfilter, der in der Lage ist, einen Einfluss auf ein aufgenommenes Bild zu unterdrücken, wenn der Einfallswinkel des Lichts zum Nahinfrarot-Sperrfilter groß ist. Der Nahinfrarot-Sperrfilter umfasst ein Substrat, um mindestens Licht im sichtbaren Wellenlängenbereich durchzulassen. Auf mindestens einer Seite des Substrats ist eine Infrarot-reflektierende Schicht angeordnet, welche als mehrschichtiger Film ausgebildet ist mit abwechselnd einem Film H mit hohem Brechungsindex und einem Film L mit niedrigem Brechungsindex. Oder sie ist als mehrschichtiger Film ausgebildet mit abwechselnd einem Film H mit hohem Brechungsindex, einem Film M mit mittlerem Brechungsindex und einem Film L mit niedrigem Brechungsindex. Der Nahinfrarot-Sperrfilter weist derartige Lichttransmissionseigenschaften auf, dass eine Differenz zwischen einem Maximalwert und einem Minimalwert von Abnahmeraten der mittleren Transmission in Region R, Region G und Region B höchstens 0,05 beträgt.

Das Dokument US 4,556,599 offenbart ein Wärmereflexionsfolie mit einer ersten Schicht, die auf einer Grundplatte gebildet ist. Die optische Dicke der ersten Schicht beträgt ungefähr $\lambda/8$ oder $3\lambda/8$, wobei $\lambda$ die vorgesehene Wellenlänge ist. Bei einer Vielzahl von Zwischenschichten von einer zweiten Schicht bis zu einer $(2n+2)$-ten Schicht, wobei $n$ eine positive ganze Zahl ist, beträgt die optische Dicke jeder Zwischenschicht $\lambda/4$. Die optische Dicke einer obersten $(2n+3)$-te Schicht beträgt etwa $\lambda/8$. Dabei gilt $n_g < n_1 < n_2$, wobei $n_g$ der Brechungsindex der Grundplatte ist, $n_1$ der Brechungsindex der ersten Schicht, und $n_2$ der Brechungsindex der zweiten Schicht. Dabei sind die über der ersten Schicht gebildeten Schichten so angeordnet, dass Schichten mit hohem Brechungsindex und Schichten mit niedrigem Brechungsindex abwechselnd gestapelt sind, wobei die zweite Schicht als Schicht mit hohem Brechungsindex angeordnet ist.

Das Dokument WO 2016/110339 A1 offenbart ein Schichtsystem mit wenigstens einem Stapel von aufeinander folgenden Schichtpaketen. Dabei umfasst jedes Schichtpaket eine erste Teilschicht mit einer ersten optischen Dicke und eine zweite Teilschicht mit einer zweiten, von der ersten optischen Dicke verschiedenen optischen Dicke. Dabei weist das Schichtpaket optische Eigenschaften auf, die abhängig von einem Parameter vorgegeben sind, der eine Funktion eines Verhältnisses von Quotienten der optischen Dicke jeweils einer höherbrechenden Teilschicht und der optischen Dicke einer niedrigerbrechenden Teilschicht des Schichtpakets ist, wobei der Index $i$ die Reihenfolge der aufeinander folgenden Schichtpakete im Stapel bezeichnet. Das Produkt aus einer Reflektivität des Stapels von Schichtpaketen und dem Parameter ist kleiner als bei einer Entspiegelung und/oder antireflektierenden Wirkung des Stapels von Schichtpaketen, oder größer oder gleich 1 für eine Verspiegelung. Ferner offenbart das Dokument ein optisches Element mit einem solchen Schichtsystem sowie ein Verfahren zur Herstellung eines solchen Schichtsystems.

Gemäß einem Aspekt besteht die Aufgabe darin, ein System sowie ein Verfahren zur Herstellung des Systems bereitzustellen, welche einen verbesserten Schutz eines Benutzers vor bestimmter elektromagnetischer Strahlung ermöglicht.

Die Aufgabe wird durch das Schichtsystem und das Verfahren zur Herstellung des Schichtsystems entsprechend der unabhängigen Ansprüche gelöst. Vorteilhafte Ausführungsformen sind jeweils Gegenstand der abhängigen Ansprüche.

Ein Schichtsystem mit Infrarot-Verspiegelung gemäß der Erfindung wird im Anspruch 1 festgelegt.

Schichtsystem mit Infrarot-Verspiegelung nach einem Aspekt umfassend

eine Substratbasis, beispielsweise ein Brillenglas oder eine Fahrzeugscheibe oder eine Fensterscheibe, insbesondere eine Gebäudefensterscheibe, umfassend eine Substratlage mit einer Substratfläche durch die zumindest teilweise elektromagnetische Strahlung propagieren bzw. hindurchtreten kann; und

eine Mehrzahl niederbrechender Schichtlagen und eine Mehrzahl hochbrechender Schichtlagen, wobei abwechselnd eine hochbrechende Schichtlage bzw. eine Schichtlage mit hochbrechender Eigenschaft und eine niederbrechende Schichtlage bzw. eine Schichtlage mit niederbrechender Eigenschaft so an oder auf der Substratfläche angeordnet sind, dass das Schichtsystem bei einem Detektionswinkel von etwa 0° mit mindestens einer Substratnormalen der Substratfläche

eine Reflektivität für elektromagnetische Strahlung bzw. Licht von etwa $R \geq 15\%$, insbesondere von etwa $R \geq 25\%$ und besonders $R \geq 50\%$ für mindestens einen Wellenlängenbereich zwischen etwa 680 nm und etwa 1100 nm hat bzw. aufweist; und

eine Reflektivität für elektromagnetische Strahlung bzw. Licht von etwa $R \leq 5\%$, insbesondere von etwa $R \leq 2,5\%$, und besonders bevorzugt von etwa $R \leq 0,5\%$, für mindestens einen Wellenlängenbereich zwischen etwa 400 nm und etwa 680 nm hat bzw. aufweist, sodass das Schichtsystem im Wesentlichen durchsichtig bzw. transparent für elektromagnetische Strahlung in zumindest einem Abschnitt des sichtbaren Bereichs ist.

Darüberhinaus ist die Reflektivität dieses Schichtsystems ab einer Wellenlänge von etwa 630 nm, insbesondere bei etwa 680 nm für einen Betrachtungswinkel $\alpha$ von etwa 45°

- zwischen etwa 10 % und 20 %, insbesondere etwa 15 % höher als bei einem Betrachtungswinkel $\alpha$ von etwa 30°;
- zwischen etwa 20 % und 30 %, insbesondere etwa 25 % höher als bei einem Betrachtungswinkel $\alpha$ von etwa 15°; und
- zwischen etwa 23 % und 33 %, insbesondere etwa 27 % höher als bei einem Betrachtungswinkel $\alpha$ von etwa 0°.

Der Begriff "etwa" bezieht sich in dieser aber auch in anderen Angaben auf eine Abweichung von +/- 10%, bevorzugt von +/- 5%, besonders bevorzugt von +/- 3%, und insbesondere von +/- 1% des jeweils angegebenen Wertes bzw. der Werte, insbesondere des Sollwertes und/oder des Grenzwertes.

Mit Detektionswinkel von etwa 0° ist gemeint unter einem Winkel zu messen, der möglichst nah bei 0° ist, abhängig von der Meßapparatur. In anderen Worten ist dem Fachmann bekannt, dass eine Messung bei einem Detektionswinkel von 0° nicht exakt bei 0° durchgeführt wird, sondern messtechnisch bedingt von 0° abweichen wird.

Der Begriff "Glas" und/oder "Brillenglas" kann ein entsprechendes Glas und/oder Brillenglas auf $SiO2$-Basis und/oder aus Kunststoff betreffen.

Besonders bevorzugt umfasst ein Schichtsystem mit Infrarot-Verspiegelung

eine Substratbasis, beispielsweise ein Brillenglas oder eine Fahrzeugscheibe oder eine Fensterscheibe, insbesondere eine Gebäudefensterscheibe, umfassend eine Substratlage mit einer Substratfläche durch die zumindest teilweise elektromagnetische Strahlung propagieren bzw. hindurchtreten kann; und

eine Mehrzahl niederbrechender Schichtlagen und eine Mehrzahl hochbrechender Schichtlagen, wobei abwechselnd eine hochbrechende Schichtlage bzw. eine Schichtlage mit hochbrechender Eigenschaft und eine niederbrechende Schichtlage bzw. eine Schichtlage mit niederbrechender Eigenschaft so an oder auf der Substratfläche angeordnet sind, dass das Schichtsystem bei einem Detektionswinkel von etwa 0° im Rahmen der Messgenauigkeit mit mindestens einer Substratnormalen der Substratfläche

eine Reflektivität für elektromagnetische Strahlung bzw. Licht von $R \geq 15\%$, insbesondere von $R \geq 25\%$ und besonders $R \geq 50\%$ für mindestens einen Wellenlängenbereich zwischen 680 nm und 1100 nm hat bzw. aufweist; und

eine Reflektivität für elektromagnetische Strahlung bzw. Licht von $R \leq 5\%$, insbesondere von $R \leq 2,5\%$, und besonders bevorzugt von $R \leq 0,5\%$, für mindestens einen Wellenlängenbereich zwischen 400 nm und 680 nm hat bzw. aufweist, sodass das Schichtsystem im Wesentlichen durchsichtig bzw. transparent für elektromagnetische Strahlung in zumindest einem Abschnitt des sichtbaren Bereichs ist.

Darüberhinaus ist die Reflektivität dieses Schichtsystems ab einer Wellenlänge von etwa 630 nm, insbesondere bei etwa 680 nm für einen Betrachtungswinkel $\alpha$ von etwa 45°

- zwischen etwa 10 % und 20 %, insbesondere etwa 15 % höher als bei einem Betrachtungswinkel $\alpha$ von etwa 30°;
- zwischen etwa 20 % und 30 %, insbesondere etwa 25 % höher als bei einem Betrachtungswinkel $\alpha$ von etwa 15°; und
- zwischen etwa 23 % und 33 %, insbesondere etwa 27 % höher als bei einem Betrachtungswinkel $\alpha$ von etwa 0°.

Brechwertangaben beziehen sich, sofern nicht anders angegeben, stets auf eine Referenz-Wellenlänge von 550 nm.

Der Wellenlängenbereich zwischen etwa 680 nm und etwa 1100 nm umfasst Teile des infraroten Bereichs, insbesondere den nahinfraroten Bereich und Teile des sichtbaren Bereichs, insbesondere die spektralen Rot-Töne des sichtbaren Bereichs.

Der Wellenlängenbereich zwischen etwa 300 nm und etwa 680 nm umfasst Teile des UV-Bereichs, insbesondere den UV-A und den UV-B Bereich und Teile des sichtbaren Bereichs, insbesondere Violett-Töne. Möglicherweise umfasst er auch Blau-Töne des sichtbaren Bereichs.

Das Schichtsystem gemäß dem obigen Aspekt hat den überraschenden Effekt, dass es eine hohe Verspiegelung für Wellenlängen ab bzw. größer als etwa 700 nm aufweist. Insbesondere wird eine hohe Verspiegelung für einen Wellenlängenbereich im nahinfraroten Bereich, insbesondere im IR-A Bereich erzielt. Gleichzeitig wird eine besonders geringe Verspiegelung, also eine besonders hohe Entspiegelung, d.h. Durchlässigkeit bzw. Transparenz für elektromagnetische Strahlung im sichtbaren Bereich erzielt. Das Schichtsystem erweist sich somit als besonders günstig für die Beschichtung optischer Elemente, beispielsweise für die Beschichtung optischer Linsen, wie insbesondere Brillengläser und/oder Fenstergläser und/oder Fahrzeugscheiben, welche einerseits transparent für Licht in einem breiten sichtbaren Bereich sein sollen und andererseits eine hohe Reflektivität für zumindest einen Teil höherer Wellenlängen aufweisen sollen.

Ein optisches Element, das mit einem Schichtsystem gemäß dem obigen Aspekt beschichtet ist, hat den Vorteil, eine Person, insbesondere die Augen einer Person, die das optische Element verwendet, zumindest teilweise vor elektromagnetischer Strahlung im IR-A Bereich abzuschirmen bei gleichzeitig verbessertem ästhetischen Erscheinungsbild des optischen Elements im sichtbaren Bereich. Die schädigende Wirkung von elektromagnetischer Strahlung, insbesondere im infraroten Spektralbereich wird im Leitfaden "Inkohärente sichtbare und infrarote Strahlung von künstlichen Quellen" (Fachverband für Strahlenschutz e.V., Dokument-Nr. FS-2018-176-AKNIR, 28.05.2018) detailliert beschrieben. Somit können Benutzer eines solchen optischen Elements mittels des darauf befindlichen Schichtsystems gemäß dem vorliegenden Aspekt vorteilhafterweise im Wesentlichen vor dem Einfluss schädlicher elektromagnetischer Strahlung geschützt werden. Insbesondere tritt elektromagnetische Strahlung im IR-A Bereich beispielsweise im Straßenverkehr auf. Durch den verstärkten Einsatz von Nachtsicht-Assistenzsystemen im Straßenverkehr kommt es beispielsweise zu einer erhöhten Exposition gegenüber elektromagnetischer Strahlung im IR-A Bereich, welche - ohne entsprechende Filterung - nahezu ungehindert auf das menschliche Auge auftrifft.

Durch die hohe Reflexion von Strahlung im IR-A Bereich und die gleichzeitig hohe Transmissionsfähigkeit des Schichtsystems für sichtbare Strahlung, ist es vorteilhaft, das Schichtsystem gemäß dem vorliegenden Aspekt auf Fahrzeugscheiben, beispielsweise auf KFZ-Windschutzscheiben und/oder Heckscheiben, und/oder auf Brillengläsern aufzubringen, sodass die Augen eines Benutzers, beispielsweise eines KFZ Fahrers und/oder eines Brillenträgers vor schädlicher IR Strahlung weitestgehend geschützt werden können. Gleichzeitig ist eine besonders gute Sicht für sichtbare elektromagnetische Strahlung gewährleistet, sodass ein Benutzer in seiner Sicht im Wesentlichen nicht beeinträchtigt wird. Die beschriebene Beschichtung ist insbesondere als Beschichtung auf der konvex-seitigen bzw. vorderseitigen bzw. bei üblicher Benutzungsstellung dem einfallenden Licht zugewandten Seite eines Brillenglases geeignet.

Es besteht des Weiteren ein Vorteil in der ästhetischen Erscheinung des Schichtsystems, beispielsweise, wenn es sich um ein Brillenglas handelt. Insbesondere kann ein Brillenglasträger die Schutzwirkung der Brille im infraroten Bereich schon durch bloßes Betrachten der äußeren Oberfläche des Brillenglases unter dem entsprechenden Winkel durch den roten Reflex identifizieren und ggf. von einer konventionellen Brille unterscheiden.

Bevorzugt ist die Mehrzahl niederbrechender Schichtlagen ein System aus im Wesentlichen homogen niederbrechenden Schichtlagen und die Mehrzahl hochbrechender Schichtlagen ein System aus im Wesentlichen homogen hochbrechenden Schichtlagen. In anderen Worten wird bevorzugt ein bestimmtes Material oder eine bestimmte Materialmischung für ein System aus homogen niederbrechenden Schichtlagen verwendet, wobei ein anderes bestimmtes Material bzw. eine bestimmte Materialmischung für ein System aus homogen hochbrechenden Schichtlagen verwendet wird. Insbesondere wird als Material für die niederbrechenden Schichtlagen $SiO_2$ verwendet und als Material für hochbrechende Schichtlagen wird bevorzugt $ZrO_2$ verwendet. Insbesondere werden also zwei bestimmte Materialien für das System der homogen niederbrechenden Schichtlagen und der homogen hochbrechenden Schichtlagen verwendet, was jedoch nicht ausschließt, dass auch andere Materialien in dem Schichtsystem verwendet werden.

Bevorzugt weist eine der niederbrechenden Schichtlagen $SiO_2$ auf. Die niederbrechende Schichtlage kann vollständig aus $SiO_2$ bestehen. Diese niederbrechende Schichtlage soll in diesem Fall in Kombination mit den anderen Schichtlagen eine Entspiegelungswirkung im sichtbaren Wellenlängenbereich aufweisen. In anderen Worten erlaubt eine niederbrechende Schichtlage, welche $SiO_2$ aufweist, integriert in der Anordnung aus abwechselnd niederbrechenden und hochbrechenden Schichtlagen eine besondere Entspiegelungswirkung im sichtbaren Wellenlängenbereich. Insbesondere hat eine niederbrechende Schichtlage, die $SiO_2$ aufweist und die auf eine hochbrechende Schichtlage aufgebracht ist, einen Effekt der Entspiegelung.

Insbesondere weist die von dem Substrat am entferntesten gelegene niederbrechende Schichtlage $SiO_2$ auf, um die Entspiegelungswirkung zu erzielen. Die niederbrechende Schichtlage, die $SiO_2$ aufweist und am entferntesten vom Substrat gelegen ist hat insbesondere dadurch eine besonders entspiegelnde Wirkung, da sie auf eine hochbrechende Schichtlage aufgebracht ist.

Somit weist das Schichtsystem eine niederbrechende Schichtlage mit einer Schichtlagendicke von insbesondere etwa 70 nm bis etwa 77 nm, wobei die niederbrechende Schichtlage bevorzugt ein Quarz d.h. $SiO_2$ aufweist und dazu geeignet ist in Kombination mit den anderen Schichtlagen, welche abwechselnd geschichtete niederbrechende und hochbrechende Schichtlagen sind, das Schichtsystem im sichtbaren Wellenlängenbereich zu entspiegeln. Wie bereits erwähnt, handelt es sich bei dieser niederbrechenden Schichtlage um die von dem Substrat am entferntesten gelegene niederbrechende Schichtlage bzw. die oberste niederbrechende Schichtlage. Die von dem Substrat am entferntesten gelegene niederbrechende Schichtlage ist auf eine hochbrechende Schichtlage aufgebracht und hat insbesondere dadurch die Wirkung einer Entspiegelung.

Weitere funktionale Schichtlagen können auf der letzten bzw. oberen bzw. äußersten niederbrechenden Schichtlage angeordnet sein, wie etwa eine Pflegeschichtlage, die insbesondere zur Vermeidung von Anhaftungen von Verunreinigungen dienen kann.

Bevorzugt ist die letzte optisch aktive Schichtlage eine niederbrechende Schichtlage.

Wie oben bereits ausgeführt wurde, sind optisch aktive Schichtlagen solche Schichtlagen, die optische Eigenschaften des Schichtsystems oder des optischen Elements, an dem das Schichtsystem angeordnet ist, insbesondere Transmission und/oder Reflexion des Schichtsystems oder des optischen Elements wesentlich beeinflussen oder festlegen. Davon unterscheiden sich funktionale Schichtlagen, die vorzugsweise nicht optisch aktiv sind, da sie die optischen Eigenschaften des Schichtsystems oder des optischen Elements, an dem das Schichtsystem angeordnet ist, insbesondere die Transmission und/oder die Reflexion des Schichtsystems oder des optischen Elements nicht wesentlich beeinflussen oder nicht festlegen.

Das Schichtsystem ist mit einer letzten bzw. obersten im Wesentlichen optisch aktiven Schichtlage ausgestattet, wobei die Schichtlage eine der niederbrechenden Schichtlagen ist und bevorzugt aus $SiO_2$ besteht. Dieser Aufbau erweist sich besonders vorteilhaft in der Entspiegelungswirkung zumindest teilweise im sichtbaren Wellenlängenbereich. $SiO_2$ in amorpher Form hat beispielsweise einen Brechungsindex n von etwa 1,46 (bei einer Wellenlänge von etwa 550 nm gemessen, welche dem Schwerpunkt der Augenempfindlichkeit entspricht). Alternativ könnte diesbezüglich auch niederbrechendes $MgF_2$ verwendet werden, was einen Brechungsindex n von etwa 1,38 hat, allerdings kann dieses Material nur unter hohen Temperaturen von etwa 300°C aufgebracht werden.

Bevorzugt sind die Schichtlagen so an oder auf der Substratfläche angeordnet bzw. aufgebracht bzw. abgeschieden, dass das Schichtsystem bei einem Detektionswinkel von etwa 0° mit der Substratnormalen der Substratfläche für mindestens einen Wellenlängenbereich zwischen etwa 280 nm und etwa 400 nm eine Reflektivität für elektromagnetische Strahlung von etwa $R \geq 10\,\%$, insbesondere etwa $R \geq 20\,\%$ und besonders bevorzugt etwa $R \geq 60\,\%$ hat bzw. aufweist.

Dieses Schichtsystem ist besonders geeignet zum Schutz vor potentiell schädlicher elektromagnetischer Strahlung im UV-, insbesondere im UV-A und UV-B Bereich. Dieser UV-Schutz ist insbesondere wegen der karzinogenen Wirkung von UV-Strahlung auf menschliches Gewebe besonders günstig, um einen Benutzer vor einer solchen schädlichen Einwirkung zu schützen.

Zusätzlich zum erwähnten IR-Schutz weist die Beschichtung außerdem einen hohen UV-Schutz auf. Ein mit diesem Schichtsystem beschichtetes optisches Element und/oder Fensterglas kann einen Benutzer somit nicht nur vor schädlicher infraroter Strahlung schützen, sondern auch vor schädlicher UV-Strahlung bei gleichzeitig hohen Transmissionseigenschaften im sichtbaren Wellenlängenbereich.

Dieser UV-Schutz gewährt zusätzlich auch dem Glasmaterial, den aufgebrachten Beschichtungen, wie auch den im Glas enthaltene Farbstoffen Schutz vor einer potentiell schädlichen Wirkung der UV-Strahlung.

Das Schichtsystem eignet sich daher besonders für Sport-, Bergsteiger- und Skibrillen, da im Einfluss der Sonnenstrahlung, insbesondere in großen Höhen und bei Schnee, die Belastung durch UV- und IR-Strahlung besonders hoch ist.

Dieses Schichtsystem eignet sich auch gut für die Beschichtung von Displaygläsern zum Schutz von Displays, die vor schädlicher elektromagnetischer Strahlung geschützt werden sollen. Ein Benutzer befindet sich in diesem Fall nicht auf der Seite des Schichtsystems, die dem einfallenden Licht entgegengesetzt ist, sondern auf der Seite des einfallenden Lichtes. Auf der dem einfallenden Licht entgegengesetzten Seite befindet sich dann üblicherweise das Display bzw. der Bildschirm, beispielsweise der LED Bildschirm.

Ein weiteres Anwendungsgebiet stellt Equipment in der Nautik dar, beispielsweise Navigationsinstrumente an Bord eines Schiffs oder eines Boots und/oder Segel- und/oder Rumpfelemente eines Bootes, da die Strahlung auf dem Wasser durch Reflexion von Sonnenlicht an der Wasseroberfläche besonders hoch ist und das entsprechende Material dadurch stark belastet wird.

Optional sind die Schichtlagen so an oder auf der Substratfläche angeordnet bzw. aufgebracht bzw. abgeschieden, dass das Schichtsystem bei einem Detektionswinkel von etwa 0° mit der Substratnormalen der Substratfläche

für mindestens einen Wellenlängenbereich zwischen etwa 480 nm und etwa 580 nm ein Reflektivitätsmaximum elektromagnetischer Strahlung von etwa $R \leq 5$ %, insbesondere von etwa $R \leq 3$ % und besonders bevorzugt von etwa $R \leq 1$ % hat.

Das Reflektivitätsmaximum zwischen etwa 480 nm und etwa 580 nm kann dabei so ermittelt werden, dass der absolute maximale Wert verglichen mit lokalen bzw. umliegenden bzw. benachbarten Reflektivitätswerten bestimmt wird und dabei dem besagten Reflektivitätsmaximum entspricht. Alternativ kann eine Differenz der Reflektivität zwischen dem lokalen Maximum und den lokalen Minima auf beiden Seiten, das heißt zu höheren und zu geringeren Wellenlängen ermittelt werden.

Insbesondere liegen die lokalen Minima in diesem Fall auf beiden Seiten des lokalen Maximums bei etwa demselben Wert, insbesondere bei einer Reflektivität von etwa 0 %. Falls dies nicht der Fall sein sollte und eine Steigung der Reflektivität in Abhängigkeit der Wellenlänge vorliegt, kann dazu auch die mittlere Differenz der Reflektivität zwischen dem lokalen Maximum und den lokalen Minima auf beiden Seiten dienen, oder etwa eine Basislinie in Betracht gezogen werden.

Bei der Entspiegelung einer Fläche im sichtbaren Wellenlängenbereich tritt oft ein vergleichsweise geringes Reflexionsmaximum für Grün-Töne zwischen etwa 480 nm und etwa 580 nm auf. Dieses Maximum hebt sich von benachbarten Reflexionswerten um höchsten 1 % ab, sodass in diesem Bereich, insbesondere für grüne Farbtöne eine vergleichsweise geringe Reflexionseigenschaft besteht, sodass die Transmissionseigenschaften im Wesentlichen für einen breiten Wellenlängenbereich des sichtbaren Lichts besonders hoch sind und Farbtöne nur in einem sehr geringen Maße an den Schichtlagen des Schichtsystems reflektiert werden. In anderen Worten verfälscht das Schichtsystem den Eindruck eines Betrachters auf der dem einfallenden Licht abgewandten Seite des beschichteten Gegenstands im sichtbaren Bereich im Wesentlichen nicht.

Gemäß einer Ausführungsform sind die Schichtlagen so an oder auf der Substratfläche angeordnet und/oder aufgebracht und/oder abgeschieden, dass das Schichtsystem bei einem Detektionswinkel von etwa 0° mit der Substratnormalen der Substratfläche für mindestens einen Wellenlängenbereich im blauen Lichtbereich, d.h. zwischen etwa 420 nm und etwa 500 nm, ein Reflektivitätsmaximum elektromagnetischer Strahlung von etwa $R \leq 5$ %, insbesondere von etwa $R \leq 3$ % und besonders bevorzugt von etwa $R \leq 1$ % hat.

Das Reflektivitätsmaximum zwischen etwa 420 nm und etwa 500 nm kann dabei so ermittelt werden, dass der absolute maximale Wert verglichen mit lokalen und/oder umliegenden und/oder benachbarten Reflektivitätswerten bestimmt wird und dabei dem besagten Reflektivitätsmaximum entspricht. Alternativ kann eine Differenz der Reflektivität zwischen dem lokalen Maximum und den lokalen Minima auf beiden Seiten, das heißt zu höheren und zu geringeren Wellenlängen ermittelt werden. Insbesondere liegen die lokalen Minima in diesem Fall auf beiden Seiten des lokalen Maximums bei etwa demselben Wert, insbesondere bei einer Reflektivität von etwa 0 %. Falls dies nicht der Fall sein sollte und eine Steigung der Reflektivität in Abhängigkeit der Wellenlänge vorliegt, kann dazu auch die mittlere Differenz der Reflektivität zwischen dem lokalen Maximum und den lokalen Minima auf beiden Seiten dienen, oder etwa eine Basislinie in Betracht gezogen werden.

Bei der Entspiegelung einer Fläche im sichtbaren Wellenlängenbereich kann ein vergleichsweise geringes Reflexionsmaximum für Blau-Töne zwischen etwa 420 nm und etwa 500 nm auftreten. Dieses Maximum hebt sich von benachbarten Reflexionswerten um höchsten 1 % ab, sodass in diesem Bereich, insbesondere für blaue Farbtöne eine vergleichsweise geringe Reflexionseigenschaft besteht, sodass die Transmissionseigenschaften im Wesentlichen für einen breiten Wellenlängenbereich des sichtbaren Lichts besonders hoch sind und Farbtöne nur in einem sehr geringen Maße an den Schichtlagen des Schichtsystems reflektiert werden. In anderen Worten verfälscht das Schichtsystem den Eindruck eines Betrachters auf der dem einfallenden Licht abgewandten Seite des beschichteten Gegenstands im sichtbaren Bereich im Wesentlichen nicht.

Bevorzugt umfassen die Mehrzahl hochbrechender Schichtlagen mindestens eines der Materialien: $Ta_2O_5$, $TiO_2$, $Ti_xO_y$, $ZrO_2$, $Al_2O_3$, $Nd_2O_5$, $Pr_2O_3$, $PrTiO_3$, $La_2O_3$, $Nb_2O_5$, $Y_2O_3$, $HfO_2$, ITO (Indium-Zinn-Oxid), $ZnS$, $Si_3N_4$, $MgO$, $CeO_2$ und deren Modifikationen, insbesondere deren andere Oxidationsstufen.

Besonders bevorzugte hochbrechende Schichtlagen umfassen $ZrO_2$ und/oder $Ta_2O_5$. Insbesondere kann eine hochbrechende Schichtlage ein einziges der hier genannten Materialien umfassen. Alternativ kann eine hochbrechende Schichtlage mehrere der genannten Materialien umfassen, und zwar als Gemisch oder als Kombination aus Verbundwerkstoffen oder Kompositwerkstoffen, die jeweils mindestens eines der genannten Materialien umfassen. Ein Schichtsystem kann mehrere hochbrechende Schichtlagen desselben Materials oder alternativ mindestens zwei hochbrechende Schichtlagen unterschiedlicher Materialien umfassen.

Die genannten Materialien eignen sich besonders gut, da sie mittels physical vapour deposition und/oder chemical vapour deposition und/oder sputtern auf der Substratfläche und/oder auf Schichtlagen abgeschieden bzw. aufgebracht werden können.

Besonders bevorzugt umfassen die Mehrzahl niederbrechender Schichtlagen mindestens eines der folgenden Materialien: SiO, $SiO_2$, Silane, Siloxane, eine Mischung umfassend $SiO_2$ und $Al_2O_3$, insbesondere eine Mischung mit mind. etwa 80 Gewichtsprozent $SiO_2$, bevorzugt eine Mischung mit mind. etwa 90 Gewichtsprozent $SiO_2$.

Besonders bevorzugte niederbrechender Schichtlagen bestehen aus $SiO_2$. Insbesondere kann eine niederbrechende Schichtlage aus einem einzigen der hier genannten Materialien bestehen. Alternativ kann eine niederbrechende Schichtlage mehrere der oben genannten Materialien aufweisen, und zwar als Gemisch oder als Kombination aus Verbundwerkstoffen oder Kompositwerkstoffen, die jeweils mindestens eines der Materialien aufweisen. Ein Schichtsystem kann mehrere niederbrechende Schichtlagen desselben Materials oder alternativ mindestens zwei niederbrechende Schichtlagen unterschiedlicher Materialien aufweisen.

Die genannten Materialien eignen sich besonders gut, da sie mittels physical vapour deposition und/oder chemical vapour deposition und/oder sputtern auf der Substratfläche und/oder auf Schichtlagen abgeschieden bzw. aufgebracht werden können.

Bevorzugt umfassen die Schichtlagen beginnend von der Substratbasis angeordnet in folgender Reihenfolge:

eine erste hochbrechende Schichtlage;
eine erste niederbrechende Schichtlage;
eine zweite hochbrechende Schichtlage;
eine zweite niederbrechende Schichtlage;
eine dritte hochbrechende Schichtlage;
eine dritte niederbrechende Schichtlage;
eine vierte hochbrechende Schichtlage; und
eine vierte niederbrechende Schichtlage, insbesondere eine $SiO_2$- d.h. Quarzschicht, die sich dazu eignet, das Schichtsystem zumindest teilweise im sichtbaren Bereich zu entspiegeln.

Bevorzugt weisen die niederbrechenden Schichtlagen homogen ein niederbrechendes Material auf und/oder die hochbrechenden Schichtlagen homogen ein hochbrechendes Material auf und wobei bevorzugt das hochbrechende Material kein höchstbrechendes oder sehr hochbrechendes Material aufweist oder ist.

Bevorzugt umfassen die Schichtlagen beginnend von der Substratbasis angeordnet in folgender Reihenfolge:

eine erste hochbrechende Schichtlage mit einer Schichtlagendicke von mind. etwa 118 nm;
eine erste niederbrechende Schichtlage mit einer Schichtlagendicke von mind. etwa 135 nm;
eine zweite hochbrechende Schichtlage mit einer Schichtlagendicke von mind. etwa 70 nm;
eine zweite niederbrechende Schichtlage mit einer Schichtlagendicke von mind. etwa 80 nm;
eine dritte hochbrechende Schichtlage mit einer Schichtlagendicke von mind. etwa 5 nm;
eine dritte niederbrechende Schichtlage mit einer Schichtlagendicke von mind. etwa 35 nm;
eine vierte hochbrechende Schichtlage mit einer Schichtlagendicke von mind. etwa 55 nm; und
eine vierte niederbrechende Schichtlage mit einer Schichtlagendicke von mind. etwa 60 nm.

In anderen Worten umfasst ein bevorzugtes Schichtsystem beginnend von der Substratbasis angeordnet in folgender Reihenfolge:

eine erste Schichtlage, die eine der hochbrechenden Schichtlagen umfasst, und zwar die erste hochbrechende Schichtlage und eine Schichtlagendicke von mind. etwa 118 nm aufweist;
eine zweite Schichtlage, die eine der niederbrechenden Schichtlagen umfasst, und zwar die erste niederbrechende Schichtlage und eine Schichtlagendicke von mind. etwa 135 nm aufweist;
eine dritte Schichtlage, die eine der hochbrechenden Schichtlagen umfasst, und zwar die zweite hochbrechende Schichtlage und eine Schichtlagendicke von mind. etwa 70 nm aufweist;
eine vierte Schichtlage, die eine der niederbrechenden Schichtlagen umfasst, und zwar die zweite niederbrechende Schichtlage und eine Schichtlagendicke von mind. etwa 80 nm aufweist;
eine fünfte Schichtlage, die eine der hochbrechenden Schichtlagen umfasst, und zwar die dritte hochbrechende Schichtlage und eine Schichtlagendicke von mind. etwa 5 nm aufweist;
eine sechste Schichtlage, die eine der niederbrechenden Schichtlagen umfasst, und zwar die dritte niederbrechende Schichtlage und eine Schichtlagendicke von mind. etwa 35 nm aufweist;
eine siebte Schichtlage, die eine der hochbrechenden Schichtlagen umfasst, und zwar die vierte hochbrechende Schichtlage und eine Schichtlagendicke von mind. etwa 55 nm aufweist; und
eine letzte im Wesentlichen optisch aktive Schichtlage, die eine der niederbrechenden Schichtlagen umfasst, und zwar die vierte niederbrechende Schichtlage und eine Schichtlagendicke von mindestens etwa 60 nm aufweist.

Besonders bevorzugt umfassen die Schichtlagen beginnend von der Substratbasis angeordnet in folgender Reihenfolge:

eine erste hochbrechende Schichtlage mit einer Schichtlagendicke von höchstens etwa 130 nm;
eine erste niederbrechende Schichtlage mit einer Schichtlagendicke von höchstens etwa 160 nm;
eine zweite hochbrechende Schichtlage mit einer Schichtlagendicke von höchstens etwa 120 nm;
eine zweite niederbrechende Schichtlage mit einer Schichtlagendicke von höchstens etwa 105 nm;
eine dritte hochbrechende Schichtlage mit einer Schichtlagendicke von höchstens etwa 15 nm;
eine dritte niederbrechende Schichtlage mit einer Schichtlagendicke von höchstens etwa 45 nm;
eine vierte hochbrechende Schichtlage mit einer Schichtlagendicke von höchstens etwa 80 nm; und
eine vierte niederbrechende Schichtlage mit einer Schichtlagendicke von höchstens etwa 80 nm.

In anderen Worten weist ein bevorzugtes Schichtsystem die Schichtlagen beginnend von der Substratbasis angeordnet in folgender Reihenfolge auf:

eine Schichtlage, die eine der hochbrechenden Schichtlagen umfasst, und zwar die erste hochbrechende Schichtlage und eine Schichtlagendicke von höchstens etwa 130 nm aufweist;
eine Schichtlage, die eine der niederbrechenden Schichtlagen umfasst, und zwar die erste niederbrechende Schichtlage und eine Schichtlagendicke von höchstens etwa 160 nm aufweist;
eine Schichtlage, die eine der hochbrechenden Schichtlagen umfasst, und zwar die zweite hochbrechende Schichtlage und eine Schichtlagendicke von höchstens etwa 120 nm aufweist;
eine Schichtlage, die eine der niederbrechenden Schichtlagen umfasst, und zwar die zweite niederbrechende Schichtlage und eine Schichtlagendicke von höchstens etwa 105 nm aufweist;
eine Schichtlage, die eine der hochbrechenden Schichtlagen umfasst, und zwar die dritte hochbrechende Schichtlage und eine Schichtlagendicke von höchstens etwa 15 nm aufweist;
eine Schichtlage, die eine der niederbrechenden Schichtlagen umfasst, und zwar die dritte niederbrechende Schichtlage und eine Schichtlagendicke von höchstens etwa 45 nm aufweist;
eine Schichtlage, die eine der hochbrechenden Schichtlagen umfasst, und zwar die vierte hochbrechende Schichtlage und eine Schichtlagendicke von höchstens etwa 80 nm aufweist; und
eine letzte im Wesentlichen optisch aktive Schichtlage, die eine der niederbrechenden Schichtlagen umfasst, und zwar die vierte niederbrechende Schichtlage und eine Schichtlagendicke von höchstens etwa 80 nm aufweist.

Besonders bevorzugt umfassen die Schichtlagen beginnend von der Substratbasis angeordnet in folgender Reihenfolge:

eine hochbrechende Schichtlage mit einer Schichtlagendicke von etwa 121,5 nm;
eine niederbrechende Schichtlage mit einer Schichtlagendicke von etwa 151 nm;
eine hochbrechende Schichtlage mit einer Schichtlagendicke von etwa 106,2 nm;
eine niederbrechende Schichtlage mit einer Schichtlagendicke von etwa 95,2 nm;
eine hochbrechende Schichtlage mit einer Schichtlagendicke von etwa 12,1 nm;
eine niederbrechende Schichtlage mit einer Schichtlagendicke von etwa 42,0 nm;
eine hochbrechende Schichtlage mit einer Schichtlagendicke von etwa 59,6 nm; und
eine vierte niederbrechende Schichtlage mit einer Schichtlagendicke von etwa 74,9 nm.

In anderen Worten umfasst ein Schichtsystem bevorzugt die Schichtlagen beginnend von der Substratbasis angeordnet in folgender Reihenfolge:

eine Schichtlage, die eine der hochbrechenden Schichtlagen, insbesondere $ZrO_2$ umfasst, und eine Schichtlagendicke von etwa 121,5 nm aufweist;
eine Schichtlage, die eine der niederbrechenden Schichtlagen, insbesondere $SiO_2$ umfasst, und eine Schichtlagendicke von etwa 151 nm aufweist;
eine Schichtlage, die eine der hochbrechenden Schichtlagen, insbesondere $ZrO_2$ umfasst, und eine Schichtlagendicke von etwa 106,2 nm aufweist;
eine Schichtlage, die eine der niederbrechenden Schichtlagen, insbesondere $SiO_2$ umfasst, und eine Schichtlagendicke von etwa 95,2 nm aufweist;
eine Schichtlage, die eine der hochbrechenden Schichtlagen, insbesondere $ZrO_2$ umfasst, und eine Schichtlagendicke von etwa 12,1 nm aufweist;
eine Schichtlage, die eine der niederbrechenden Schichtlagen, insbesondere $SiO_2$ umfasst, und eine Schichtlagendicke von etwa 42 nm aufweist;
eine Schichtlage, die eine der hochbrechenden Schichtlagen, insbesondere $ZrO_2$ umfasst, und eine Schichtlagendicke von etwa 59,6 nm aufweist; und
eine letzte im Wesentlichen optisch aktive Schichtlage, die eine der niederbrechenden Schichtlagen umfasst und insbesondere $SiO_2$ aufweist und eine Schichtlagendicke von etwa 75 nm, insbesondere von etwa 74,9 nm aufweist.

Vorteilhafterweise ergibt sich für Schichtsysteme der oben genannten Ausführungsformen für die Reflektivität für elektromagnetische Strahlung zwischen etwa 680 nm und etwa 1100 nm ein Maximum der Reflektivität, dessen Lage, Höhe und Breite besonders günstig für die Reflexion von IR-A Strahlung ist. Gleichzeitig ist die Transmission von sichtbarem Licht ebenfalls besonders günstig, sodass ein hoher Anteil des sichtbaren Lichts durch das Schichtsystem propagieren bzw. verlaufen bzw. dringen kann und beispielsweise im Falle eines Brillenglases somit für den Brillenträger als sichtbar erscheint und eine gute Sicht gewährt werden kann. Das Maximum zwischen etwa 680 nm und etwa 1100 nm liegt so, dass nach Gewichtung nach ICNIRP-Guidelines von 2013 möglichst viel der potentiell schädigenden IR-A Strahlung reflektiert wird und in der spektralen Halbwertsbreite besonders günstig ist, da ein ausreichend breiter spektraler Bereich der IR-A Strahlung ausreichend stark reflektiert werden kann. Somit ergibt sich in Folge dieser vorliegenden Ausführungsform ein besonders günstiger IR-Schutz, das heißt eine besonders gute Abschirmung von elektromagnetischer Strahlung insbesondere im IR-A Bereich.

Gemäß der vorliegenden Beschreibung wurde erkannt, dass sich der obige vorteilhafte Effekt insbesondere einstellt, wenn das Schichtsystem die oben genannte Schichtfolge mit den oben genannten Schichtdicken und/oder Materialien aufweist. Es kann auch möglich sein, dass sich der obige vorteilhafte Effekt zumindest teilweise einstellt, wenn zwei oder drei der hochbrechenden Schichtlagen und/oder zwei oder drei niederbrechenden Schichtlage, wie oben ausgeführt, ausgebildet sind.

Zusätzlich zum erwähnten IR-Schutz weist die Beschichtung außerdem auch einen hohen UV-Schutz auf. Dieser UV-Schutz schützt einen Benutzer ebenfalls vor potentiell schädlicher elektromagnetischer Strahlung. Zusätzlich können das Substrat, insbesondere ein Glasmaterial, aufgebrachte Beschichtungen und/oder im Glas enthaltene Farbstoffe vor UV-Strahlung geschützt werden.

Bevorzugt weist das Schichtsystem ferner

eine funktionale Schichtlage auf, die insbesondere aus $Al_2O_3$ bestehen kann; und/oder bevorzugt weist das Schichtsystem ferner eine Pflegeschichtlage auf.

Besonders bevorzugt weist das Schichtsystem ferner

eine funktionale Schichtlage auf, die insbesondere aus $Al_2O_3$ bestehen kann und eine Schichtlagendicke von mind. etwa 8 nm und höchstens etwa 11 nm haben kann; und/oder besonders bevorzugt weist das Schichtsystem ferner eine Pflegeschichtlage mit einer Schichtlagendicke von mind. etwa 1 nm und höchstens etwa 20 nm auf. Die funktionale Schichtlage kann zusätzlich oder alternativ auch ITO und/oder ein anderes ähnliches Material aufweisen oder daraus bestehen.

In anderen Worten weist das Schichtsystem nach einer Ausführungsform ferner folgende optionale Schichtlagen auf

- eine funktionale Schichtlage insbesondere aus $Al_2O_3$ welche bevorzugt eine Schichtlagendicke von mind. etwa 8 nm und höchstens etwa 11 nm aufweist; an dieser funktionalen Schichtlage aus $Al_2O_3$ ist die vierte niederbrechende Schichtlage insbesondere aus $SiO_2$ und mit einer bevorzugten Schichtlagendicke von mind. etwa 70 nm und höchstens etwa 77 nm, angebracht; und/oder

- eine Pflegeschichtlage, insbesondere mit fluorhaltigen Molekülen und bevorzugt mit einer Schichtlagendicke von mind. etwa 1 nm und höchstens etwa 20 nm aufweist.

In anderen Worten weist gemäß einer bevorzugten Ausführungsform das Schichtsystem zehn Schichtlagen auf, wobei die ersten sieben Schichtlagen die abwechselnd angeordneten ersten bis vierten hochbrechenden Schichtlagen und ersten bis dritten niederbrechenden Schichtlagen sind. An der vierten hochbrechenden Schichtlage ist die funktionale Schichtlage aus $Al_2O_3$ angeordnet. An der funktionalen Schichtlage aus $Al_2O_3$ ist die vierte niederbrechende Schichtlage angeordnet. An der vierten niederbrechenden Schichtlage ist die Pflegeschichtlage angeordnet. Dieses Schichtsystem kann beispielsweise in sukzessiven Auftragungsschritten direkt auf ein Substrat aufgebracht werden. Alternativ ist es auch möglich, dass zwischen dem Schichtsystem und dem Substrat ein oder mehrere Schichtlagen, z.B. umfassend einen Haftvermittler, einen Hartlack etc., angeordnet sind.

Die Pflegeschichtlage kann auf die letzte optisch relevante Schichtlage des Schichtsystems aufgebracht sein und fluorhaltige Moleküle enthalten. Die Funktion dieser Pflegeschichtlage stellt üblicherweise eine verbesserte Pflegeeigenschaft, mit Eigenschaften wie wasser- und ölabweisenden Funktionen bei einer Oberflächenenergie von typischerweise kleiner 15 mN/m dar.

Bevorzugt umfasst die Substratbasis ferner:

eine Schutzschichtlage, welche auch als hard coat-Schichtlage oder Kratzschutz-Schichtlage bezeichnet werden kann und insbesondere eine Lackschicht oder eine organische Schicht aufweist, mit einer Schichtlagendicke von mind. etwa 500 nm und höchstens etwa 5 μm; und bevorzugt eine Adhäsionsschichtlage, die insbesondere niederbrechende Metalloxide, Chrom, Silane und/oder Siloxane, mit einer Schichtlagendicke von mind. etwa 1 nm und höchstens etwa 20 nm aufweist.

Bevorzugt wird zwischen der Kratzschutz-Schichtlage und dem Substrat eine weitere Schicht aufgebracht, die Primerlackschicht genannt werden kann. Diese Primerlackschicht hat die Wirkung eines Haftvermittlers und/oder einer erhöhten Schlagfestigkeit.

In anderen Worten weist die Substratbasis bevorzugt ferner die folgenden Schichtlagen auf:

eine Schichtlage, die eine Schutzschichtlage bzw. eine hard coat-Schichtlage umfasst und bevorzugt eine Schichtlagendicke von mind. etwa 500 nm und höchstens etwa 5 μm aufweist; und bevorzugt eine Schichtlage, die eine Adhäsionsschichtlage umfasst, insbesondere niederbrechende Metalloxide, Chrom, Silane und/oder Siloxane umfassend, und bevorzugt eine Schichtlagendicke von mind. etwa 1 nm und höchstens etwa 20 nm aufweist.

Eine Schutzschichtlage hat den Vorteil, dass diese das Substrat vor äußeren Einflüssen schützen kann und damit das gesamte System besonders widerstandsfähig macht. Die Schutzschichtlage kann insbesondere uretanbasierte Lacke und/oder acetatbasierte Lacke als Primer und/oder Pufferlacke (aufgetragen vor der Schutzschichtlage) zur Haftverbesserung und für eine erhöhte Schlagfestigkeit aufweisen.

Bevorzugt kann eine Primerlackschicht als Haftvermittler und insbesondere zur Verbesserung der Schlagfestigkeit zwischen Substrat und Schutzschichtlage bzw. Kratzschutz-Schichtlage angeordnet sein.

Eine Adhäsionsschichtlage erlaubt oder erleichtert ein Aufbringen der Schichtlagen des Schichtsystems. Beispielsweise kann eine solche Adhäsionsschichtlage ein Element, wie beispielsweise Chrom oder haftende Moleküle, beispielsweise mit Silanverbindungen, aufweisen. Die Adhäsionsschichtlage hat die Wirkung eines Vermittlers, der eine zuverlässige chemische Bindung zur Substratfläche herstellt und insbesondere das aufzubringende Material der ersten Schichtlage chemisch bindet. Solche Schichtsysteme können somit entsprechend neben den optisch relevanten Schichtlagen, die im Wesentlichen die hoch- und die niederbrechenden Schichtlagen umfassen, auch weitere funktionale Schichtlagen, Pflegeschichtlagen, Schutzschichtlage und/oder Adhäsionsschichtlagen umfassen, die für die optischen Eigenschaften im Wesentlichen nicht relevant sind. Alternativ kann jedoch auch eine optisch relevante Schichtlage mit Funktionen versehen sein, indem beispielsweise ein Gemisch von Materialien aufgetragen wird.

Bevorzugt umfasst die Substratbasis ein optisches Element, insbesondere eine Linse und bevorzugt ein Brillenglas.

Durch die hohe Verspiegelungseigenschaft im Infrarotbereich und dem daraus resultierenden hohen Blendschutz im IR-A Bereich sowie die hohe Lichttransmission im sichtbaren Wellenlängenbereich eignet sich das Schichtsystem besonders als Beschichtung für Brillen von Verkehrsteilnehmern. Die Beschichtung eignet sich durch einen hohen IR-A Schutz auch insbesondere für optische Elemente in Fahrzeugen, wie beispielsweise für Windschutzscheiben.

Optional umfasst die Substratbasis eine Scheibe, insbesondere eine Fahrzeugscheibe und bevorzugt eine Windschutzscheibe und/oder eine Heckscheibe und/oder einen Spiegel und/oder eine Seitenscheibe eines Fahrzeugs.

Dieses bevorzugte Schichtsystem weist hohe skotopische bzw. mesopische Seheigenschaften über einen großen Winkelbereich bzw. Einfallswinkelbereich des einfallenden Lichtes auf und kann so einen Autofahrer bei dem Nachtsehen und/oder bei dem Dämmerungssehen unterstützen. Das skoptische Sehen, auch Dämmerungssehen oder Stäbchensehen, betrifft die Lichtwahrnehmung bei geringer Helligkeit, wobei der Übergangsbereich in der Dämmerung dem mesopischen Bereich oder Dämmerungssehen entspricht.

Insbesondere tritt elektromagnetische Strahlung im IR-A Bereich beispielsweise im Straßenverkehr auf. Auch durch den verstärkten Einsatz von Nachtsicht-Assistenzsystemen im Straßenverkehr kommt es beispielsweise zu einer erhöhten Exposition gegenüber elektromagnetischer Strahlung im IR-A Bereich, welche - ohne entsprechende Filterung - nahezu ungehindert auf das menschliche Auge auftrifft.

Durch die geeignete Transmissionsfähigkeit sichtbarer elektromagnetischer Strahlung bei gleichzeitig hoher Reflexion von elektromagnetischer Strahlung im IR-A Bereich, ist es vorteilhaft, dieses bevorzugte Schichtsystem auf Fahrzeugscheiben, beispielsweise auf KFZ-Windschutzscheiben aufzubringen, sodass die Augen eines Benutzers, beispielsweise eines KFZ Fahrers vor schädlicher IR Strahlung weitestgehend geschützt werden können, bei gleichzeitig günstigen Transmissionseigenschaften im sichtbaren Bereich. In anderen Worten erlaubt eine derart beschichte Windschutzscheibe eine hohe Sichtbarkeit im sichtbaren spektralen Wellenlängenbereich bei gleichzeitig hohem Schutz vor IR Strahlung und bevorzugt vor UV Strahlung.

Die Beschichtung mit dem Schichtsystem nach einer der genannten Ausführungsformen lässt sich nicht nur für Brillengläser und/oder Fahrzeugscheiben verwenden, sondern kann auch als Beschichtung auf optischen Artikeln vieler Art aufgebracht werden. Denkbar wäre die Beschichtung zum Beispiel auch auf einem Displayglas als Displayschutz. Das Display kann in einem Fahrzeug angeordnet sein. Alternativ oder zusätzlich kann das Display ein Display eines herkömmlichen elektronischen Geräts sein, das ein Display aufweist. Das unter einem derart beschichteten Displayglas liegende Display erhält einen hohen Schutz vor IR-A-Strahlung (Wärmeschutz) und der Betrachter sieht seine Privatsphäre geschützt, da seitliche Betrachter aufgrund des Verspiegelungseffektes unter höheren Einfallswinkeln einen roten Reflex sehen, wohingegen der eigentliche Betrachter durch die exzellente Entspiegelung sein Display unter dem üblichen Betrachtungswinkel ($\alpha \approx 0°$) mit hohen Transmissionseigenschaften betrachten kann.

Bevorzugt weist die Reflektivität elektromagnetische Strahlung in einem Wellenlängenbereich zwischen etwa 560 nm und etwa 1000 nm, bevorzugt zwischen etwa 570 nm und etwa 920 nm und besonders bevorzugt zwischen etwa 580 nm und etwa 900 nm zumindest für einen Teilabschnitt des Wellenlängenbereichs eine Steigung der Reflektivität zwischen etwa 20 % pro 100 nm und etwa 80 % pro 100 nm, bevorzugt zwischen etwa 30 % pro 100 nm und etwa 60 % pro 100 nm und besonders bevorzugt zwischen etwa 35 % pro 100 nm und etwa 45 % pro 100 nm auf.

In anderen Worten weist die Auftragung der Reflektivität gegen die Wellenlänge eine positive Reflektivitätsänderung bzw. -steigung in der Nähe eines Maximums auf für Betrachtungswinkel zwischen etwa 0° und etwa 60°, insbesondere für Betrachtungswinkel zwischen etwa 0° und etwa 45° auf, und zwar insbesondere für einen Wellenlängenbereich zwischen etwa 580 nm und etwa 900 nm, in der die vergleichsweise hohe Reflektivitätssteigung auftritt. Die Steigung beträgt in diesem Bereich insbesondere etwa 40 % pro 100 nm. Der Wellenlängenbereich der vergleichsweise hohen Steigung kann beispielsweise abhängig vom Betrachtungswinkel variieren.

Ein Teilabschnitt kann beispielsweise einem kleineren Wellenlängenbereich der jeweils oben genannten Wellenlängenbereiche entsprechen. Für eine Reflektivität, die unter einem Betrachtungswinkel von etwa 0° ermittelt wurde, kann ein Teilabschnitt des Wellenlängenbereichs zwischen etwa 560 nm und etwa 1000 nm beispielsweise einem kleineren Wellenlängenbereich zwischen etwa 600 nm und etwa 870 nm entsprechen. In diesem kleineren Wellenlängenbereich zwischen etwa 600 nm und etwa 870 nm tritt die vergleichsweise hohe Reflektivitätssteigung, beispielsweise von etwa 40 % pro 100 nm im Wesentlichen konstant auf. Es kann auch der Fall sein, dass der Wellenlängenbereich der vergleichsweise hohen Reflektivitätssteigung einen Sattelpunkt und/oder eine Flanke, also im Wesentlichen keine konstante hohe Reflektivitätssteigung eines festen Wertes aufweist. Beispielsweise können alle Werte für die Reflektivitätssteigung in einem Wellenlängenbereich zwischen etwa 600 nm und etwa 870 nm zwischen etwa 25 % pro 100 nm und etwa 45 % pro 100 nm liegen, sodass ein leichter Anstieg, ein starker Anstieg und ein abgeflachter Anstieg in der Nähe des Maximums von dem genannten Wellenlängenbereich auftreten können.

Ein hoher Verspiegelungseffekt weist sich insbesondere durch einen besonders hohen Anstieg der Reflektivität innerhalb eines Wellenlängenbereichs aus. Dies ist einerseits der hohen Transparenz im sichtbaren Wellenlängenbereich und andererseits der hohen Reflektivität im infraroten Wellenlängenbereich geschuldet. Im Wesentlichen gilt für den Grenzbereich, dass eine besonders hohe Steigung der Reflektivität in Abhängigkeit der Wellenlänge zwischen etwa 560 nm und etwa 1000 nm ein besonders gutes Verhältnis aus Transparenz im sichtbaren Bereich zur Abschirmung durch Reflektivität im infraroten Bereich bewirkt. Idealerweise ist die Reflektivität dabei im sichtbaren Wellenlängenbereich besonders niedrig. Bevorzugt ist das Schichtsystem im sichtbaren Wellenlängenbereich zumindest teilweise nahezu 100 % transparent und im infraroten Bereich besonders intransparent und zwar zum indest für einen Winkelbereich unter dem die Oberfläche betrachtet wird. Die Steigung der Reflektivität ist dabei zumindest für einen Teilbereich mindestens etwa 30 % pro 100 nm, insbesondere mindestens etwa 40 % pro 100 nm und bevorzugt mindestens etwa 50 % pro 100 nm.

Bevorzugt weist bezüglich der Wellenlänge der Verlauf der Reflektivität, der unter einem Winkel α von 45° erfasst wird, ab etwa 580 nm einen Anstieg einer Flanke zu hohen Werten auf und der Anstieg bzw. die Reflektivitätssteigung in dem Bereich zwischen etwa 600 nm und etwa 680 nm weist einen Wert von etwa 15 % bis etwa 50 % pro 100 nm, insbesondere von etwa 20 % pro 100 nm bis etwa 40 % pro 100 nm auf.

Unter einem Betrachtungswinkel α von etwa 45° kann ein Betrachter derart einfach feststellen, ob das Schichtsystem einen IR-Schutz aufweist. Beispielsweise kann ein Brillenglasträger vor der Verwendung eines Brillenglases einfach feststellen, ob es sich bei seiner Auswahl der Brille um eine Brille mit IR-Schutz handelt. Neben diesem praktischen Effekt ist auch die ästhetische Erscheinung einer Brille mit derart verspiegelten Gläsern vorteilhaft.

Gemäß der Erfindung ist die Reflektivität ab einer Wellenlänge von etwa 630 nm, insbesondere bei etwa 680 nm für einen Betrachtungswinkel α von etwa 45°

- zwischen etwa 10 % und etwa 20 % höher, insbesondere etwa 15 % höher als bei einem Betrachtungswinkeln α von etwa 30°;
- zwischen etwa 20 % und etwa 30 % höher, insbesondere etwa 25 % höher als bei einem Betrachtungswinkeln α von etwa 15°; und
- zwischen etwa 23 % und etwa 33 % höher, insbesondere etwa 27 % höher als bei einem Betrachtungswinkeln α von etwa 0°.

Bevorzugt weist die Reflektivität bei einem Betrachtungswinkel α von etwa 45° und einer Wellenlänge von

- etwa 630 nm einen Wert zwischen etwa 10 % und etwa 20 %, insbesondere zwischen etwa 13 % und etwa 17 % auf;
- etwa 680 nm einen Wert zwischen etwa 30 % und etwa 40 %, insbesondere zwischen etwa 33 % und etwa 39 % auf; und
- etwa 730 nm einen Wert zwischen etwa 43 % und etwa 53 %, insbesondere zwischen etwa 45 % und etwa 50 % auf.

Unter einem Betrachtungswinkel α von etwa 45° kann ein Betrachter entsprechend der vorherigen bevorzugten Merkmale einfach feststellen, ob das Schichtsystem einen IR-Schutz aufweist. Insbesondere kann ein Brillenglasträger vor der Verwendung eines Brillenglases insbesondere durch Betrachtung unter etwa 45° feststellen, ob es sich bei seiner Auswahl der Brille um eine Brille mit IR-Schutz handelt.

Ein Aspekt betrifft ein Brillenglas, wobei ein Schichtsystem mit Infrarot-Verspiegelung nach dem voranstehenden Aspekt so auf der Objektseite des Brillenglases angeordnet ist, dass das Brillenglas die Substratbasis des Schichtsystems ausbildet.

Das Brillenglas weist die Objektseite auf, welche üblicherweise konvex ausgebildet, dem betrachteten Objekt zugewandt und somit dem Auge des Brillenträgers abgewandt ist. Die Gegenseite des Brillenglases bildet die Augenseite des Brillenglases, welche üblicherweise konkav ausgebildet, dem Auge des Brillenträgers zugewandt und dem betrachteten Objekt abgewandt ist.

Da das Schichtsystem gemäß dem voranstehend beschriebenen Aspekt auf der Objektseite des Brillenglases angeordnet ist, betreffen sämtliche Ausführungen zum Schichtsystem auch das Brillenglas und umgekehrt.

Gemäß einer Ausführungsform weist das Brillenglas an seiner Augenseite eine Reflektivität für elektromagnetische Strahlung von $R \leq 5\%$, bevorzugt $R \leq 3\%$ und insbesondere $R \leq 1\%$, für einen Wellenlängenbereich von etwa 400 nm bis etwa 1100 nm auf.

Bevorzugt ist die Reflektivität hierbei für den gesamten Wellenlängenbereich von etwa 400 nm bis etwa 1100 nm durchgehend kleiner als etwa 5% bzw. 3% bzw. 1%. Alternativ kann wenigstens die mittlere Reflektivität über diesen Wellenlängenbereich kleiner als etwa 5% bzw. 3% bzw. 1% sein.

Diese Reflektivität kann z.B. von dem Substrat des Brillenglases an der Augenseite bewirkt sein.

Diese Reflektivität kann z.B. von einem Schichtsystem bewirkt sein, welches auf der Augenseite des Brillenglases ausgebildet ist.

Die niedrige Reflektivität auf der Augenseite bewirkt, dass von hinten auf das Brillenglas einfallendes Licht kaum oder praktisch gar nicht in das Auge reflektiert wird. Damit werden störende Lichtreflexe reduziert und/oder der Tragekomfort beim Benutzen des Brillenglases erhöht. Weiter vorteilhafterweise wird das Auge vor schädlicher UV- und/oder IR-Strahlung geschützt, welche möglicherweise von der Augenseite des Brillenglases in das Auge reflektiert werden könnte.

Ein Verfahren zur Herstellung eines Schichtsystems mit Infrarot-Verspiegelung gemäß der Erfindung wird im Anspruch 15 festgelegt.

Das Schichtsystem zeigt eine besonders hohe oder gar optimierte Entspiegelung im sichtbaren Bereich. Das Schichtsystem kann mittels gängiger Beschichtungsanlagen auf eine Substratbasis aufgebracht werden. Das Resultat der Entspiegelung über nahezu den gesamten sichtbaren Spektralbereich, sowie die Verspiegelung im IR-A Bereich und teilweise im sichtbaren Grenzbereich, insbesondere für Rot-Töne, ist direkt sichtbar. Der Effekt ist dadurch überprüfbar, dass ein Betrachter bei gerader Draufsicht und/oder bei Betrachtung unter einem Winkel von der dem einfallenden Licht zugewandten Seite des Schichtsystems einen Reflex im Rot-Ton wahrnimmt. Die Reflexe der unsichtbaren spektralen Anteile im IR-A und im UV-Bereich werden jedoch im Wesentlichen nicht wahrgenommen. Ein entsprechender Detektor kann unter einem oder mehreren Betrachtungswinkeln solche spektralen Anteile nachweisen. Ferner benötigt das Schichtsystem nicht zwingend sehr hochbrechende oder gar höchstbrechende Materialien. Als niederbrechend wird insbesondere ein Brechungsindex von n kleiner etwa 1,55 verstanden, beispielsweise bei einem Wert von etwa 1,38. Als mittelbrechend wird beispielsweise ein Brechungsindex n zwischen etwa 1,55 und etwa 1,8, insbesondere zwischen etwa zwischen etwa 1,55 und etwa 1,7 angenommen. Als hochbrechend wird insbesondere ein Brechungsindex von n zwischen etwa 1,8 und etwa 2,1 verstanden. Als sehr hochbrechend bzw. höchstbrechend wird insbesondere ein Brechungsindex von n größer gleich 2,4, insbesondere größer gleich 2,5 verstanden. Sehr hochbrechende Materialien weisen oft Titan auf.

Das Verfahren zur Herstellung des Schichtsystems, also die Beschichtung der Substratbasis mit dem Schichtsystem kann mittels konventioneller Beschichtungsverfahren, insbesondere mittels physikalischer Gasphasenabscheidung (Physical Vapour Deposition, PVD) und/oder mittels chemischer Gasphasenabscheidung (Chemical Vapour Deposition, CVD) erfolgen und ist nicht zwingend auf Verfahren durch Plasma/Ionen-Beschichtung angewiesen. Allerdings kann auch das Beschichtungsverfahren mittels Plasma/Ionen-Beschichtung verwendet werden.

Es ist auch nicht ausgeschlossen, dass Schichten bzw. Schichtlagen mittels alternativer Beschichtungsverfahren aufgebracht werden. Neben PVD und/oder CVD, können alternativ oder zusätzlich auch Stoffschichten mittels Sputter-Verfahren, Galvanotechniken, Spin Coating oder chemische Beschichtungen entsprechend der Langmuir-Absorption abgeschieden werden. Beispielsweise kann zusätzlich eine Schutzschicht, z.B. ein Lack mittels Spin Coating auf dem Schichtsystem abgeschieden bzw. aufgebracht werden.

Vorzugsweise umfasst das Verfahren, die Mehrzahl niederbrechender Schichtlagen und die Mehrzahl hochbrechender Schichtlagen gemäß der oben genannten bevorzugten Reihenfolge und bevorzugten Schichtdicken anzuordnen.

Die vorteilhaften Eigenschaften des Schichtsystems werden insbesondere durch die Schichtanordnung erreicht, ohne dass es prozesstechnischer Maßnahmen bedarf. Insbesondere ist die Reflektivität kein Parameter bzw. Prozessparameter, der eine Kontrolle, insbesondere während der Herstellung des Schichtsystems voraussetzt. In anderen Worten können die optischen Eigenschaften, insbesondere die Reflektivität des Schichtsystems als intrinsische bzw. inhärente Materialeigenschaft des Schichtsystems erachtet werden. Die Reflektivität geht somit nicht als Maßgabe in ein Herstellungsverfahren des Schichtsystems, d.h. in ein Beschichtungsverfahren ein. Die Beschichtung wird nicht mit der Maßgabe durchgeführt, die oben genannten Reflektivitäten zu erreichen, sondern mit der Maßgabe, die Mehrzahl niederbrechender Schichtlagen und die Mehrzahl hochbrechender Schichtlagen gemäß der oben genannten bevorzugten Reihenfolge und bevorzugten Schichtdicken anzuordnen.

Das Schichtsystem ist insbesondere ein interferometrisches Viellagen-Schichtsystem, bei dem die spektrale Reflektivität zwischen sichtbarem und IR-A-Bereich gezielt gesteuert wird. Das Schichtsystem erlaubt im sichtbaren Bereich eine hohe Entspiegelung während es insbesondere im IR-A-Bereich eine hohe Verspiegelung erreicht.

Der sichtbare Bereich wird beschrieben durch die Parameter Rv, Rv', L*, C*, h* und durch RM_(380-780nm) im sichtbaren Bereich und RM_(780-1150nm) im IR-A-Bereich sowie durch geeignete Verrechnung der Reflexionswerte im IR-A Bereich mit der thermischen Gewichtungsfunktion, die nach ICNIRP-Guidelines 2013 beschrieben ist.

Die Parameter L*, C*, h* beziehen sich jeweils insbesondere auf die Leuchtkraft, die Sättigung und auf den Farbwert im Farbkreis in Polarkoordinaten (DIN 11664-1/2). Rv und Rv' beziehen sich insbesondere auf den visuellen Lichtreflexionsgrad (DIN 13666), wobei Rv das Tagsehen und Rv' das Dämmerungssehen betrifft. RM bezieht sich auf den gemittelten Reflexionswert. Insbesondere bezieht sich RM_(380-780nm) auf die Reflexionsfähigkeit im sichtbaren Bereich, konkret für den Bereich zwischen 380 nm und 780 nm, und RM_(780-1150nm) bezieht sich auf die Reflexionsfähigkeit im infraroten Bereich zwischen 780 nm und 1150 nm. Der Reflexionswert wird insbesondere dadurch gemittelt, dass alle Reflexionswerte über alle Wellenlängen in dem entsprechenden Wellenlängenbereich gemittelt werden. Die Berechnung der gemittelten Reflexion erfolgt nach DIN EN ISO 13666:2019, wobei die Integrationsgrenzen entsprechend angepasst werden.

Das Schichtsystem kann insbesondere charakteristische Merkmale bezüglich der Lage, der Höhe und der Breite des IR-Maximums zeigen. Das Schichtsystem erlaubt insbesondere, dass nach Gewichtung nach ICNIRP-Guidelines von 2013 ein möglichst hoher Anteil der schädigenden IR-A-Strahlung reflektiert wird und in seiner spektralen Halbwertsbreite verbessert oder gar optimiert werden kann. Es ist jedoch nicht von hoher Bedeutung, das IR-Maximum der spektralen Reflektivität auf Wellenlängenbereiche über 1200 nm auszuweiten. In anderen Worten ist das Reflexionsverhalten des Schichtsystems für Wellenlängen größer 1200 nm von geringerem oder gar keinem Interesse. Zusätzlich zum erwähnten IR-Schutz weist die Beschichtung bevorzugt einen hohen UV-Schutz auf. Dieser UV-Schutz kann zusätzlich das Glasmaterial, die aufgebrachten Beschichtungen wie auch im Glas enthaltene Farbstoffe schützen.

Eine vorteilhafte Wirkung liegt in anderen Worten in der Kombination einer günstigen Entspiegelung im sichtbaren Bereich mit dem beschriebenen IR-Schutz, da ein Benutzer einerseits das Licht in einem breiten sichtbaren spektralen Bereich wahrnehmen kann und gleichzeitig vor schädlicher IR-A Strahlung und bevorzugt auch im Wesentlichen vor schädlicher UV-Strahlung geschützt werden kann. In anderen Worten erlaubt das Schichtsystem die Transmission eines Großteils des sichtbaren Lichtes wohingegen ein Großteil des schädlichen unsichtbaren Lichts, und zwar ein hoher Anteil des IR-A Lichts und bevorzugt auch ein hoher Anteil des UV-Lichts reflektiert und nicht durch das Schichtsystem transmittiert wird.

Der Effekt der Verspiegelung im IR Bereich und der Entspiegelung im sichtbaren Bereich wird bei Betrachtung unter einem Mindestwinkel "sichtbar" für einen Betrachter von außen, also beispielsweise bei einer Brille in einer Stellung außerhalb der üblichen Benutzungsstellung der Brille: Bei gerader Draufsicht, das heißt bei einem Betrachtungswinkel $\alpha \leq 30°$ nimmt ein Betrachter von außen bzw. von vorne eine hohe Entspiegelungswirkung wahr, und zwar anhand eines lediglich verschwindend geringen Restreflexes eines Grün-Tons, das heißt für Wellenlängenbereiche, in der elektromagnetische Strahlung einem Betrachter grün erscheint. Bei Betrachtung unter einem Winkel $\alpha > 30°$ nimmt ein Betrachter die Schutzeigenschaft vor IR-A-Strahlung wahr, und zwar durch die teilweise sichtbare Verspiegelung für Rot-Töne.

Die hohe Entspiegelungswirkung bleibt bis zu einem bestimmten Betrachtungswinkel erhalten. Ab diesem bestimmten Betrachtungswinkel wird aus der Entspiegelung eine sichtbare rote Verspiegelung, welche dem Betrachter den IR-Schutz verdeutlicht. Ein bestimmter Betrachtungswinkel bei etwa 30° entspricht im Wesentlichen einem Winkel, ab dem die Reflexionswirkung des Schichtsystems für einen Betrachter besonders gut sichtbar wird. Ab diesem Winkel erlaubt das Schichtsystem einem Betrachter von außen keinen "Einblick" mehr hinter das Schichtsystem, da die Verspiegelung bzw. Reflektivität im sichtbaren Bereich einen hohen Wert erreicht. Dieser Winkel lässt sich moderat durch Veränderung der Schichtdicken variieren, wobei die beschriebenen Eigenschaften beibehalten werden. Hierüber lässt sich im Rahmen der Schichtentwicklung die typische Gebrauchsstellung der Gläser in der Fassung berücksichtigen, um störende Blendeffekte für den Brillenträger durch ein zu frühes Einsetzen der roten Verspiegelung zu verhindern.

Im Folgenden werden einige Ausführungsbeispiele näher beschrieben, wobei die Erfindung nicht auf die beschriebenen Ausführungsbeispiele beschränkt sein soll. Weitere Vorteile können mit spezifischen Merkmalen nach Beispielen und/oder nach Ausführungsformen verbunden sein. Einzelne Merkmale, die in einer bestimmten Ausführungsform beschrieben werden, können beliebig kombiniert werden, insbesondere auch mit eingehenden Merkmalen einer anderen Ausführungsform, vorausgesetzt, sie schließen einander nicht aus. Darüber hinaus sind verschiedene Merkmale, die in den beispielhaften Ausführungsformen zusammen bereitgestellt werden, nicht als die Erfindung einschränkend anzusehen.

Kurze Beschreibung der Zeichnungen:

Fig. 1 zeigt eine schematische Seitenansicht eines Schichtsystems gemäß einer Ausführungsform in vereinfachter Darstellung;

Fig. 2 zeigt eine schematische Seitenansicht eines Schichtsystems gemäß einer Ausführungsform in vereinfachter Darstellung;

Fig. 3 zeigt eine schematische Seitenansicht eines Schichtsystems gemäß einer Ausführungsform in vereinfachter Darstellung;

Fig. 4 zeigt eine tabellarische Darstellung eines Schichtsystems gemäß einer Ausführungsform;

Fig. 5 zeigt eine spektrale Auftragung der Reflektivität eines gemäß Fig. 4 spezifizierten Schichtsystems bei einem Betrachtungswinkel von etwa 0°;

Fig. 6 zeigt eine Detailansicht eines Bereichs der spektralen Auftragung der Reflektivität aus Fig. 5;

Fig. 7 zeigt die spektrale Auftragung der Reflektivität des in Fig. 4 dargestellten Schichtsystems für vier verschiedene Betrachtungswinkel;

Fig. 8 a) zeigt schematisch eine beispielhafte Anordnung der zu untersuchenden Fläche hinsichtlich des einfallenden und des reflektierten Lichts;

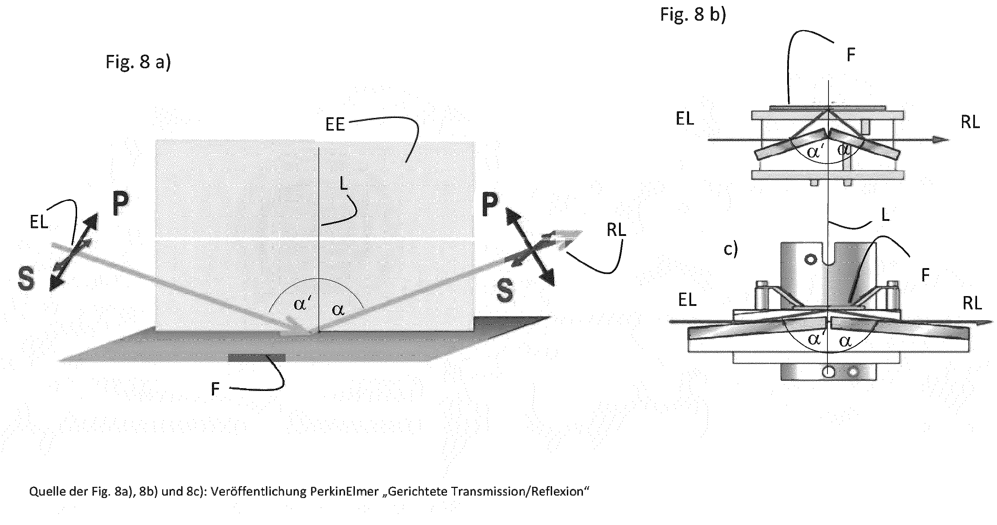

Fig. 8 b) zeigt schematisch eine beispielhafte Messanordnung bei einem Einfallswinkel von etwa 45°;

Fig. 8 c) zeigt schematisch eine beispielhafte Messanordnung bei einem Einfallswinkel von etwa 80°;

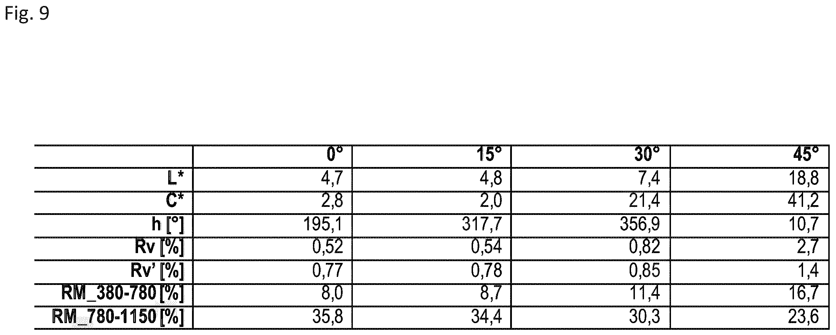

Fig. 9 zeigt eine tabellarische beispielhafte Darstellung von spektralen Parametern für vier verschiedene Betrachtungswinkel;

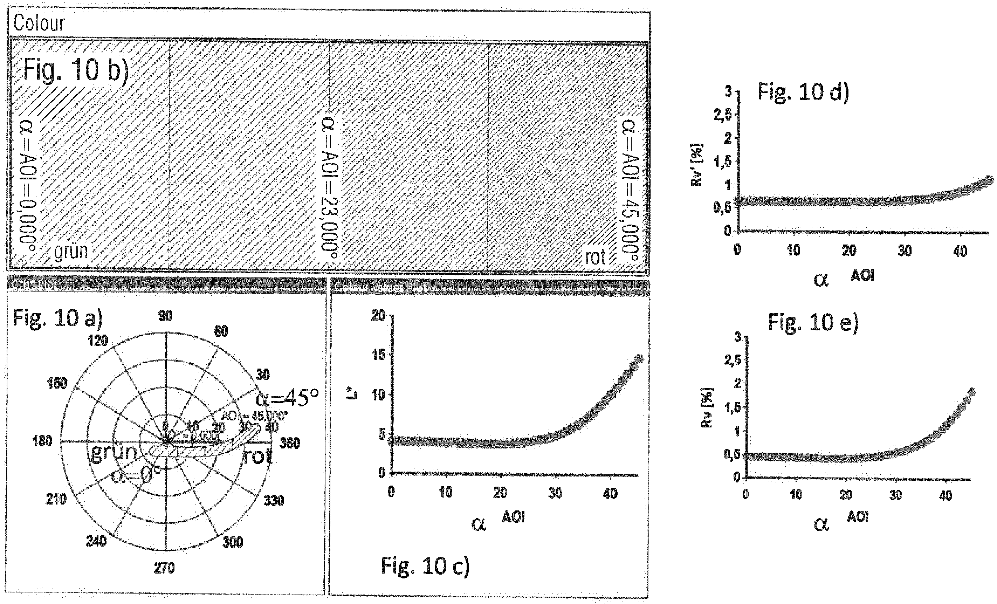

Fig. 10 a) zeigt einen beispielhaften Verlauf der Restreflexfarbe bei Variation des Betrachtungswinkels $\alpha$ von etwa 0° bis etwa 45° wobei der Farbwert im Farbkreis in Polarkoordinaten aufgetragen ist;

Fig. 10 b) zeigt einen beispielhaften Verlauf der Restreflexfarbe bei Variation des Betrachtungswinkels $\alpha$ von etwa 0° bis etwa 45°, wobei der Farbwert als farbliche Auftragung gegen den Betrachtungswinkel $\alpha$ gewählt ist;

Fig. 10 c) zeigt eine beispielhafte Auftragung der Leuchtkraft L* gegen den Betrachtungswinkel $\alpha$;

Fig. 10 d) zeigt eine beispielhafte Auftragung des visuellen Lichtreflexionsgrads Rv' für das Dämmerungssehen gegen den Betrachtungswinkel $\alpha$; und

Fig. 10 e) zeigt eine beispielhafte Auftragung des visuellen Lichtreflexionsgrads Rv für das Tagsehen gegen den Betrachtungswinkel $\alpha$.

Eine detaillierte Beschreibung beispielhafter Ausführungsformen in Verbindung mit den Zeichnungen ist im Folgenden gegeben:

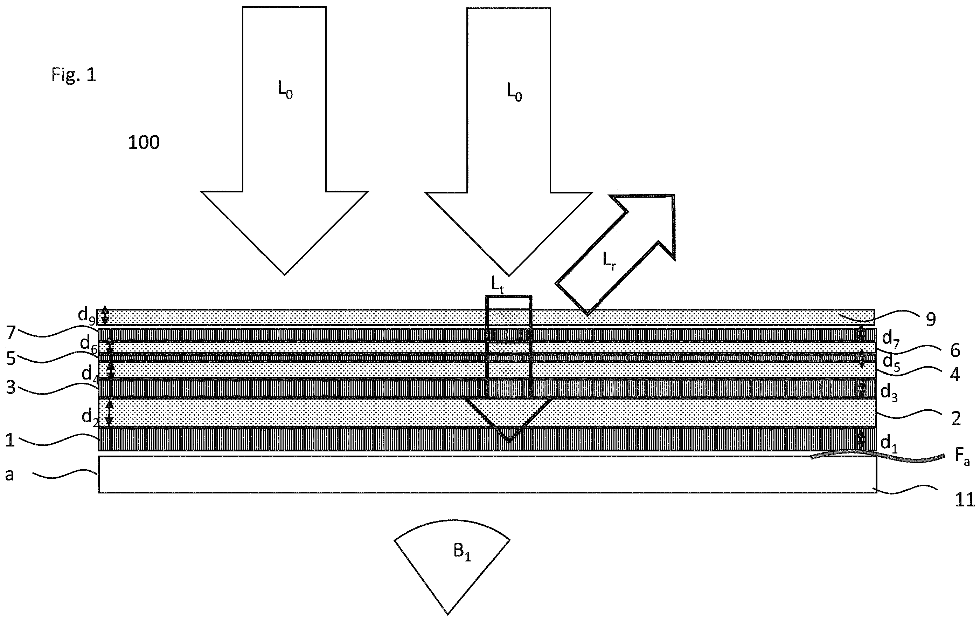

Fig. 1 zeigt eine schematische Seitenansicht eines Schichtsystems 100 gemäß einer Ausführungsform in stark vereinfachter Darstellung. Das Schichtsystems 100 umfasst eine Mehrzahl von Schichtlagen 1-7, 9 und eine Substratbasis 11 mit einer Substratlage a. Die Substratbasis 11 umfasst in Fig. 1 lediglich eine Substratlage a, auf der schichtweise hochbrechende Schichtlagen 1, 3, 5, 7 und niederbrechende Schichtlagen 2, 4, 6, 9 abwechselnd angeordnet sind.

Die erste Schichtlage 1 ausgehend von der Substratbasis 11 ist eine erste hochbrechende Schichtlage 1, welche auf der Substratfläche $F_a$ der Substratlage a angeordnet ist, und eine Schichtlagendicke $d_1$ aufweist. Die Schichtlagendicke $d_1$ weist bevorzugt einen Wert zwischen etwa 90 nm und etwa 150 nm, insbesondere zwischen etwa 110 nm und etwa 130 nm und bevorzugt zwischen etwa 115 nm und etwa 125 nm auf.

Die zweite Schichtlage 2 ausgehend von der Substratbasis 11, welche auf der ersten Schichtlage 1 angeordnet ist, ist eine erste niederbrechende Schichtlage 2, welche eine Schichtlagendicke $d_2$ aufweist. Die Schichtlagendicke $d_2$ weist bevorzugt einen Wert zwischen etwa 120 nm und etwa 180 nm, insbesondere zwischen etwa 140 nm und etwa 160 nm und bevorzugt zwischen etwa 145 nm und etwa 155 nm auf.

Die dritte Schichtlage 3 ausgehend von der Substratbasis 11, welche auf der zweiten Schichtlage 2 angeordnet ist, ist eine zweite hochbrechende Schichtlage, welche eine Schichtlagendicke $d_3$ aufweist. Die Schichtlagendicke $d_3$ weist bevorzugt einen Wert zwischen etwa 70 nm und etwa 130 nm, insbesondere zwischen etwa 90 nm und etwa 115 nm und bevorzugt zwischen etwa 100 nm und etwa 110 nm auf.

Die vierte Schichtlage 4 ausgehend von der Substratbasis 11, welche auf der dritten Schichtlage 3 angeordnet ist, ist eine zweite niederbrechende Schichtlage, welche eine Schichtlagendicke $d_4$ aufweist. Die Schichtlagendicke $d_4$ weist bevorzugt einen Wert zwischen etwa 65 nm und etwa 125 nm, insbesondere zwischen etwa 80 nm und etwa 110 nm und bevorzugt zwischen etwa 90 nm und etwa 100 nm auf.

Die fünfte Schichtlage 5 ausgehend von der Substratbasis 11, welche auf der vierten Schichtlage 4 angeordnet ist, ist eine dritte hochbrechende Schichtlage, welche eine Schichtlagendicke $d_5$ aufweist. Die Schichtlagendicke $d_5$ weist bevorzugt einen Wert zwischen etwa 2 nm und etwa 20 nm, insbesondere zwischen etwa 5 nm und etwa 15 nm und bevorzugt zwischen etwa 11 nm und etwa 13 nm auf.

Die sechste Schichtlage 6 ausgehend von der Substratbasis 11, welche auf der fünften Schichtlage 5 angeordnet ist, ist eine dritte niederbrechende Schichtlage, welche eine Schichtlagendicke $d_6$ aufweist. Die Schichtlagendicke $d_6$ weist bevorzugt einen Wert zwischen etwa 20 nm und etwa 60 nm, insbesondere zwischen etwa 35 nm und etwa 50 nm und bevorzugt zwischen etwa 40 nm und etwa 44 nm auf.

Die siebte Schichtlage 7 ausgehend von der Substratbasis 11, welche auf der sechsten Schichtlage 6 angeordnet ist, ist eine vierte hochbrechende Schichtlage, welche eine Schichtlagendicke $d_7$ aufweist. Die Schichtlagendicke $d_7$ weist bevorzugt einen Wert zwischen etwa 40 nm und etwa 80 nm, insbesondere zwischen etwa 50 nm und etwa 70 nm und bevorzugt zwischen etwa 55 nm und etwa 65 nm auf.

Zwischen der ersten Schichtlage 1 und der Substratlage a können auch andere Schichten angeordnet sein. Beispielsweise kann eine Adhäsionsschichtlage auf der Substratlage a angeordnet sein. Es kann auch eine im Wesentlichen niederbrechende Schichtlage zwischen der Substratlage a und der ersten Schichtlage 1 angeordnet werden.

Auf der siebten Schichtlage 7 wird eine weitere, vierte niederbrechende Schichtlage 9 insbesondere eine Quartz-Schichtlage angeordnet. Zwischen der siebten Schichtlage 7 und niederbrechenden Schichtlage 9 kann insbesondere eine funktionale Schichtlage mit einer bestimmten Funktionalität angeordnet sein (hier nicht gezeigt). Die letzte niederbrechende Schichtlage 9 dient in Zusammenspiel mit den anderen Schichtlagen insbesondere der Entspiegelung im sichtbaren Bereich.

Im vorliegenden Fall sind die Schichtlagen 1-7, 9 sowie die Substratlage a der Substratbasis 11 als planare Lagen dargestellt. Eine solche Ausführungsform kann als stark vereinfachte Darstellungsform für im Wesentlichen nicht-planare Substrate, wie z.B. Freiformflächen eines Brillenglases, vorteilig sein. Diese Ausführungsform kann auch auf planare Substrate, wie im Wesentlichen flache planare Fenstergläser zutreffen. Idealerweise sind alle Schichtlagen 1-7, 9 über die gesamte Fläche im Wesentlichen homogen in den jeweiligen Schichtlagendicke. Es kann jedoch auch zu Abweichungen kommen. In dem Fall kann die Schichtlagendicke einer über die Fläche gemittelten Schichtlagendicke oder einer maximalen Schichtlagendicke oder einer Schichtlagendicke an einem bestimmten Abschnitt der Fläche entsprechen.

Die letzte Schichtlage 9 ist, wie zuvor schon erwähnt, insbesondere eine niederbrechende Schichtlage, bevorzugt eine $SiO_2$-Lage, die dazu geeignet ist, das Schichtsystem zu entspiegeln, insbesondere für sichtbare elektromagnetische Strahlung. Die Schichtlage 9 ist wegen der guten Entspiegelungseigenschaften besonders bevorzugt in Schichtsystemen.

Im allgemeinen Fall befindet sich ein Benutzer $B_1$ in typischer Benutzungsstellung auf der dem einfallenden Licht $L_0$ abgewandten Seite, also hinter dem Schichtsystem 100 bzw. auf der den Schichtlagen 1-7, 9 abgewandten Seite. In anderen Worten ist die typische Benutzungsstellung dadurch charakterisiert, dass ein Benutzer $B_1$ bzw. dessen Augen auf der Seite des Schichtsystems 100 ist bzw. sind, die der einfallenden elektromagnetischen Strahlung $L_0$ und den Schichten 1-7, 9 abgewandt ist. Somit kann ein Benutzer $B_1$ vor schädlicher elektromagnetischer Strahlung geschützt werden, indem die Strahlung durch das Schichtsystem 100 durch Reflexion abgeschirmt wird. Dies trifft ausnahmsweise jedoch nicht für einen üblichen Benutzer eines mit dem Schichtsystem geschützten Displays zu, da sich der Benutzer eines Displays üblicherweise auf der Seite des einfallenden Lichts befindet.

Gleichzeitig erlaubt das Schichtsystem 100 zumindest einem Anteil, vorzugsweise einem hohen spektralen Anteil sichtbaren Lichts $L_t$ das Schichtsystem 100 zu passieren bzw. durchlaufen bzw. durch das Schichtsystem 100 zu propagieren, sodass dem Benutzer $B_1$ eine möglichst gute Sicht durch das Schichtsystem 100 erlaubt bzw. gewährleistet wird.

Die Reflektivität R entspricht im Wesentlichen dem Verhältnis zwischen Intensität $I_r$ der reflektierten elektromagnetischen Strahlung $L_r$ und Intensität $I_0$ der einfallenden elektromagnetischen Strahlung $L_0$. Die Intensitäten $I_r$ und $I_0$ können dabei in Abhängigkeit der Wellenlänge, insbesondere zwischen etwa 200 nm und 1400 nm unter verschiedenen Winkeln bzw. Betrachtungswinkeln mittels einem oder mittels mehrerer lichtempfindlicher Detektoren erfasst werden.

Der Begriff "einfallendes Licht $L_0$" bezeichnet elektromagnetische Wellen, die unter einem Winkel $\alpha'$ von etwa -90° bis etwa 90°, insbesondere unter etwa 0° mit dem Lot bzw. der Substratnormalen auf die Oberfläche des Schichtsystems treten bzw. fallen bzw. auftreffen. Das einfallende Licht $L_0$ tritt somit im Wesentlichen von der den Schichtlagen zugewandten Seite auf die oberste Schicht der Schichtlagen, beispielsweise auf die neunte Schichtlage 9.

Der Begriff "reflektiertes Licht $L_r$" bezeichnet bezüglich des Spektrums und der Intensität den Anteil des einfallenden Lichts $L_0$, welcher an den Schichtlagen, beispielsweise an der obersten und/oder an einer der anderen Schichtlagen unterhalb der obersten Schichtlage reflektiert wird.

Der Begriff "transmittiertes Licht $L_t$" bezeichnet bezüglich des Spektrums und der Intensität den Anteil des einfallenden Lichts $L_0$, welcher das Schichtsystem und die Substratlage passiert bzw. durchläuft. Demzufolge ist das transmittierte Licht $L_t$ der Anteil des einfallenden Lichts $L_0$, der auf die Rückseite, also die dem Schichtsystem abgewandten Seite des Schichtsystems gelangen kann.

Die Reflektivität R ist insbesondere ein Maß für die Verspiegelung einer Fläche und/oder einer Oberfläche. Die Reflektivität kann im Allgemeinen auch als Reflexionsgrad, als Reflektanz und/oder als Reflexionsvermögen bezeichnet werden. Diese Größe entspricht im Wesentlichen dem Verhältnis zwischen reflektierter Intensität bzw. Leistung und einfallender Intensität bzw. Leistung. Die Reflektivität kann folgendermaßen ausgedrückt werden:

$$R = \frac{I_r}{I_0} = \frac{P_r}{P_0}$$

wobei $I_r$ der Intensität von reflektiertem Licht $L_r$ und $I_0$ der

Intensität von einfallendem Licht $L_0$ entspricht und wobei $P_r$ der Leistung von reflektiertem Licht und $P_0$ der Leistung von einfallendem Licht entspricht.

Der spektrale infrarote (IR) Bereich von Licht entspricht im Wesentlichen elektromagnetischer Strahlung im Wellenlängenbereich von etwa 780 nm bis etwa 1 mm. Mit dem Begriff "infraroter Bereich" ist in dieser Schrift insbesondere der nahinfrarote (NIR) Bereich zwischen etwa 780 nm und etwa 3 $\mu$m und noch spezifischer der IR-A Bereich zwischen etwa 780 nm und etwa 1,4 $\mu$m gemeint. Die elektromagnetische Strahlung im IR Bereich kann auch als nicht sichtbares bzw. unsichtbares Licht verstanden werden.

Der spektrale sichtbare bzw. visuelle (Vis-) Bereich von Licht entspricht elektromagnetischer Strahlung im Wellenlängenbereich von etwa 380 nm bis etwa 780 nm, insbesondere von etwa 400 nm bis etwa 750 nm. Mit dem Begriff "sichtbarer Bereich" ist in dieser Schrift insbesondere der Bereich der elektromagnetischen Strahlung gemeint, der für den Menschen in der Regel und im Wesentlichen als sichtbar wahrnehmbar erscheint. Die elektromagnetische Strahlung im sichtbaren Bereich kann auch als sichtbares Licht verstanden werden.

Der spektrale ultraviolette (UV) Bereich von Licht entspricht elektromagnetischer Strahlung im Wellenlängenbereich von etwa 100 nm bis etwa 380 nm. Mit dem Begriff "UV Bereich" ist in dieser Schrift insbesondere der UV-A und UV-B Bereich gemeint, wobei der UV-A Bereich zwischen etwa 315 nm und etwa 380 nm und der UV-B Bereich zwischen etwa 280 nm und etwa 315 nm liegt. Es kann aber auch der UV-C Bereich inkludiert sein, wobei dieser zwischen etwa 100 nm und etwa 280 nm liegt. Die elektromagnetische Strahlung im UV Bereich kann auch als nicht sichtbares bzw. unsichtbares Licht verstanden werden.

Generell ist mit dem Begriff "Bereich" insbesondere der Wellenlängenbereich elektromagnetischer Strahlung gemeint.

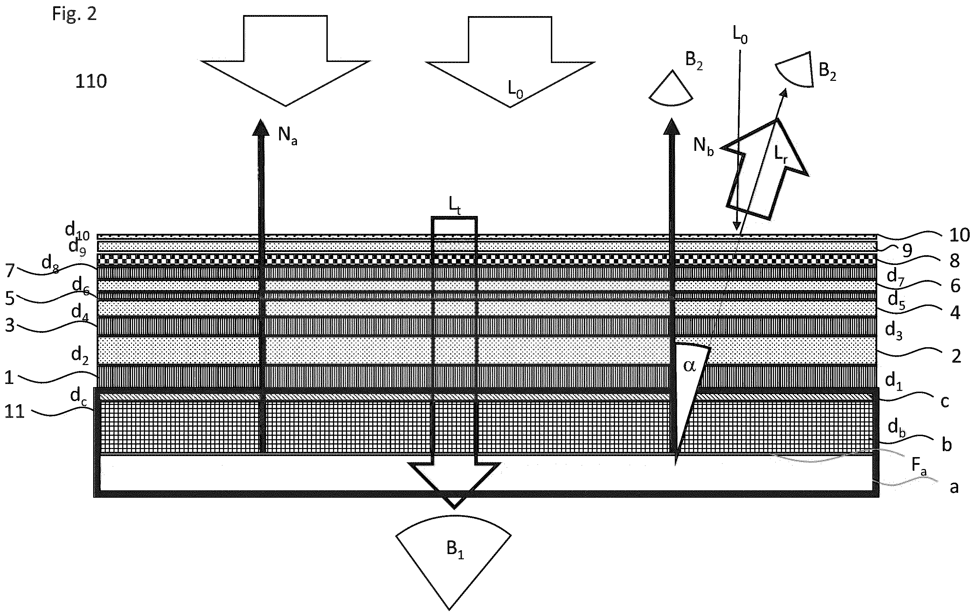

**Fig. 2** ist eine schematische Seitenansicht eines Schichtsystems 110 gemäß einer Ausführungsform umfassend eine Substratbasis 11 mit einer Substratlage a und zusätzliche Schichtlagen b, c. Ferner umfasst das Schichtsystem 110 einer Mehrzahl von Schichtlagen 1-10, die auf der Substratlage angeordnet sind. Im Wesentlichen umfasst das in **Fig. 2** dargestellte Schichtsystem 110 die einzelnen Elemente, insbesondere die Schichtlagen 1-7, 9, die in dem Schichtsystem 100 der **Fig. 1** beispielhaft und schematisch dargestellt sind sowie weitere Schichtlagen b, c, 8 und 10. Auch die in der **Fig. 2** gezeigten Schichtlagen 1-10, b, c und die Substratlage a sind im Wesentlichen als planare Lagen ausgebildet.

Vorliegend umfasst die Substratbasis 11 neben der Substratlage a im Wesentlichen noch zwei weitere Schichtlagen b, c mit jeweiligen Schichtlagendicken $d_b$ und $d_c$, und zwar zum Beispiel eine Hartbeschichtung, die vorzugsweise direkt auf der Substratfläche $F_a$ der Substratlage a aufgebracht ist und beispielsweise eine Adhässchichtionslage, die vorzugsweise direkt auf die Hartbeschichtung aufgebracht ist. Die Schichtlage b ist insbesondere eine Schutzschichtlage, die auch Hartbeschichtung oder hard coat-Schichtlage und kann beispielsweise einen Hartlack umfassen, der insbesondere dazu geeignet ist, einen Kratzschutz aufzuweisen. Alternativ oder zusätzlich kann das Schichtsystem einen Primerlack aufweisen, der dazu ausgelegt ist, eine hohe Schlagfestigkeit und damit eine hohe Stabilität zu gewährleisten. Dies ist insbesondere von Vorteil für Brillengläser oder Windschutzscheiben.

Die erste Schichtlage 1, die auch hier der ersten hochbrechenden Schichtlage entspricht, ist auf der Adhäsionsschichtlage c aufgebracht. Die Adhäsionsschichtlage c hat den Effekt, dass sie eine zuverlässige Adhäsion bzw. Haftkraft zwischen der Hartbeschichtung. bzw. Hartschichtlage b und der ersten Schichtlage 1 herstellt, sodass die erste Schichtlage 1 mit all den anderen Schichtlagen 2-10 dauerhaft an der Substratbasis 11, bzw. der letzten Schicht c der Substratbasis und zwar der Adhäsionsschichtlage haftet. Die Haftkraft ist insbesondere auf einer chemische Bindung zwischen der Adhäsionsschichtlage c und der ersten Schichtlage 1 basierend. In dem Fall, dass ein Material auf eine Substratfläche, insbesondere auf einer relativ glatten Substratfläche aufgebracht wird, kann es vorkommen, dass dieses Material nicht ausreichend auf der Substratfläche anhaftet und sich von dieser unter minimalen Einflüssen löst. Aus diesem Grund ist eine Adhäsionsschichtlage c vorteilhaft oder benötigt, um zu verhindern, dass sich die Schichtlagen1-10 oder Teile des Schichtsystems 110 von der Substratbasis 11 lösen.

In anderen Worten kann die Adhäsionsschichtlage c zur besseren Haftung direkt auf der Substratfläche $F_a$ oder auf der aufgebrachten Hartschicht b dienen. Diese Adhäsionsschichtlage c kann beispielsweise unterstöchiometrische niederbrechende Metalloxide, Chrom, Silanen sowie auch aus Siloxane umfassen.

Das Schichtsystem 110 umfasst die drei obersten Schichtlagen 8-10 mit jeweils drei Schichtlagendicken $d_8$, $d_9$ und $d_{10}$.

Die achte Schichtlage 8, die auf der siebten Schichtlage 7 angeordnet ist, ist vorzugsweise eine funktionale, d.h. eine im Wesentlichen optisch nicht aktive Schichtlage, beispielsweise umfassend $Al_2O_3$. Die neunte Schichtlage 9, die auf der achten Schichtlage 8 angeordnet ist, ist eine vierte niederbrechende Schichtlage. Die zehnte Schichtlage 10, die auf der neunten Schichtlage 9 angeordnet ist, kann vorzugsweise eine Pflegeschichtlage (clean effect-Schichtlage) sein.

Ein Betrachter $B_2$ des Schichtsystems 110, der dieses von der Seite des einfallenden Lichts $L_0$ betrachtet, kann unter bestimmten Winkeln $\alpha$ im Wesentlichen Reflexe des reflektierten Lichts $L_r$ wahrnehmen, sofern diese im sichtbaren Spektralbereich liegen. Alternativ kann die Position eines Betrachters $B_2$ auch von einem lichtempfindlichen Detektor eingenommen werden. Der Betrachter $B_2$ oder Detektor kann verschiedene Betrach-

tungswinkel $\alpha$ einnehmen. Der Winkel $\alpha$ wird dabei von der Substratnormalen $N_a$ oder $N_b$ mit einer Propagationsrichtung des reflektierten Lichts $L_r$ eingeschlossen, das dem Betrachter $B_2$ ins Auge oder dem Detektor auf ein Sensorfeld fällt. Bei etwa 0° schaut der Betrachter $B_2$ des Schichtsystems 110 im Wesentlichen direkt von "oben" parallel zur Substratnormalen $N_a$ oder $N_b$ auf das Schichtsystem 110, also im Lot, von der Seite der Schichtlagen 1-10, also von der Seite des einfallenden Lichtes $L_0$ und der Lichtquelle, die dieses erzeugt.

Die Substratnormalen $N_a$ oder $N_b$ zeichnen sich dadurch aus, dass sie mit der planaren Fläche oder einem im Wesentlichen planaren Flächenabschnitt oder einem näherungsweise planaren Flächenabschnitt einen rechten Winkel zu allen Seiten der Fläche bilden. Es handelt sich in anderen Worten bei den Substratnormalen $N_a$ oder $N_b$ jeweils um ein Lot der jeweiligen Flächenabschnitte. Die Substratnormalen $N_a$ oder $N_b$ sind im vorliegenden Fall parallel zueinander, da die Substratlage a eine im Wesentlichen planare Substratfläche $F_a$ aufweist und somit verschiedene Flächenabschnitte jeweils Flächennormalen haben, die im Wesentlichen dieselbe Richtung haben und somit im Wesentlichen parallel zueinander sind.

Dieser Fall ist ein stark vereinfachter Fall, der beispielsweise für planare Fenstergläser und/oder Displaygläser zum Schutz von Displays, jedoch nicht für typische optische Linsen mit nicht planaren Flächen zutreffen kann. Der Betrachtungswinkel $\alpha$ wird vorliegend von der Substratlage a bzw. der Substratfläche $F_a$ definiert, da die Substratlage a in Realität verglichen mit den Schichtlagen 1-10, b, c eine wesentlich dickere Schicht darstellt und die einzelnen Schichtlagen 1-10, b, c im Wesentlichen so auf der Substratfläche $F_a$ angeordnet sind, dass sie diese im Wesentlichen nachempfinden, da sie im Wesentlichen homogene Schichtlagendicken aufweisen. Somit entspricht eine Substratnormale $N_a$ oder $N_b$ der Substratfläche $F_a$ im Wesentlichen den jeweiligen Normalen der Schichtlagenflächen der Schichtlagen 1-10, b, c. Derart kann die Substratnormale $N_a$ oder $N_b$ der Einfachheit zuliebe lediglich als von der Substratfläche $F_a$ definiert angenommen werden. Der Betrachtungswinkel $\alpha$ liegt zur Charakterisierung der Reflektivität insbesondere zwischen etwa 0° und etwa 45°. In diesem Bereich können auch zumindest teilweise Reflexe sichtbaren Lichts $L_r$ betrachtet bzw. erfasst werden.

Im Gegensatz zum Beobachter $B_2$, der reflektierte Anteile $L_r$ des einfallenden Lichtes $L_0$ wahrnimmt, sieht der Benutzer $B_1$ auf der anderen Seite des Schichtsystems 110 nicht-reflektierte also transmittierte Anteile des einfallenden Lichtes $L_0$, die zumindest einem Teil des transmittierten Anteils $L_t$ des einfallenden Lichtes $L_0$ entsprechen.

Insbesondere kann das beispielhafte und vereinfachte Schichtsystem 110 der **Fig. 2,** welches im Wesentlichen keine unebenen Flächen aufweist, zur Quantifizierung, Prüfung oder Demonstration des technischen Effekts (als proof-of-principle) herangezogen werden, da in diesem Fall die Betrachtungswinkel $\alpha$ vergleichsweise einfach zu bestimmen sind. Ein Prototyp oder ein Musterexemplar kann dieser Ausführungsform entsprechen.

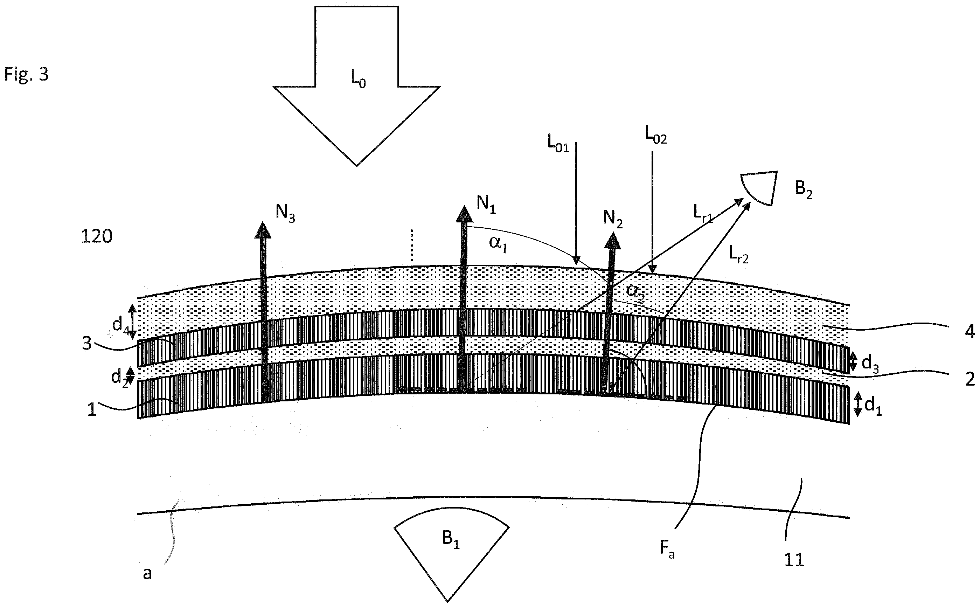

**Fig. 3** ist eine schematische Seitenansicht eines Schichtsystems 120 gemäß einer Ausführungsform mit einer Substratbasis 11 umfassend eine Substratlage a und mit einer Mehrzahl von Schichtlagen 1-4. Die Substratlage a des Schichtsystems 120 in **Fig. 3** hat im Gegensatz zu den Schichtsystemen 100 und 110 in **Fig. 1** und **Fig. 2** eine konvex-konkave Form, wobei die Substratfläche $F_a$ einer konvexen Fläche entspricht. Es kann sich in diesem Fall beispielsweise um eine optische Linse handeln. Die Substratlage a ist vorliegend beispielhaft mit einer Mehrzahl von Schichtlagen 1-4 umfassend vier Schichtlagen 1, 2, 3, 4 beschichtet. Insbesondere ist die Schichtlagen-Anordnung der **Fig. 1** oder der **Fig. 2** anwendbar. Obwohl das Schichtsystem eine konvexe Form aufweist, können die einzelnen Schichtlagen im wesentlichen eine konstante Schichtdicke oder nur eine geringe Schichtdickenänderung aufweisen. Dies gilt insbesondere, wenn die Schichtdicke im Vergleich zum Krümmungsradius klein ist.

Die erste Schichtlage 1 kann bevorzugt eine erste hochbrechende Schichtlage mit einer Schichtlagendicke von $d_1$ sein. Die zweite Schichtlage 2 kann bevorzugt eine erste niederbrechende Schichtlage mit einer Schichtlagendicke von $d_2$ sein. Die dritte Schichtlage 3 kann bevorzugt eine zweite hochbrechende Schichtlage mit einer Schichtlagendicke von $d_3$ sein. Die vierte Schichtlage 4 kann bevorzugt eine zweite niederbrechende Schichtlage sein mit einer Schichtlagendicke von $d_4$. Wie in **Fig. 3** angedeutet, können auf der vierten Schichtlage 4 noch weitere Schichtlagen angeordnet sein, und zwar solche, die auch schon in den **Fig. 1** und **2** beschrieben wurden. Insbesondere können die in den **Fig. 1** und **2** gezeigten Schichtsysteme in der in **Fig. 3** gezeigten Form, beispielsweise als Linsenform ausgestaltet sein.

Die Schichtlagendicken $d_1$, $d_2$, $d_3$, $d_4$ sind im vorliegenden Fall nicht homogen über die Substratfläche $F_a$ dargestellt. Im beispielhaften vorliegenden Fall haben die Schichtdicken $d_1$, $d_2$, $d_3$, $d_4$ in der Nähe der zentralen Achse, jeweils eine im Wesentlichen maximale Schichtlagendicke, die zum Rand der Substratlage a zu dünneren Schichtlagendicken hin verläuft. Die zentralen Achse stimmt mit der Substratnormalen $N_1$ im Zentrum bzw. auf der Mitte der Substratfläche $F_a$ im Wesentlichen überein.

Die Schichtlagendicken $d_1$, $d_2$, $d_3$, $d_4$ können jedoch auch in vielen bevorzugten Fällen im Wesentlichen homogen zumindest für Teilabschnitte der Substratfläche $F_a$ ausgebildet sein. In anderen Worten, können die Schichtlagendicken bevorzugt so ausgebildet sein, dass sie überall auf der Substratfläche $F_a$ jeweils dieselbe Schichtlagendicke aufweisen.

Im vorliegenden Fall sind die beispielhaft dargestellten Substratnormalen $N_1$, $N_2$, $N_3$, die senkrecht auf der Substratfläche $F_a$ stehen, nicht parallel zueinan-

der. Nach einer besonderen Ausführungsform der Erfindung liegen die Substratnormalen $N_1$, $N_2$, $N_3$ nicht parallel zueinander vor, da die Substratlage a und die Schichtlagen 1-4 in bevorzugten Fällen im Wesentlichen von einer planaren Oberfläche abweichen, also z.B. eine Krümmung aufweisen. Dies ist z.B. der Fall, wenn es sich bei der Substratlage a um eine optische Linse, insbesondere ein Brillenglas handelt. Sofern es sich bei der Substratlage a um ein Fensterglas handelt, können die Substratlage a und die Schichtlagen jeweils im Wesentlichen planare Flächen aufweisen. Alternativ können auch nicht planare Substratlagen a für Fenstergläser in Frage kommen, insbesondere auch bei Fahrzeugscheiben, die oft Krümmungen aufweisen.

Ein Betrachter $B_2$, der sich auf der Seite des einfallenden Lichtes $L_0$ bzw. auf der Seite der Mehrzahl der Schichtlagen 1-4 befindet, kann anders als bei einer planaren Fläche, bei einer nicht-planaren Fläche reflektiertes sichtbares Licht $L_r$ aus unterschiedlichen Betrachtungswinkel $\alpha_1$ und $\alpha_2$ wahrnehmen, ohne seine Position zu verändern. Analog kann ein Fotodetektor elektromagnetische Strahlung aus unterschiedlichen Betrachtungswinkel $\alpha_1$ und $\alpha_2$ erfassen, ohne dass dieser verschoben und/oder verdreht werden muss. Infolgedessen treffen auf dem Auge oder dem Detektor unterschiedliche Wellenlängen aus unterschiedlichen Winkeln ein. In der Fig. 3 ist dies durch die angedeuteten Strahlen $L_{01}$ und $L_{02}$ dargestellt, welche jeweils Winkel $\alpha_1$ und $\alpha_2$ mit Normalen $N_1$ und $N_2$ einschließen, die durch die Krümmung bedingt nicht parallel zueinander sind. Zur isolierten Betrachtung und Untersuchung der spektralaufgelösten Reflektivität für unterschiedliche Betrachtungswinkel $\alpha_1$ und $\alpha_2$ eignet sich daher in der Regel eher ein planares Substrat ohne Krümmung.

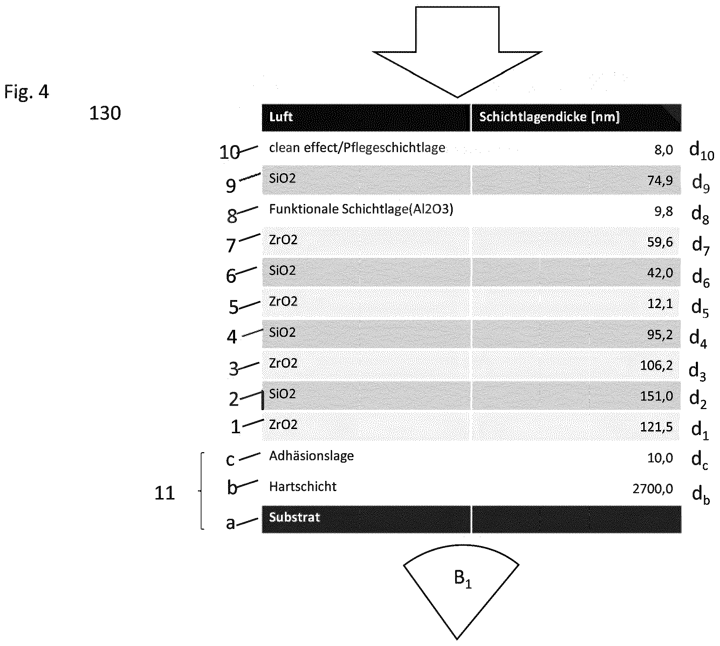

**Fig. 4** ist eine tabellarische Darstellung eines Schichtsystems 130 gemäß einer Ausführungsform umfassend eine Mehrzahl von Schichtlagen 1-10 und eine Substratbasis 11 mit einer Substratlage a und weiteren Schichtlagen b, c.

Die erste Schichtlage 1 ausgehend von der Substratbasis 11 ist eine erste hochbrechende Schichtlage umfassend $ZrO_2$, welche auf der Substratbasis 11 angeordnet ist und eine Schichtlagendicke $d_1$ von etwa 121,5 nm aufweist.

Die zweite Schichtlage 2 ausgehend von der Substratbasis 11, welche auf der ersten Schichtlage 1 angeordnet ist, ist eine erste niederbrechende Schichtlage umfassend $SiO_2$, welche eine Schichtlagendicke $d_2$ von etwa 151,0 nm aufweist.

Die dritte Schichtlage 3 ausgehend von der Substratbasis 11, welche auf der zweiten Schichtlage 2 angeordnet ist, ist eine zweite hochbrechende Schichtlage umfassend $ZrO_2$, welche eine Schichtlagendicke $d_3$ von etwa 106,2 nm aufweist.

Die vierte Schichtlage 4 ausgehend von der Substratbasis 11, welche auf der dritten Schichtlage 3 angeordnet ist, ist eine zweite niederbrechende Schichtlage umfassend $SiO_2$, welche eine Schichtlagendicke $d_4$ von etwa 95,2 nm aufweist.

Die fünfte Schichtlage 5 ausgehend von der Substratbasis 11, welche auf der vierten Schichtlage 4 angeordnet ist, ist eine dritte hochbrechende Schichtlage umfassend $ZrO_2$, welche eine Schichtlagendicke $d_5$ von etwa 12,1 nm aufweist.

Die sechste Schichtlage 6 ausgehend von der Substratbasis 11, welche auf der fünften Schichtlage 5 angeordnet ist, ist eine dritte niederbrechende Schichtlage umfassend $SiO_2$, welche eine Schichtlagendicke $d_6$ von etwa 42,0 nm aufweist.

Die siebte Schichtlage 7 ausgehend von der Substratbasis 11, welche auf der sechsten Schichtlage 6 angeordnet ist, ist eine vierte hochbrechende Schichtlage umfassend $ZrO_2$, welche eine Schichtlagendicke $d_7$ von etwa 59,6 nm aufweist.

Die achte Schichtlage 8 ausgehend von der Substratbasis 11, welche auf der siebten Schichtlage 7 angeordnet ist, ist eine funktionale Schichtlage umfassend $Al_2O_3$, welche eine Schichtlagendicke $d_8$ von etwa 9,8 nm aufweist.

Die neunte Schichtlage 9 ausgehend von der Substratbasis 11, welche auf der achten Schichtlage 8 angeordnet ist, ist eine vierte niederbrechende Schichtlage umfassend $SiO_2$, welche eine Schichtlagendicke $d_9$ von etwa 74,9 nm aufweist.

Die zehnte Schichtlage 10 ausgehend von der Substratbasis 11, welche auf der neunten Schichtlage 9 angeordnet ist, ist eine Pflegeschichtlage, beispielsweise umfassend fluorhaltige Moleküle, welche eine Schichtlagendicke $d_{10}$ von etwa 8 nm aufweist. Die zehnte Schichtlage 10 ist in dem Schichtsystem 130 die oberste Schichtlage, die am entferntesten von der Substratbasis angeordnet ist.

Die Substratbasis 11 umfasst im vorliegenden Schichtsystem 130 neben der Substratlage a auch eine beispielhafte Hartschicht b mit einer beispielhaften Schichtlagendicke $d_b$ von etwa 2700 nm und eine beispielhafte Adhäsionslage c mit einer beispielhaften Schichtlagendicke $d_c$ von etwa 10 nm.

Gemäß einem oder mehreren Ausführungsformen kann ein oder können mehrere Schichtlagendicken $d_{1-10, b, c}$ jeweils um etwa 10 %, insbesondere um etwa 5 % von dem oben angegebenen Wert abweichen, d.h. bis zu 10 % dicker oder dünner insbesondere bis zu 5 % dicker oder dünner sein.

Ein Schichtsystem nach einer Ausführungsform kann auch lediglich die Schichtlagen 1 bis 7 und insbesondere die neunte 9 Schichtlage umfassen und beispielsweise ohne die zehnte Schichtlage 10 auskommen.

Die Hartschicht b kann beispielsweise auch eine wesentlich dünnere oder wesentlich dickere Schichtlagendicke $d_b$ aufweisen. Alternativ kann auch auf die Hartschicht b vollständig verzichtet werden, insbesondere in dem bevorzugten Fall, dass die Hartschicht b nicht zu den optischen Eigenschaften des Schichtsystems 130 beiträgt.

Die Hartschicht b kann als organische Lackschicht oder auch als anorganische Schicht wie zum Beispiel $SiO_2$, gegebenenfalls auch mit möglichen Additiven, ausgebildet sein. Vor der Anordnung des Schichtsystems kann die Substratfläche $F_a$ mittels einer Plasmabehandlung konditioniert werden. Die Plasmabehandlung kann eine Aktivierung oder eine Funktionalisierung zum Ziel haben.

Das Schichtsystem 110 der **Fig. 2** kann beispielsweise die Spezifizierung der tabellarischen Darstellung des Schichtsystems 130 aus **Fig. 4** aufweisen. Auch das Schichtsystem 120 aus **Fig. 3** kann diese Spezifizierungen aufweisen.

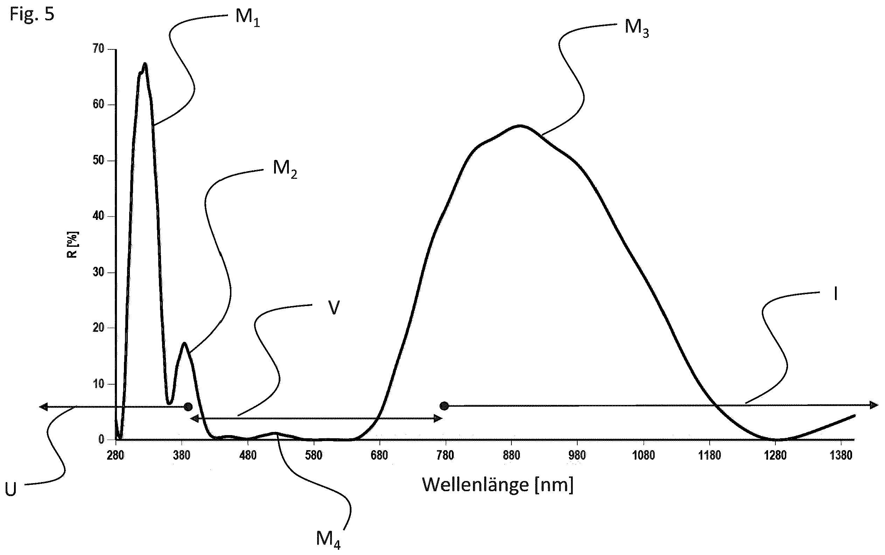

**Fig. 5** ist eine spektrale Auftragung einer gemessenen Reflektivität eines Systems ähnlich dem in **Fig. 4** spezifizierten Schichtsystems bei einem Betrachtungswinkel von etwa 0°, beispielsweise bei 8°. In anderen Worten entspricht die spektrale Auftragung der Reflektivität R dem Anteil des reflektierten Lichts $L_r$ in Relation zum einfallenden Licht $L_0$ bei senkrechter Draufsicht auf die oberste bzw. entfernteste Oberfläche der Schichtlagen, ausgehend von der Substratbasis. Bei dem Betrachter kann es sich hier insbesondere um einen Fotodetektor handeln, der spektral-aufgelöst Intensitäten $I_r$ des reflektierten Lichts $L_r$ erfassen kann, insbesondere zwischen etwa 280 nm und etwa 1400 nm. Insbesondere wird die Reflektivität für einen bestimmten Winkelbereich, insbesondere zwischen etwa 0° und etwa 60°, bevorzugt zwischen etwa 8° und etwa 50° mittels einer Apparatur zur Erfassung einer gerichteten Transmission und Reflexion von Perkin Elmer aufgezeichnet.

Zur Bestimmung der Reflektivität R wird außerdem die Intensität $I_0$ des einfallenden Lichts $L_o$ spektral aufgelöst erfasst, sodass eine Relation zwischen $I_r$ und $I_0$ zur Bestimmung der Reflektivität hergestellt werden kann. Ein Fotodetektor (z.B. ein Goniofotometer) kann beispielsweise auf einem Goniometerarm sitzen und mit dem Arm um den Betrachtungswinkel 0° mit dem Lot bzw. der Substratnormalen verschoben bzw. verdreht werden, um weitere derartige spektrale Messungen bei anderen Betrachtungswinkeln $\alpha$ vornehmen zu können.

Die spektrale Auftragung der Reflektivität R umfasst im Wesentlichen drei Bereichsabschnitte, und zwar für Teile des UV-Bereichs U, insbesondere für den UV-A und den UV-B Bereich, für den sichtbaren Bereich V und für Teile des Nahinfrarotbereichs I, insbesondere für den IR-A Bereich.

Die spektrale Auftragung der Reflektivität R zeigt im Wesentlichen drei deutliche Maxima $M_1$, $M_2$, $M_3$ und ein vergleichsweise schwaches Maximum $M_4$. Insbesondere zeigt die Auftragung einen "Fensterbereich", in dem die Reflektivität besonders gering ist, und das im Wesentlichen den Großteil des sichtbaren Bereichs umfasst.

Wie an dem Maximum $M_1$ zu erkennen ist, beträgt die Reflektivität R bei etwa 300 nm nahezu etwa 70 %, insbesondere etwa 65-68 %. Damit ergibt sich ein besonders hoher Schutz vor UV-B Strahlung, da nahezu 70 % des einfallenden Lichts $L_0$ an den Schichtlagen reflektiert werden und die Augen oder das Gewebe eines Benutzers zu einem hohen Anteil durch das Schichtsystem vor dieser schädlichen Strahlung abgeschirmt werden.

Ein Maximum $M_2$ bei etwa 380 nm erreicht eine Reflektivität von etwa 20 %, insbesondere etwa 16-18 %. Das Maximum $M_2$ umfasst Teile des spektralen UV-A Bereichs und Teile des spektralen sichtbaren Bereichs, im Wesentlichen die Violett-Töne und eventuell Blau-Töne des sichtbaren Bereichs.

Die Maxima $M_1$ und $M_2$ ergeben sich entsprechend einer besonders bevorzugten Ausführungsform der Erfindung, wobei neben dem IR-A Schutz auch ein UV-Schutz für einen Benutzer erzielt werden soll.

Ein besonders prominentes und breites Maximum $M_3$ ergibt sich erfindungsgemäß zwischen etwa 680 nm und etwa 1100 nm bei einem Betrachtungswinkel von etwa 0°. In der beispielhaften spektralen Auftragung der **Fig. 5** liegt dieses Maximum $M_3$ bei etwa 900 nm und erreicht nahezu 60 %. Im Detail steigt die Reflektivität R bei etwa 670 nm steil an, erreicht das Maximum $M_3$ bei etwa 880 - 900 nm und fällt dann zu höheren Wellenlängen so ab, dass sie bei etwa 1280 nm ein Minimum bei etwa 0 % erreicht. Der Wellenlängenbereich um das Maximum $M_3$, in dem die Reflektivität oberhalb von 5 - 10 % liegt, umfasst teilweise den sichtbaren Bereich mit Rot-Tönen und einen großen Anteil des IR-A Bereichs, insbesondere der Bereich, in dem die Strahlung als schädlich befunden wurde. Die spektrale Halbwertsbreite des Maximums $M_3$ beträgt vorliegend in etwa 400 nm. Die spektrale Halbwertsbreite des Maximums $M_3$ beträgt im Allgemeinen insbesondere etwa 200 nm bis etwa 900 nm, bevorzugt etwa 300 nm bis etwa 500 nm und besonders bevorzugt etwa 350 nm bis etwa 450 nm.

Das Maximum $M_3$ weist vorliegend einen Bereich einer hohen Steigung zwischen etwa 680 nm und etwa 880 nm auf. Die Steigung beträgt in diesem Bereich etwa 40 % pro 100 nm auf. Der Bereich der hohen Steigung kann beispielsweise abhängig vom Betrachtungswinkel variieren und insbesondere zwischen etwa 560 nm und etwa 1000 nm, bevorzugt zwischen etwa 570 nm und etwa 920 nm und besonders bevorzugt zwischen etwa 580 nm und etwa 900 nm liegen. Die Steigung in diesem Bereich beträgt insbesondere zwischen etwa 20 % pro 100 nm und etwa 80 % pro 100 nm, bevorzugt zwischen etwa 30 % pro 100 nm und etwa 60 % pro 100 nm und besonders bevorzugt zwischen etwa 35 % pro 100 nm und etwa 45 % pro 100 nm.

In anderen Worten zeugt die hohe Reflektivität um das Maximum $M_3$ in einem breiten Bereich, insbesondere umfassend den IR-A Bereich, von einer hohen Reflektivität, die einen besonders guten Schutz eines Benutzers vor IR-A Strahlung gewährleistet.

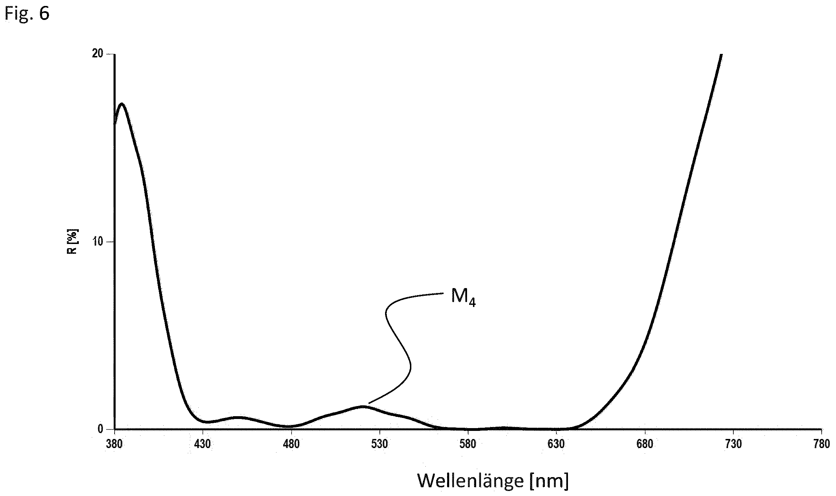

**Fig. 6** ist eine Detailansicht eines Bereichs der spektralen Auftragung der Reflektivität R aus **Fig. 5**. Es wird die spektrale Auftragung der Reflektivität zwischen 380 nm und 780 nm dargestellt, sodass insbesondere

das Maximum $M_4$ bei etwa 510 - 530 nm deutlich wird. Bei höheren und niedrigeren Wellenlängen bezüglich des Maximums $M_4$ erreicht die Reflektivität R etwa 0 %. Beispielsweise wird bei etwa 480 nm und zwischen etwa 580 nm und 630 nm eine nahezu vollständige Transmission, also eine Reflektivität von etwa 0 % erreicht. Das Maximum $M_4$ der Reflektivität, das bei etwas kürzeren Wellenlängen als 530 nm liegt, erreicht als absoluten Wert der Reflektivität etwa 2 bis 3 %. Zwischen etwa 430 nm und 480 nm liegt ein weiteres, jedoch wesentlich geringeres Maximum der Reflektivität R. Dieses Maximum soll hier nicht näher beschrieben werden.

Das Reflexionsverhalten jenseits von 780 nm ist insbesondere im vorliegenden Fall unerheblich.

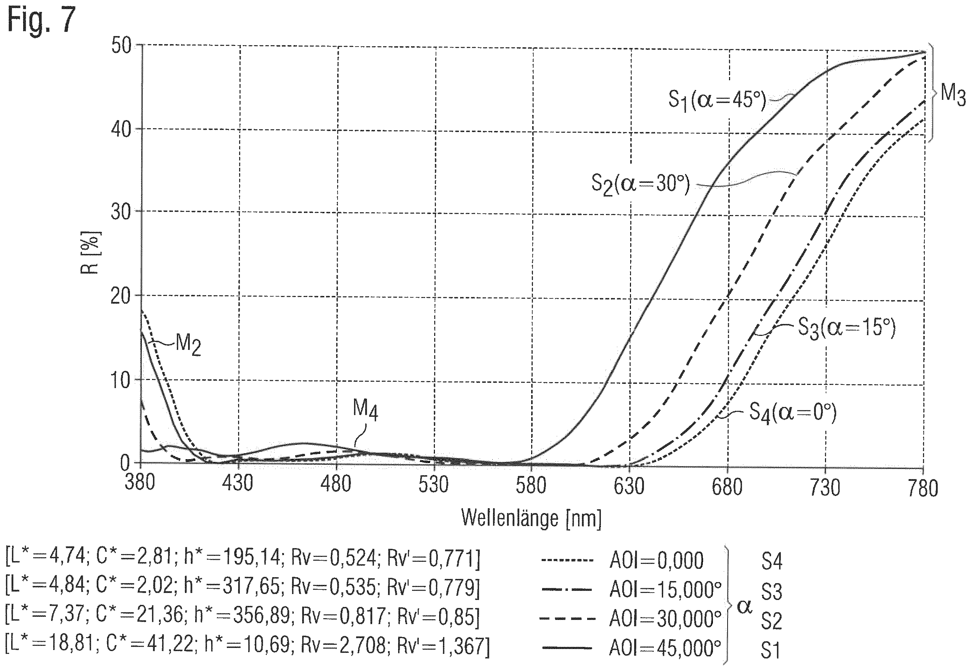

**Fig. 7** ist die spektrale Auftragung $S_1$, $S_2$, $S_3$, $S_4$ einer gemessenen Reflektivität R eines Systems ähnlich dem in **Fig. 4** dargestellten Schichtsystems für vier verschiedene Betrachtungswinkel, und zwar entsprechend für etwa 45°, 30°, 15° und 0°. Wie an den Auftragungen zu sehen ist, sind die Verläufe der jeweiligen spektral aufgetragenen Reflektivität R für verschiedene Betrachtungswinkel relativ ähnlich zueinander, jedoch sind die Verläufe zueinander verschoben. Die spektrale Auftragung $S_1$ für den Betrachtungswinkel von etwa 45° ist relativ zu den anderen Auftragungen zu niedrigeren Wellenlängen verschoben. Beispielsweise beginnt der Anstieg zum Maximum $M_3$ bereits bei etwa 580 nm wohingegen $S_2$ bei einem Betrachtungswinkel von etwa 30° bei etwa 630 nm beginnt zum Maximum $M_3$ anzusteigen und $S_3$ für einen Betrachtungswinkel von etwa 15° und für einen Betrachtungswinkel von etwa 0° bei etwa 650 nm beginnen zum Maximum $M_3$ anzusteigen. Darüber hinaus verschieben sich in etwa gleichem Maße auch die Maxima $M_2$ und $M_4$ für die unterschiedlichen spektralen Auftragungen $S_1$, $S_2$, $S_3$, $S_4$.

Dies hat zur Folge, dass unter einem Betrachtungswinkel von etwa 45° ein recht deutlich sichtbarer Reflex in Rot-Tönen zu erkennen ist. Verkleinert sich der Betrachtungswinkel, so wird der Reflex immer weniger sichtbar, da sich die spektrale Auftragung der Reflektivität bei kleinen Betrachtungswinkeln, wie oben beschrieben, so verschiebt, dass das Maximum bzw. der Anstieg zum Maximum $M_3$ bei höheren Wellenlängen, insbesondere im IR-A Bereich liegt.

Dies zeigt sich insbesondere dadurch, dass die Reflektivität R ab einer Wellenlänge von etwa 630 nm, insbesondere bei etwa 680 nm und bei einem Betrachtungswinkel $\alpha$ von etwa 45°

- zwischen etwa 10 % und 20%, insbesondere etwa 15 % höher ist, als bei einem Betrachtungswinkel $\alpha$ von etwa 30°;
- zwischen etwa 20 % und 30%, insbesondere etwa 25 % höher ist, als bei einem Betrachtungswinkel $\alpha$ von etwa 15°; und
- zwischen etwa 23 % und 33%, insbesondere etwa 27 % höher ist, als bei einem Betrachtungswinkel $\alpha$ von etwa 0°.

Außerdem weist die Reflektivität R bei einem Betrachtungswinkel $\alpha$ von etwa 45° und einer Wellenlänge von

- etwa 630 nm einen Wert zwischen etwa 10 % und etwa 20 %, insbesondere zwischen etwa 13 % und etwa 17 % auf;
- etwa 680 nm einen Wert zwischen etwa 30 % und etwa 40 %, insbesondere zwischen etwa 33 % und etwa 39 % auf; und
- etwa 730 nm einen Wert zwischen etwa 43 % und etwa 53 %, insbesondere zwischen etwa 45 % und etwa 50 % auf.

Die restliche Verspiegelung im optischen Bereich, insbesondere für Grün- und Rot-Töne, wird insbesondere bei Betrachtung unter einem Mindestwinkel "sichtbar": Bei gerader Draufsicht, das heißt bei einem Betrachtungswinkel von etwa $\alpha \leq 30°$, insbesondere bei etwa 0°, nimmt ein Betrachter eine hohe Entspiegelungswirkung insbesondere im sichtbaren Bereich, also auch im roten Wellenlängenbereich und einen lediglich verschwindend geringen Restreflex eines Grün-Tons wahr, das heißt für Wellenlängenbereiche, in der elektromagnetische Strahlung einem Betrachter grün erscheint. Bei Betrachtung unter einem Betrachtungswinkel von etwa $\alpha$ > 30° kann ein Betrachter die Schutzeigenschaft vor IR-A-Strahlung durch den Reflex im roten Wellenlängenbereich erahnen, da ab diesem Betrachtungswinkel auch teilweise noch sichtbare Rot-Töne reflektiert werden.

Die hohe Entspiegelungswirkung im sichtbaren Wellenlängenbereich bleibt bis zu einem bestimmten Betrachtungswinkel erhalten. Ab diesem bestimmten Betrachtungswinkel wird aus der Entspiegelung eine sichtbare rote Verspiegelung, welche dem Betrachter den IR-Schutz verdeutlicht. Ein bestimmter Betrachtungswinkel bei etwa 30° entspricht im Wesentlichen einem Winkel, ab dem die Reflexionswirkung des Schichtsystems für einen Betrachter besonders gut sichtbar wird. Ab diesem Betrachtungswinkel erlaubt das Schichtsystem einem Betrachter von außen, das heißt auf der Seite des einfallenden Lichtes, also beispielsweise auf der einem Brillen-Benutzer entgegengesetzten Seite, keinen "Einblick" mehr hinter das Schichtsystem, da die Verspiegelung bzw. Reflektivität im sichtbaren Bereich einen hohen Wert erreicht. Dieser Winkel lässt sich moderat durch Veränderung bzw. Variation der Schichtdicken variieren, wobei die beschriebenen Eigenschaften beibehalten werden. Hierüber lässt sich im Rahmen der Schichtentwicklung die typische Gebrauchsstellung der Gläser in der Fassung berücksichtigen, um störende Blendeffekte für den Brillenträger durch ein zu frühes Einsetzen der roten Verspiegelung zu verhindern.

Das Maximum $M_3$ weist für alle angedeuteten Betrachtungswinkel $\alpha$ einen Bereich einer hohen Steigung zwischen etwa 580 nm und etwa 900 nm auf. Die Steigung beträgt in diesem Bereich etwa 40 % pro 100 nm für alle gezeigten Auftragungen auf. Der Bereich der hohen Steigung kann beispielsweise abhängig vom Betrachtungswinkel variieren und insbesondere zwischen etwa 560 nm und etwa 1000 nm, bevorzugt zwischen etwa 570 nm und etwa 920 nm und besonders bevorzugt zwischen etwa 580 nm und etwa 900 nm liegen. Die Steigung in diesem Bereich beträgt insbesondere zwischen etwa 20 % pro 100 nm und etwa 80 % pro 100 nm, bevorzugt zwischen etwa 30 % pro 100 nm und etwa 60 % pro 100 nm und besonders bevorzugt zwischen etwa 35 % pro 100 nm und etwa 45 % pro 100 nm.

Ein Schichtsystem nach einem der genannten Aspekte und/oder Ausführungsformen kann einerseits theoretisch anhand einer Simulation bestimmt werden, indem die optischen Konstanten und Schichtdicken der Schichtlagen eines gewählten Materials der Berechnung zugrunde gelegt werden. Andererseits kann ein bereits hergestelltes Schichtsystem anhand einer geeigneten Reflexionsmessung auf seine reflektiven Eigenschaften hin untersucht werden. Insbesondere ist dabei von Interesse, unter welchem Winkel welche spektralen Anteile von Licht reflektiert oder transmittiert werden. In anderen Worten soll eine Reflexionsmessung ergeben, welche Farben unter welchem Einfalls- und Betrachtungswinkel an dem Schichtsystem gespiegelt oder durch das Schichtsystem hindurch gelassen werden.

Eine Reflexionsmessung wird bevorzugt an einem im Wesentlichen planaren Schichtsystem mit vernachlässigbarer Oberflächenkrümmung wie beispielsweise in **Fig. 1** und **Fig. 2** dargestellt - vorgenommen, insbesondere um die Verhältnisse der Einfalls- und Beobachtungswinkel besser kontrollieren zu können. Es ist allerdings auch denkbar, dass eine gewölbte Fläche eines Schichtsystems, beispielsweise eine Linse, insbesondere ein Brillenglas - wie beispielsweise in **Fig. 3** dargestellt - mittels einer geeigneten Reflexionsmessung untersucht werden kann. In der Praxis ist es jedoch relativ schwierig selbst bei einer planaren Fläche denselben Punkt unter unterschiedlichen Winkeln, insbesondere bei hohen Winkeln, mit dem einfallenden Lichtstrahl zu treffen. Deswegen kann es schwierig sein, eine gewölbte Oberfläche zuverlässig hinsichtlich der Reflektivität zu charakterisieren. Im Allgemeinen ist es in der Regel hinsichtlich der Polarisation, des Strahlprofils, der Messfleckgröße und des Strahlversatzes durch die Probenrückseite vergleichsweise schwierig, zuverlässige Daten für hohe Einfallswinkel zu erzielen, insbesondere für Einfallswinkel zwischen etwa 40° und etwa 90°. Beispielsweise können die Reflektivitäts- und die Transmissionseigenschaften für unterschiedlliche Polarisationen des einfallenden Lichts insbesondere im Bereich zwischen etwa 40° und etwa 85° für den Einfallswinkel stark variieren. Des Weiteren kann auch die Fläche, die bestrahlt wird, bei unterschiedlichen besonders flachen Einfallswinkeln variieren.

Zur Untersuchung der Reflexionseigenschaften eines Schichtsystems eignen sich insbesondere kommerzielle Spektrometer, wie sie z.B. von Herstellern wie PerkinElmer vertrieben werden, beispielsweise das Modell "Perkin Elmer Lambda 750 UV/Vis/NIR", welches versehen mit einem entsprechenden Zubehör (URA, Universal Reflectance Accessory) zuverlässig unter verschiedenen Winkeln im Wesentlichen unpolarisierte Reflexionsmessungen ermöglicht. Für die in dieser Schrift dargestellten Reflexionsmessungen wurde ein solcher Aufbau verwendet.

**Fig. 8 a)** zeigt schematisch eine beispielhafte Anordnung der zu untersuchenden Fläche F hinsichtlich des einfallenden Lichts EL und des reflektierten Lichts RL. Eine fiktive Einfallsebene EE deutet die Symmetrien an. Die Einfallsebene wird dabei im Wesentlichen durch das Lot der zu untersuchenden Fläche am Auftreffpunkt des einfallenden Lichts EL und dem Wellenvektor bzw. der Ausbreitungsrichtung des einfallenden Lichts EL bestimmt.

Das einfallende Licht kann insbesondere unter Laborbedingungen idealerweise eine im Wesentlichen kohärente und parallele Strahlung umfassen. Zumindest weist das einfallende Licht bei einer Messung ein Licht mit einer Hauptausbreitungsrichtung und einem hohen Anteil zueinander paralleler Strahlenbündel auf, sodass der Winkel zwischen Lot L und einfallendem Licht EL möglichst genau definiert werden kann. Im Gebrauch versteht sich von selbst, dass Lichtquellen des Alltags in der Regel keine zueinander parallelen Strahlenbündel umfassen und entsprechend isotrope bzw. streuende Lichtquellen darstellen.

Die Messanordnung erlaubt in der Regel keine Reflexionsmessungen unter dem Einfallswinkel $\alpha'$ und dem Beobachtungswinkel $\alpha$ von jeweils exakt 0°. Typischerweise liegt der tatsächliche kleinste Winkel $\alpha'$ bzw. $\alpha$, unter dem die Reflektivität gerade noch gemessen werden kann, betragsmäßig oberhalb von 0° und unterhalb von etwa 15°, insbesondere zwischen etwa 3° und etwa 10°. Dieser tatsächlich gerade noch zu erfassende Winkel ist gerätespezifisch, kann also je nach Gerät beispielsweise etwa 3° oder beispielsweise etwa 8° sein. Die in dieser Schrift angegebenen Winkel $\alpha'$ bzw. $\alpha$ von etwa 0° umfassen also tatsächlich Winkel, die etwas oberhalb von 0° liegen. Insbesondere liegt der kleinste zu messende Winkel $\alpha'$ bzw. $\alpha$ bei etwa 3°, sodass die Summe beider Winkel $\alpha'$ und $\alpha$, die dem Öffnungswinkel, der von dem einfallenden Licht EL und dem reflektierten Licht RL eingeschlossen wird, bei etwa 6°, also zweimal 3° liegt. Bei dem Einfallswinkel $\alpha'$ und dem Beobachtungswinkel $\alpha$ handelt es sich um den jeweiligen Halbwinkel, der von dem Lot der Oberfläche am Auftreffpunkt des Lichtes und dem einfallenden Lichtstrahl bzw. dem reflektierten Lichtstrahl eingeschlossen wird.

Die **Fig. 8 a)** deutet an, dass zumindest Teile des auf die zu untersuchende Fläche F einfallenden Lichts EL und des von der Fläche reflektierten Lichts RL eine Polarisation, beispielsweise eine Polarisation P parallel zur Einfallsebene EE und/oder eine Polarisation S senkrecht zur Einfallsebene EE aufweisen können.

Die in dieser Schrift gezeigten Messungen, insbesondere die Reflektivitäts-Auftragungen bzw. Reflexionskurven, wie sie beispielsweise in **Fig. 5, Fig. 6** und **Fig. 7** gezeigt sind, wurden im Wesentlichen mit unpolarisiertem einfallenden Licht EL vorgenommen. Das heißt mit anderen Worten, dass zumindest das einfallende Licht keine kollektive Polarisation, beispielsweise in S- oder P-Richtung aufweist.

**Fig. 8 b)** zeigt schematisch eine beispielhafte Messkonfiguration bei einem Einfallswinkel $\alpha'$ von etwa 45°. **Fig. 8 c)** zeigt schematisch eine beispielhafte Messkonfiguration bei einem Einfallswinkel $\alpha'$ von etwa 80°. Der Einfallswinkel $\alpha'$ und der Ausfallswinkel $\alpha$, der dem Betrachtungswinkel entspricht, wird mittels drehbarer Spiegel eingestellt, sodass das einfallende Licht EL von unten mittels eines ersten Spiegels auf die zu untersuchende Fläche gesendet wird und das reflektierte Licht unter dem Winkel $\alpha$ an einer zumindest teilweise reflektierenden Fläche reflektiert wird und über den zweiten Spiegel den Aufbau verlässt. Die Messkonfiguration, die in **Fig. 8 c)** gezeigt wird deutet besonders große Winkel $\alpha'$ und $\alpha$ zum Lot an. Alternativ kann der Aufbau statt drehbarer Spiegel auch optische reflektierende Elemente auf zumindest einem Stellmotor und/oder auf einem drehbaren Goniometerarm umfassen, um verschiedene Winkelstellungen abzufahren.

**Fig. 9** ist die tabellarische Darstellung von spektralen Parametern der in **Fig. 5** gezeigten Reflexionskurve eines beispielhaften Schichtsystems für vier verschiedene Betrachtungswinkel $\alpha$, und zwar für etwa 0°, etwa 15°, etwa 30° und etwa 45°. Im Folgenden werden die Trends für die einzelnen dargestellten Größen abhängig vom jeweiligen Betrachtungswinkel $\alpha$ näher erläutert. Eine ergänzende Darlegung ist im Zusammenhang mit **Fig. 10a-e** gegeben.

Die Reflexionseigenschaften werden beschrieben durch die Parameter Rv, Rv', L*, C*, h* und durch RM_(380-780nm) im sichtbaren Bereich und RM_(780-1150nm) im IR-A-Bereich sowie durch geeignete Verrechnung der Reflexionswerte im IR-A Bereich mit der thermischen Gewichtungsfunktion, die nach ICNIRP-Guidelines 2013 beschrieben ist.

Die Parameter L*, C*, h* beziehen sich jeweils insbesondere auf die Leuchtkraft, die Sättigung und auf den Farbwert im Farbkreis in Polarkoordinaten (DIN 11664-1/2). Rv und Rv' beziehen sich insbesondere auf den visuellen Lichtreflexionsgrad (DIN 13666), wobei Rv das Tagsehen und Rv' das Dämmerungssehen betrifft. RM bezieht sich auf den gemittelten Reflexionswert. Insbesondere bezieht sich RM_(380-780nm) auf die Reflexionsfähigkeit im sichtbaren Bereich, konkret für den Bereich zwischen 380 nm und 780 nm, und RM_(780-1150nm) bezieht sich auf die Reflexionsfähigkeit im infraroten Bereich zwischen 780 nm und 1150 nm. Der Reflexionswert wird insbesondere dadurch gemittelt, dass alle Reflexionswerte über alle Wellenlängen in dem entsprechenden Wellenlängenbereich gemittelt werden. Die Berechnung der gemittelten Reflexion erfolgt nach DIN EN ISO 13666:2019, wobei die Integrationsgrenzen entsprechend angepasst werden.

Die Leuchtkraft L* nimmt von niedrigen Winkeln zu etwa 45° sukzessive zu. Das heißt mit anderen Worten, dass die Leuchtkraft bei 45° vergleichsweise höher ist als bei geringeren Winkeln, und zwar etwa 18,8 wohingegen die Leuchtkraft bei etwa 0° nur etwa 4,7 aufweist.

Ebenso, wie die Leuchtkraft, nimmt die Sättigung C* zu höheren Winkeln zu. So weist die Sättigung bei etwa 45° einen Wert von etwa 41,2 auf, wo sie hingegen bei etwa 0° einen Wert von etwa 2,8 aufweist.

Der Farbwert im Farbkreis in Polarkoordinaten h* liegt für etwa 0° bei etwa 195,1 und fällt bis etwa 45° auf etwa 10,7 ab. Dies entspricht im Wesentlichen einer Farbverschiebung von im Wesentlichen grünen Farben hin zu roten Farben, was in **Fig. 10 a-e** noch näher erläutert wird.

Die Lichtreflexionswerte Rv für das Tagsehen und Rv' für das Dämmerungssehen steigen von jeweils etwa 0,52 % und etwa 0,77 % bei etwa 0° auf jeweils etwa 2,7 % und etwa 1,4 % an.

Die Reflexionsfähigkeit im sichtbaren Bereich RM_(380-780nm) steigt von einem Wert bei etwa 0° von 8 % auf etwa 16,7 % bei etwa 45° an. Hingegen fällt die Reflexionsfähigkeit im IR Bereich RM_(780-1150nm) von einem Wert bei etwa 0° von etwa 35,8 % auf etwa 23,6 % bei etwa 45°.

In der **Fig. 10 a)** wird ein C*h*-Plot für Restreflexfarben bei Variation des Betrachtungswinkels $\alpha$ von etwa 0° bis etwa 45° gezeigt. In anderen Worten wird der Verlauf der Restreflexfarben bei Variation des Betrachtungswinkels $\alpha$ von etwa 0° bis etwa 45° dargestellt, wobei der Farbwert im Farbkreis in Polarkoordinaten aufgetragen ist. Die Punkte in dem Farbkreis entsprechen jeweils einer Farbe und sind in der Auftragung zwischen etwa 0° bis etwa 45° entsprechend farblich dargestellt. Zu sehen ist der Trend der Restreflexfarbe, der bei dem Winkel $\alpha$ von etwa 0° grün erscheint, bei dem Winkel $\alpha$ von etwa 23° grüne und rote Farbanteile aufweist und bei dem Winkel $\alpha$ von etwa 45° im Wesentlichen rot ist.

**Fig. 10 b)** zeigt den Verlauf der Restreflexfarbe in einer anderen Darstellung und zwar bei Variation des Betrachtungswinkels $\alpha$ von etwa 0° bis etwa 45°, wobei der Farbwert als farbliche Auftragung gegen den Betrachtungswinkel $\alpha$ gewählt ist. Auch hier ist der Trend zu erkennen, dass die Restreflexfarbe bei dem Winkel $\alpha$ von etwa 0° im Wesentlichen grün erscheint, bei dem Winkel $\alpha$ von etwa 23° grüne und rote Farbanteile aufweist und bei dem Winkel $\alpha$ von etwa 45° im Wesentlichen rot ist.

**Fig. 10 c)** zeigt die Auftragung der Leuchtkraft L* gegen den Betrachtungswinkel $\alpha$. Die Leuchtkraft zeigt zwischen etwa 0° und etwa 25° im Wesentlichen konstante Werte von etwa 4. Ab etwa 30° steigt die Leuchtkraft L* stetig und insbesondere zwischen etwa 38° und etwa 43° scheinbar konstant an mit etwa 10 Einheiten pro 10° und erreicht bei etwa 45° den Wert L* von etwa 15. Die Leuchtkraft nimmt also mit größerem

Betrachtungswinkel $\alpha$ stetig zu.

Die Auftragungen in **Fig. 10 d)** und **Fig. 10 e)** zeigen weitestgehend ein ähnliches Verhalten wie die Auftragung der **Fig. 10 c)**. **Fig. 10 d)** zeigt die Auftragung des visuellen Lichtreflexionsgrads Rv' für das Dämmerungssehen gegen den Betrachtungswinkel $\alpha$. Die Auftragung des visuellen Lichtreflexionsgrads Rv' zeigt zwischen etwa 0° und etwa 25° im Wesentlichen konstante Werte von etwa 0,6 %. Ab etwa 35° steigt der visuelle Lichtreflexionsgrad Rv' stetig an und erreicht bei etwa 45° den Wert Rv' von etwa 1,1%. Der visuelle Lichtreflexionsgrad Rv' für das Dämmerungssehen nimmt also mit größerem Betrachtungswinkel $\alpha$ stetig zu. **Fig. 10 e)** zeigt die Auftragung des visuellen Lichtreflexionsgrads Rv für das Tagsehen gegen den Betrachtungswinkel $\alpha$. Der visuellen Lichtreflexionsgrad Rv zeigt zwischen etwa 0° und etwa 25° im Wesentlichen konstante Werte von etwa 0,5 %. Ab etwa 35° steigt der visuelle Lichtreflexionsgrad Rv stetig an und erreicht bei etwa 45° den Wert Rv' von etwa 1,8 %. Der visuelle Lichtreflexionsgrad Rv für das Tagsehen nimmt also mit größerem Betrachtungswinkel $\alpha$ stetig zu.

Im Folgenden werden weitere Merkmale, auf die in der Beschreibung zurückgegriffen wird, spezifiziert und näher beschrieben.

Fahrzeugscheiben umfassen insbesondere Scheiben, wie beispielsweise Windschutzscheiben und/oder Heckscheiben für Kraft-, Personen- und Lastkraftfahrzeuge und/oder Scheiben für Züge, Flugzeuge, Motorräder oder andere Fahrzeuge.

Die hochbrechenden und niederbrechenden Schichtlagen entsprechen im Wesentlichen optisch aktiven bzw. optisch relevanten Schichtlagen, welche im Wesentlichen für die Reflektivität des Schichtsystems verantwortlich sind. Es ist nicht auszuschließen, dass weitere funktionale Schichtlagen auch hoch- oder niederbrechend sein können und somit zur optischen Aktivität beitragen, jedoch tragen solche Schichtlagen bevorzugt im Wesentlichen nicht oder nur in geringem Maße zur Reflektivität des Schichtsystems bei.

Geeignete Beispiele für Schichtmaterialien mit unterschiedlichen Brechungsindizes sind Siliziumdioxid ($SiO_2$) mit einem Brechungsindex n von etwa 1,46, Aluminiumoxid ($Al_2O_3$) mit einem Brechungsindex n von etwa 1,7, Zirkondioxid ($ZrO_2$) mit einem Brechungsindex n von etwa 2,05, Praseodym-Titanoxid ($PrTiO_3$) mit einem Brechungsindex n von etwa 2,1, Titanoxid ($TiO_2$) und Zinksulfid (ZnS) mit jeweils einem Brechungsindex n von etwa 2,3. Die genannten Werte stellen mittlere Werte gemessen bei einer Wellenlänge von etwa 550 nm dar, wobei die Werte je nach Beschichtungsverfahren und Schichtdicke bis zu 10 % variieren können. Übliche optische Gläser weisen Brechungsindizes zwischen etwa 1,5 und 2,0 auf. Schichtmaterialien mit Brechungsindizes kleiner als etwa 1,5 wie $MgF_2$, $SiO_2$, $Al_2O_3$ werden deshalb in Kombination mit optischen Gläsern als niedrig brechende Materialien bezeichnet, Schichtmaterialien mit Brechungsindizes größer als etwa 2,0 wie $ZrO_2$,

$PrTiO_3$, $TiO_2$, ZnS werden in Kombination mit optischen Gläsern als hochbrechende Materialien bezeichnet. Der Unterschied der Brechungsindizes zwischen hoch und niedrig brechenden Materialien beträgt demzufolge je nach Beschichtungsverfahren und Schichtdicke mindestens 0,2 bis mindestens 0,5.

Höherbrechende Schichtlagen können insbesondere mindestens eines der Materialien $Ta_2O_5$, $TiO_2$, $ZrO_2$, $Al_2O_3$, $Nd_2O_5$, $Pr_2O_3$, $PrTiO_5$, $La_2O_3$, $Nb_2O_5$, $Y_2O_3$, $HfO_2$, ITO (Indium-Zinn-Oxid), $Si_3N_4$, MgO, $CeO_2$ und deren Modifikationen, insbesondere deren andere Oxidationsstufen, aufweisen. Diese Materialien sind bekannt als Werkstoffe mit hohem klassischem Brechungsindex für den Einsatz bei optischen Elementen, wie beispielsweise zur Beschichtung von Brillengläsern. Die höherbrechenden Schichtlagen können jedoch auch $SiO_2$ oder andere niedrigerbrechende Materialien enthalten, solange der Brechungsindex der gesamten Teilschicht größer als 1,6 ist.

Niedrigerbrechenden Schichtlagen können insbesondere mindestens eines der Materialien SiO, $SiO_2$, Silane, Siloxane aufweisen. Die niedrigerbrechenden Schichtlagen können jedoch auch eine Mischung von $SiO_2$ und $Al_2O_3$ enthalten. Bevorzugt können die niedrigerbrechenden Schichtlagen wenigstens 80 Gewichtsprozent $SiO_2$, besonders bevorzugt wenigstens 90 Gewichtsprozent $SiO_2$ enthalten.

Die verwendeten Materialien für diese Art von Beschichtungen sind die typischen Materialien, die in der Optik mittels beispielsweise PVD-Verfahren (PVD = Physical Vapour Deposition (physikalische Gasphasenabscheidung)) oder CVD-Verfahren (CVD = Chemical Vapour Deposition (chemische Gasphasenabscheidung)) aufgebracht werden. Dies heißt, als niedrigerbrechendes Material sind $SiO_2$ und Mischungen mit $SiO_2$ bevorzugt. Als hochbrechendes Material sind alle typischen hochbrechenden oxidischen Materialien und deren Mischungen möglich ($Ta_2O_5$, $Ti_xO_y$, $ZrO_2$, etc.). Die Wahl einer bestimmten Materialkomposition, wie dies bei bisherigen Beschichtungen zum Teil notwendig war, ist bei dem erfindungsgemäßen Schichtsystem nicht mehr gegeben. Als höherbrechende Materialien können so alle typischen hochbrechenden Metalloxide und deren Mischungen der optischen Industrie verwendet werden ($Ta_2O_5$, $Ti_xO_y$, $ZrO_2$, und dergleichen).

Als niedrigerbrechende Materialien können alle typischen niederbrechenden Metalloxide und deren Mischungen der optischen Industrie verwendet werden (SiO, $SiO_2$, $SiO_2$ mit Zusätzen Al, SiO wie auch Silane und Siloxane in Reinform oder mit deren fluorierten Derivaten, und dergleichen).

$SiO_2$ weist typischerweise je nach Packungsdichte einen Brechungsindex von 1,46 bis 1,62 auf, $Al_2O_3$ weist typischerweise einen Brechungsindex von 1,67 auf. Die Differenz der Brechungsindizes der höherbrechenden zu der niedrigerbrechenden Teilschicht liegt demzufolge zwischen 0,2 bis 0,5.

Die Flächen der Schichtlagen und/oder die Substratfläche kann mittels Plasmakonditionierung aktiviert und/oder funktionalisiert werden. Beispielsweise kann ein Plasma dazu Ar, $O_2$, $N_2$, oder ähnliche Gase umfassen.

Ein Reflektivitätsmaximum kann generell so ermittelt werden, dass der absolute Wert des lokalen Maximums für die Reflektivität ermittelt wird. Alternativ kann eine Differenz der Reflektivität zwischen dem lokalen Maximum und den lokalen Minima auf beiden Seiten ermittelt wird. Insbesondere liegen die lokalen Minima auf beiden Seiten des lokalen Maximums bei etwa demselben Wert, insbesondere bei einer Reflektivität von etwa 0 %. Falls dies nicht der Fall sein sollte, kann dazu auch die mittlere Differenz der Reflektivität zwischen dem lokalen Maximum und den lokalen Minima auf beiden Seiten dienen, oder etwa eine Basislinie in Betracht gezogen werden.

Alle Wertangaben sind im Rahmen der Messgenauigkeit als etwaige Angaben zu verstehen.

**Bezugszeichenliste**

| | |
|---|---|
| 1 | Erste Lage: Erste hochbrechende Schichtlagen |
| 2 | Zweite Lage: Erste niederbrechende Schichtlage |
| 3 | Dritte Lage: Zweite hochbrechende Schichtlagen |
| 4 | Vierte Lage: Zweite niederbrechende Schichtlage |
| 5 | Fünfte Lage: Dritte hochbrechende Schichtlagen |
| 6 | Sechste Lage: Dritte niederbrechende Schichtlage |
| 7 | Siebte Lage: Vierte hochbrechende Schichtlagen |
| 8 | Achte Lage: funktionale Schichtlage |
| 9 | Neunte Lage: Vierte niederbrechende Schichtlage |
| 10 | Zehnte Lage: Pflegeschichtlage |
| 11 | Substratbasis |
| 100 | Schichtsystem nach einer Ausführungsform |
| 110 | Schichtsystem nach einer Ausführungsform |
| 120 | Schichtsystem nach einer Ausführungsform |
| 130 | Schichtsystem nach einer Ausführungsform |
| $\alpha$, $\alpha_1$, $\alpha_2$ | Betrachtungswinkel, Ausfallswinkel |
| $\alpha'$ | Einfallswinkel |
| a | Substratlage der Substratbasis |
| b | Hartschichtlage |
| $B_1$ | Benutzer, beispielsweise Brillenträger in üblicher Benutzungsstellung auf der dem einfallenden Licht abgewandten Seite des Schichtsystems |
| $B_2$ | Betrachter in Draufsicht von der dem einfallenden Licht zugewandten Seite des Schichtsystems |
| c | Adhäsionsschichtlage |
| $d_1$ | Schichtlagendicke der ersten Lage |
| $d_2$ | Schichtlagendicke der zweiten Lage |
| $d_3$ | Schichtlagendicke der dritten Lage |
| $d_4$ | Schichtlagendicke der vierten Lage |
| $d_5$ | Schichtlagendicke der fünften Lage |
| $d_6$ | Schichtlagendicke der sechsten Lage |
| $d_7$ | Schichtlagendicke der siebten Lage |
| $d_8$ | Schichtlagendicke der achten Lage |
| $d_9$ | Schichtlagendicke der neunten Lage |
| $d_{10}$ | Schichtlagendicke der zehnten Lage |
| $d_b$ | Schichtlagendicke der Schichtlage b der Substratbasis |
| $d_c$ | Schichtlagendicke der Schichtlage c der Substratbasis |
| EE | Einfallsebene |
| EL | Auf eine Fläche einfallendes Licht |
| F | Zumindest teilweise reflektierende Fläche |
| $F_a$ | Substratfläche |
| I | Spektraler Infrarotbereich |
| L | Lot einer zu untersuchenden Fläche im Auftreffpunkt des einfallenden Lichts |
| $L_0$, $L_{01}$, $L_{02}$ | Einfallendes Licht mit Intensität $I_0$ |
| $L_r$, $L_{r1}$, $L_{r2}$ | Reflektiertes Licht mit Intensität $I_r$ |
| Lt | Transmittiertes Licht mit Intensität It |
| $M_1$ | Reflektivitätsmaximum |
| $M_2$ | Reflektivitätsmaximum |
| $M_3$ | Reflektivitätsmaximum |
| $M_4$ | Reflektivitätsmaximum |
| $N_1$ | Substratnormale |
| $N_2$ | Substratnormale |
| $N_3$ | Substratnormale |
| $N_a$ | Substratnormale |
| $N_b$ | Substratnormale |
| P | Parallel polarisiertes Licht |
| RL | Von einer Fläche reflektiertes Licht |
| S | Senkrecht polarisiertes Licht |
| $S_1$ | Reflektivitätsspektrum |
| $S_2$ | Reflektivitätsspektrum |
| $S_3$ | Reflektivitätsspektrum |
| $S_4$ | Reflektivitätsspektrum |
| U | Spektraler Ultraviolettbereich |
| V | Spektraler sichtbarer Bereich |

**Patentansprüche**

1. Schichtsystem (100; 110; 120; 130) mit Infrarot-Verspiegelung umfassend

    - eine Substratbasis (11) umfassend eine Substratlage (a) mit einer Substratfläche ($F_a$); und
    - eine Mehrzahl niederbrechender Schichtlagen (2, 4, 6) und eine Mehrzahl hochbrechender Schichtlagen (1, 3, 5, 7), wobei abwechselnd eine hochbrechende und eine niederbrechende Schichtlage so an der Substratfläche ($F_a$) angeordnet sind, dass das Schichtsystem (100; 110; 120; 130) bei einem Detektionswinkel von etwa 0° mit mindestens einer Substratnormalen ($N_1$, $N_2$, $N_3$; $N_a$, $N_b$) der Substratfläche ($F_a$)

• eine Reflektivität für elektromagnetische Strahlung von R ≥ 15 % für mindestens einen Wellenlängenbereich zwischen etwa 680 nm und etwa 1100 nm aufweist; und
• eine Reflektivität für elektromagnetische Strahlung von R ≤ 5 % für mindestens einen Wellenlängenbereich zwischen etwa 400 nm und etwa 680 nm aufweist;

**dadurch gekennzeichnet, dass** die Reflektivität ab einer Wellenlänge von etwa 630 nm, insbesondere bei etwa 680 nm für einen Betrachungswinkel α von etwa 45°

• zwischen etwa 10 % und 20 %, insbesondere etwa 15 % höher ist als bei einem Betrachtungswinkel α von etwa 30°;
• zwischen etwa 20 % und 30 %, insbesondere etwa 25 % höher ist als bei einem Betrachtungswinkel α von etwa 15°; und
• zwischen etwa 23 % und 33 %, insbesondere etwa 27 % höher ist als bei einem Betrachtungswinkel α von etwa 0°.

2. Schichtsystem (100; 110; 120; 130) nach Anspruch 1, wobei eine der niederbrechenden Schichtlagen (9) $SiO_2$ aufweist;
und/oder
wobei die letzte optisch aktive Schichtlage eine niederbrechende Schichtlage (9) ist.

3. Schichtsystem (100; 110; 120; 130) nach einem der vorangehenden Ansprüche, wobei die Schichtlagen so an der Substratfläche ($F_a$) angeordnet sind, dass das Schichtsystem (100; 110; 120; 130) bei einem Detektionswinkel von etwa 0° mit der Substratnormalen ($N_1$, $N_2$, $N_3$; $N_a$, $N_b$) der Substratfläche ($F_a$) für mindestens einen Wellenlängenbereich zwischen etwa 280 nm und etwa 400 nm eine Reflektivität für elektromagnetische Strahlung von R ≥ 10 % hat;
und/oder
wobei die Schichtlagen so an der Substratfläche ($F_a$) angeordnet sind, dass das Schichtsystem bei einem Detektionswinkel von etwa 0° mit der Substratnormalen ($N_1$, $N_2$, $N_3$; $N_a$, $N_b$) der Substratfläche ($F_a$) für mindestens einen Wellenlängenbereich zwischen etwa 400 nm und etwa 680 nm, insbesondere zwischen etwa 480 nm und etwa 580 nm ein Reflektivitätsmaximum elektromagnetischer Strahlung von R ≤ 1 % hat.

4. Schichtsystem (100; 110; 120; 130) nach einem der vorangehenden Ansprüche, wobei die Mehrzahl hochbrechender Schichtlagen (1, 3, 5, 7) mindestens eines der Materialien umfassen: $Ta_2O_5$, $TiO_2$, $Ti_xO_y$, $ZrO_2$, $Al_2O_3$, $Nd_2O_5$, $Pr_2O_3$, $PrTiO_3$, $La_2O_3$, $Nb_2O_5$, $Y_2O_3$, $HfO_2$, ITO (Indium-Zinn-Oxid), ZnS, $Si_3N_4$, MgO, $CeO_2$;
und/oder
wobei die Mehrzahl niederbrechender Schichtlagen (2, 4, 6, 9) mindestens eines der Materialien umfassen: $MgF_2$, SiO, $SiO_2$, Silane, Siloxane, eine Mischung umfassend $SiO_2$ und $Al_2O_3$.

5. Schichtsystem (110; 120; 130) nach einem der vorangehenden Ansprüche, wobei die Schichtlagen beginnend von der Substratbasis (11) angeordnet in folgender Reihenfolge umfassen:

eine erste hochbrechende Schichtlage(1);
eine erste niederbrechende Schichtlage (2);
eine zweite hochbrechende Schichtlage (3);
eine zweite niederbrechende Schichtlage (4);
eine dritte hochbrechende Schichtlage (5);
eine dritte niederbrechende Schichtlage (6);
eine vierte hochbrechende Schichtlage (7); und
eine vierte niederbrechende Schichtlage (9), insbesondere eine Quarzschicht;

6. Schichtsystem (110; 120; 130) nach Anspruch 5, wobei die niederbrechenden Schichtlagen homogen ein niederbrechendes Material aufweisen und/oder die hochbrechenden Schichtlagen homogen ein hochbrechendes Material aufweisen und wobei bevorzugt das hochbrechende Material kein höchstbrechendes oder sehr hochbrechendes Material aufweist.

7. Schichtsystem (110; 120; 130) nach einem der vorangehenden Ansprüche, wobei die Schichtlagen beginnend von der Substratbasis (11) angeordnet in folgender Reihenfolge umfassen:

eine erste hochbrechende Schichtlage(1) mit einer Schichtlagendicke ($d_1$) von mind. etwa 118 nm;
eine erste niederbrechende Schichtlage (2) mit einer Schichtlagendicke ($d_2$) von mind. etwa 135 nm;
eine zweite hochbrechende Schichtlage (3) mit einer Schichtlagendicke ($d_3$) von mind. etwa 70 nm;
eine zweite niederbrechende Schichtlage (4) mit einer Schichtlagendicke ($d_4$) von mind. etwa 80 nm;
eine dritte hochbrechende Schichtlage (5) mit einer Schichtlagendicke ($d_5$) von mind. etwa 5 nm;
eine dritte niederbrechende Schichtlage (6) mit

einer Schichtlagendicke ($d_6$) von mind. etwa 35 nm;
eine vierte hochbrechende Schichtlage (7) mit einer Schichtlagendicke ($d_7$) von mind. etwa 55 nm; und
eine vierte niederbrechende Schichtlage (9) mit einer Schichtlagendicke ($d_9$) von mind. etwa 60 nm.

8. Schichtsystem (110; 120; 130) nach einem der vorangehenden Ansprüche, wobei die Schichtlagen beginnend von der Substratbasis (11) angeordnet in folgender Reihenfolge umfassen:

eine erste hochbrechende Schichtlage(1) mit einer Schichtlagendicke ($d_1$) von höchstens etwa 130 nm;
eine erste niederbrechende Schichtlage (2) mit einer Schichtlagendicke ($d_2$) von höchstens etwa 160 nm;
eine zweite hochbrechende Schichtlage (3) mit einer Schichtlagendicke ($d_3$) von höchstens etwa 120 nm;
eine zweite niederbrechende Schichtlage (4) mit einer Schichtlagendicke ($d_4$) von höchstens etwa 105 nm;
eine dritte hochbrechende Schichtlage (5) mit einer Schichtlagendicke ($d_5$) von höchstens etwa 15 nm;
eine dritte niederbrechende Schichtlage (6) mit einer Schichtlagendicke ($d_6$) von höchstens etwa 45 nm;
eine vierte hochbrechende Schichtlage (7) mit einer Schichtlagendicke ($d_7$) von höchstens etwa 80 nm; und
eine vierte niederbrechende Schichtlage (9) mit einer Schichtlagendicke ($d_9$) von höchstens etwa 80 nm.

9. Schichtsystem (110; 120; 130) nach einem der vorangehenden Ansprüche, wobei die Schichtlagen beginnend von der Substratbasis (11) angeordnet in folgender Reihenfolge umfassen:

eine erste hochbrechende Schichtlage(1) mit einer Schichtlagendicke ($d_1$) von etwa 121,5 nm;
eine erste niederbrechende Schichtlage (2) mit einer Schichtlagendicke ($d_2$) von etwa 151 nm;
eine zweite hochbrechende Schichtlage (3) mit einer Schichtlagendicke ($d_3$) von etwa 106,2 nm;
eine zweite niederbrechende Schichtlage (4) mit einer Schichtlagendicke ($d_4$) von etwa 95,2 nm;
eine dritte hochbrechende Schichtlage (5) mit einer Schichtlagendicke ($d_5$) von etwa 12,1 nm;
eine dritte niederbrechende Schichtlage (6) mit

einer Schichtlagendicke ($d_6$) von etwa 42 nm;
eine vierte hochbrechende Schichtlage (7) mit einer Schichtlagendicke ($d_7$) von etwa 59,6 nm; und
eine vierte niederbrechende Schichtlage (9) mit einer Schichtlagendicke ($d_9$) von etwa 74,9 nm.

10. Schichtsystem (110; 130) nach einem der vorangehenden Ansprüche, ferner umfassend

eine funktionale Schichtlage (8), insbesondere $Al_2O_3$ umfassend, und eine Schichtlagendicke ($d_8$) von mind. etwa 8 nm und höchstens etwa 11 nm aufweist; und bevorzugt
eine Pflegeschichtlage (10) mit einer Schichtlagendicke ($d_{10}$) von mind. etwa 1 nm und höchstens etwa 20 nm aufweist.

11. Schichtsystem (110; 130) nach einem der vorangehenden Ansprüche, wobei die Substratbasis ferner umfasst:

eine Schutzschichtlage (b), insbesondere eine Lackschicht oder eine organische Schicht umfassend, mit einer Schichtlagendicke ($d_a$) von mind. etwa 500 nm und höchstens etwa 5 $\mu$m; und bevorzugt
eine Adhäsionsschichtlage (c), insbesondere umfassend niederbrechende Metalloxide, Chrom, Silane und/oder Siloxane, mit einer Schichtlagendicke ($d_b$) von mind. etwa 1 nm und höchstens etwa 20 nm.

12. Schichtsystem (100; 110; 120; 130) nach einem der vorangehenden Ansprüche, wobei die Substratbasis (11) ein optisches Element, insbesondere eine Linse und bevorzugt ein Brillenglas umfasst; und/oder
wobei die Substratbasis (11) eine Scheibe, insbesondere eine Scheibe eines Displays und/oder insbesondere eine Fahrzeugscheibe und bevorzugt eine Windschutzscheibe und/oder eine Heckscheibe eines Fahrzeugs umfasst.

13. Schichtsystem (100; 110; 120; 130) nach einem der vorangehenden Ansprüche, wobei die Reflektivität (R) elektromagnetischer Strahlung in einem Wellenlängenbereich zwischen etwa 560 nm und etwa 1000 nm zumindest für einen Teilabschnitt des Wellenlängenbereichs eine Steigung zwischen etwa 20 % pro 100 nm und etwa 80 % pro 100 nm, bevorzugt zwischen etwa 30 % pro 100 nm und etwa 60 % pro 100 nm und besonders bevorzugt zwischen etwa 35 % pro 100 nm und etwa 45 % pro 100 nm aufweist; und/oder
wobei die Reflektivität bei einem Betrachtungswinkel $\alpha$ von etwa 45° und einer Wellenlänge von

• etwa 630 nm einen Wert zwischen etwa 10 % und etwa 20 %, insbesondere zwischen etwa 13 % und etwa 17 % aufweist;
• etwa 680 nm einen Wert zwischen etwa 30 % und etwa 40 %, insbesondere zwischen etwa 33 % und etwa 39 % aufweist; und
• etwa 730 nm einen Wert zwischen etwa 43 % und etwa 53 %, insbesondere zwischen etwa 45 % und etwa 50 % aufweist.

14. Brillenglas, wobei ein Schichtsystem (100; 110; 120; 130) mit Infrarot-Verspiegelung nach einem der vorangehenden Ansprüche so auf der Objektseite des Brillenglases angeordnet ist, dass das Brillenglas die Substratbasis (11) des Schichtsystems (100; 110; 120; 130) ausbildet; wobei das Brillenglas an seiner Augenseite insbesondere eine Reflektivität für elektromagnetische Strahlung von $R \leq 5\%$ für einen Wellenlängenbereich von etwa 400 nm bis etwa 1100 nm aufweist.

15. Verfahren zur Herstellung eines Schichtsystems (100; 110; 120; 130) mit Infrarot-Verspiegelung umfassend

Bereitstellen einer Substratbasis (11) umfassend eine Substratlage (a) mit einer Substratfläche ($F_a$); und
Anordnen auf der Substratfläche ($F_a$) einer Mehrzahl niederbrechender Schichtlagen (2, 4, 6, 9) und eine Mehrzahl hochbrechender Schichtlagen (1, 3, 5, 7), wobei abwechselnd eine Schichtlage mit hochbrechender und eine Schichtlage mit niederbrechender Eigenschaft angeordnet werden, sodass das Schichtsystem (100; 110; 120; 130) bei einem Detektionswinkel von etwa 0° mit einer Substratnormalen ($N_1$, $N_2$, $N_3$; $N_a$, $N_b$) der Substratfläche ($F_a$)

eine Reflektivität elektromagnetischer Strahlung von $R \geq 15\%$ für mindestens einen Wellenlängenbereich zwischen etwa 680 nm und etwa 1100 nm hat; und
eine Reflektivität elektromagnetischer Strahlung von $R \leq 5\%$ für mindestens einen Wellenlängenbereich zwischen etwa 400 nm und etwa 680 nm hat;
**dadurch gekennzeichnet, dass**
die Reflektivität des Schichtsystems (100; 110; 120; 130) ab einer Wellenlänge von etwa 630 nm, insbesondere bei etwa 680 nm für einen Betrachtungswinkel $\alpha$ von etwa 45°

• zwischen etwa 10 % und 20 %, insbesondere etwa 15 % höher ist als bei einem Betrachtungswinkel $\alpha$ von etwa 30°;

• zwischen etwa 20 % und 30 %, insbesondere etwa 25 % höher ist als bei einem Betrachtungswinkel $\alpha$ von etwa 15°; und
• zwischen etwa 23 % und 33 %, insbesondere etwa 27 % höher ist als bei einem Betrachtungswinkel $\alpha$ von etwa 0°.

**Claims**

1. A layer system (100; 110; 120; 130) with infrared mirror coating comprising

- a substrate base (11) comprising a substrate layer (a) with a substrate surface ($F_a$); and
- a plurality of low-refractive-index layer sheets (2, 4, 6) and a plurality of high-refractive-index layer sheets (1, 3, 5, 7), wherein a high-refractive-index layer sheet and a low-refractive-index layer sheet are arranged alternately on the substrate surface ($F_a$) such that the layer system (100; 110; 120; 130) exhibits, at a detection angle of approximately 0° with respect to at least one substrate normal ($N_1$, $N_2$, $N_3$; $N_a$, $N_b$) of the substrate surface ($F_a$)

• exhibits a reflectivity for electromagnetic radiation of $R \geq 15\%$ for at least one wavelength range between about 680 nm and about 1100 nm; and
• has a reflectivity for electromagnetic radiation of $R \leq 5\%$ for at least one wavelength range between about 400 nm and about 680 nm;

**characterized in that** the reflectivity, starting at a wavelength of about 630 nm, particularly at about 680 nm, for a viewing angle $\alpha$ of about 45°

• is between about 10% and 20%, in particular about 15%, higher than at a viewing angle $\alpha$ of about 30°;
• is between about 20% and 30%, in particular about 25%, higher than at a viewing angle $\alpha$ of about 15°; and
• is between about 23% and 33%, in particular about 27%, higher than at a viewing angle $\alpha$ of about 0°.

2. The layer system (100; 110; 120; 130) according to claim 1, wherein one of the low-refractive-index layers (9) comprises $SiO_2$; and/or
wherein the last optically active layer sheet is a low-refractive-index layer sheet (9).

3. The layer system (100; 110; 120; 130) according to any one of the preceding claims, wherein the layers are arranged on the substrate surface ($F_a$) such that the layer system (100; 110; 120; 130) has a reflectivity for electromagnetic radiation of R ≥ 10% at a detection angle of approximately 0° relative to the substrate normals ($N_1$, $N_2$, $N_3$; $N_a$, $N_b$) of the substrate surface ($F_a$)
has a reflectivity for electromagnetic radiation of R ≥ 10% for at least one wavelength range between approximately 280 nm and approximately 400 nm; and/or
wherein the layer stacks are arranged on the substrate surface ($F_a$) such that the layer system, at a detection angle of approximately 0° relative to the substrate normal ($N_1$, $N_2$, $N_3$; $N_a$, $N_b$) of the substrate surface ($F_a$)
has a reflectivity maximum of electromagnetic radiation of R ≤ 1% for at least one wavelength range between about 400 nm and about 680 nm, in particular between about 480 nm and about 580 nm.

4. The layer system (100; 110; 120; 130) according to any one of the preceding claims, wherein the plurality of high-refractive-index layer sheets (1, 3, 5, 7) comprise at least one of the materials: $Ta_2O_5$, $TiO_2$, $Ti_xO_y$, $ZrO_2$, $Al_2O_3$, $Nd_2O_5$, $Pr_2O_3$, $PrTiO_3$, $La_2O$, $Nb_2O_5$, $Y_2O_3$, $HfO_2$, ITO (indium tin oxide), ZnS, $Si_3N_4$, MgO, $CeO_2$;
and/or
wherein the plurality of low-refractive layer sheets (2, 4, 6, 9) comprise at least one of the materials: $MgF_2$, SiO, $SiO_2$, silanes, siloxanes, a mixture comprising $SiO_2$ and $Al_2O_3$.

5. The layer system (110; 120; 130) according to any one of the preceding claims, wherein the layers, starting from the substrate base (11), are arranged in the following order:

   a first high-refractive-index layer sheet (1);
   a first low-refractive-index layer sheet (2);
   a second high-refractive-index layer sheet (3);
   a second low-refractive-index layer sheet (4);
   a third high-refractive-index layer sheet (5);
   a third low-refractive index layer sheet (6);
   a fourth high-refractive-index layer sheet (7); and
   a fourth low-refractive index layer sheet (9), in particular a quartz layer;

6. The layer system (110; 120; 130) according to claim 5, wherein the low-refractive-index layer sheets homogeneously comprise a low-refractive-index material and/or the high-refractive-index layer sheets homogeneously comprise a high-refractive-index material, and wherein, preferably, the high-refractive-index material does not comprise a highest-refractive-index or very high-refractive-index material.

7. The layer system (110; 120; 130) according to any one of the preceding claims, wherein the layer sheets, starting from the substrate base (11), are arranged in the following order:

   a first high-refractive-index layer sheet (1) having a layer sheet thickness ($d_1$) of at least about 118 nm;
   a first low-refractive-index layer sheet (2) having a layer sheet thickness ($d_2$) of at least about 135 nm;
   a second high-refractive-index layer sheet (3) having a layer sheet thickness ($d_3$) of at least about 70 nm;
   a second low-refractive-index layer sheet (4) with a layer sheet thickness ($d_4$) of at least about 80 nm;
   a third high-refractive-index layer sheet (5) with a layer sheet thickness ($d_5$) of at least about 5 nm;
   a third low-refractive-index layer sheet (6) with a layer sheet thickness ($d_6$) of at least about 35 nm;
   a fourth high-refractive-index layer sheet (7) with a layer sheet thickness ($d_7$) of at least about 55 nm; and
   a fourth low-refractive-index layer sheet (9) having a layer sheet thickness ($d_9$) of at least about 60 nm.

8. The layer system (110; 120; 130) according to any of the preceding claims, wherein the layer sheets, starting from the substrate base (11), are arranged in the following order:

   a first high-refractive-index layer sheet (1) having a layer sheet thickness ($d_1$) of at most about 130 nm;
   a first low-refractive-index layer sheet (2) having a layer sheet thickness ($d_2$) of at most about 160 nm;
   a second high-refractive-index layer sheet (3) having a layer sheet thickness ($d_3$) of at most about 120 nm;
   a second low-refractive-index layer sheet (4) with a layer sheet thickness ($d_4$) of at most about 105 nm;
   a third high-refractive-index layer sheet (5) with a layer sheet thickness ($d_5$) of at most about 15 nm;
   a third low-refractive-index layer sheet (6) having a layer sheet thickness ($d_6$) of at most about 45 nm;
   a fourth high-refractive-index layer sheet (7) having a layer sheet thickness ($d_7$) of at most

about 80 nm; and

a fourth low-refractive-index layer sheet (9) having a layer sheet thickness ($d_9$) of at most about 80 nm.

9. The layer system (110; 120; 130) according to any one of the preceding claims, wherein the layer sheets, starting from the substrate base (11), are arranged in the following order:

a first high-refractive-index layer sheet (1) having a layer sheet thickness ($d_1$) of about 121.5 nm;

a first low-refractive-index layer sheet (2) having a layer sheet thickness ($d_2$) of about 151 nm;

a second high-refractive-index layer sheet (3) having a layer sheet thickness ($d_3$) of about 106.2 nm;

a second low-refractive-index layer sheet (4) with a layer sheet thickness ($d_4$) of approximately 95.2 nm;

a third high-refractive-index layer sheet (5) with a layer sheet thickness ($d_5$) of approximately 12.1 nm;

a third low-refractive-index layer sheet (6) having a layer sheet thickness ($d_6$) of approximately 42 nm;

a fourth high-refractive-index layer sheet (7) having a layer sheet thickness ($d_7$) of approximately 59.6 nm; and

a fourth low-refractive-index layer sheet (9) having a layer sheet thickness ($d_9$) of about 74.9 nm.

10. The layer system (110; 130) according to any one of the preceding claims, further comprising

comprising a functional layer (8), in particular $Al_2O_3$, and having a layer thickness ($d_8$) of at least about 8 nm and at most about 11 nm; and preferably

a protective layer (10) having a layer thickness ($d_{10}$) of at least about 1 nm and at most about 20 nm.

11. The layer system (110; 130) according to any one of the preceding claims, wherein the substrate base further comprises:

a protective layer (b), in particular comprising a lacquer layer or an organic layer, having a layer thickness ($d_a$) of at least about 500 nm and at most about 5 $\mu$m; and preferably

an adhesion layer (c), in particular comprising low-refractive-index metal oxides, chromium, silanes, and/or siloxanes, with a layer thickness ($d_b$) of at least about 1 nm and at most about 20 nm.

12. The layer system (100; 110; 120; 130) according to any one of the preceding claims, wherein the substrate base (11) comprises an optical element, in particular a lens and preferably an eyeglass lens; and/or

wherein the substrate base (11) comprises a pane, in particular a display pane and/or in particular a vehicle pane, and preferably a windshield and/or a rear window of a vehicle.

13. The coating system (100; 110; 120; 130) according to one of the preceding claims, wherein the reflectivity (R) of electromagnetic radiation in a wavelength range between about 560 nm and about 1000 nm has, for at least a portion of the wavelength range, a slope between about 20% per 100 nm and about 80% per 100 nm, preferably between about 30% per 100 nm and about 60% per 100 nm, and most preferably between about 35% per 100 nm and about 45% per 100 nm;

and/or

wherein the reflectivity at a viewing angle $\alpha$ of about 45° and a wavelength of

• about 630 nm has a value between about 10% and about 20%, in particular between about 13% and about 17%;
• at a wavelength of about 680 nm has a value between about 30% and about 40%, in particular between about 33% and about 39%; and
• at approximately 730 nm has a value between approximately 43% and approximately 53%, in particular between approximately 45% and approximately 50%.

14. A spectacle lens, wherein a layer system (100; 110; 120; 130) with infrared mirror coating according to one of the preceding claims is arranged on the object side of the spectacle lens such that the spectacle lens forms the substrate base (11) of the coating system (100; 110; 120; 130);

wherein the spectacle lens, on its eye-facing side, has a reflectivity for electromagnetic radiation of R $\leq$ 5% for a wavelength range of about 400 nm to about 1100 nm.

15. A method for manufacturing a layer system (100; 110; 120; 130) with infrared mirror coating, comprising

providing a substrate base (11) comprising a substrate layer (a) with a substrate surface ($F_a$); and

arranging on the substrate surface ($F_a$) a plurality of low-refractive-index layer sheets (2, 4, 6, 9) and a plurality of high-refractive-index layer sheets (1, 3, 5, 7), wherein a layer sheet with high-refractive-index properties and a layer sheet with low-refractive-index properties are arranged alternately, such that the layer system (100; 110; 120; 130) has, at a detection angle of approximately 0° relative to a substrate normal ($N_1$, $N_2$, $N_3$; $N_a$, $N_b$) of the substrate surface ($F_a$),

has a reflectivity of electromagnetic radiation of $R \geq 15\%$ for at least one wavelength range between about 680 nm and about 1100 nm; and

has a reflectivity of electromagnetic radiation of $R \leq 5\%$ for at least one wavelength range between about 400 nm and about 680 nm;

**characterized in that** the reflectivity of the layer system (100; 110; 120; 130) at a wavelength of about 630 nm or higher, particularly at about 680 nm, for a viewing angle $\alpha$ of about 45°

• is between about 10% and 20%, in particular about 15%, higher than at a viewing angle $\alpha$ of about 30°;

• is between about 20% and 30%, in particular about 25%, higher than at a viewing angle $\alpha$ of about 15°; and

• is between about 23% and 33%, in particular about 27%, higher than at a viewing angle $\alpha$ of about 0°.

## Revendications

1. Système de couches (100; 110; 120; 130) avec miroitement infrarouge comprenant

- une base de substrat (11) comprenant une couche de substrat (a) ayant une surface de substrat ($F_a$); et

- une pluralité de couches à faible réfraction (2, 4, 6) et une pluralité de couches à haute réfraction (1, 3, 5, 7), une couche à haute réfraction et une couche à faible réfraction étant disposées en alternance sur la surface de substrat ($F_a$) de telle sorte que le système de couches (100; 110; 120; 130), pour un angle de détection d'environ 0°, avec au moins une normale au substrat ($N_1$, $N_2$, $N_3$; $N_a$, $N_b$) de la surface de substrat ($F_a$)

• présente une réflectivité pour le rayonnement électromagnétique de $R \geq 15\%$ pour au moins une plage de longueurs d'onde comprise entre environ 680 nm et environ 1100 nm; et

• présente une réflectivité pour le rayonnement électromagnétique de $R \leq 5\%$ pour au moins une plage de longueurs d'onde comprise entre environ 400 nm et environ 680 nm;

**caractérisé en ce que**, à partir d'une longueur d'onde d'environ 630 nm, en particulier à environ 680 nm pour un angle d'observation $\alpha$ d'environ 45°, la réflectivité

• entre environ 10 % et 20 %, en particulier environ 15 % de plus que pour un angle d'observation $\alpha$ d'environ 30°;

• entre environ 20 % et 30 %, en particulier environ 25 % de plus que pour un angle d'observation $\alpha$ d'environ 15°; et

• entre environ 23 % et 33 %, en particulier environ 27 %, est supérieur à celui d'un angle d'observation $\alpha$ d'environ 0°.

2. Système de couches (100; 110; 120; 130) selon la revendication 1, dans lequel l'une des couches de couches à faible réfraction (9) présente $SiO_2$; et/ou

la dernière couche de couche optiquement active étant une couche de couche à basse réfraction (9).

3. Système de couches (100 ; 110 ; 120 ; 130) selon l'une des revendications précédentes, les couches étant disposées sur la surface du substrat ($F_a$) de telle sorte que le système de couches (100 ; 110 ; 120 ; 130), pour un angle de détection d'environ 0°, soit aligné avec la normale au substrat ($N_1$, $N_2$, $N_3$; $N_a$, $N_b$) de la surface du substrat ($F_a$).

a, pour au moins une plage de longueurs d'onde comprise entre environ 280 nm et environ 400 nm, une réflectivité pour le rayonnement électromagnétique de $R \geq 10\%$; et/ou

les couches étant disposées sur la surface du substrat ($F_a$) de telle sorte que, pour un angle de détection d'environ 0°, le système de couches soit aligné avec la normale au substrat ($N_1$, $N_2$, $N_3$; $N_a$, $N_b$) de la surface du substrat ($F_a$)

pour au moins une plage de longueurs d'onde comprise entre environ 400 nm et environ 680 nm, en particulier entre environ 480 nm et environ 580 nm, a un maximum de réflectivité du rayonnement électromagnétique de $R \leq 1\%$.

4. Système de couches (100; 110; 120; 130) selon l'une quelconque des revendications précédentes, dans lequel la pluralité de couches stratifiées à haute réfraction (1, 3, 5, 7) comprend au moins l'un des matériaux : $Ta_{(2)O5}$, $TiO_2$, $Ti_xO_y$, $ZrO_2$, $Al_2O_3$, $Nd_2O_5$, $Pr_2O_3$, $PrTiO_3$, $La_2O_3$, $Nb_2O_5$, $Y_2O_3$, $HfO_2$, ITO (oxyde d'indium et d'étain), ZnS, $Si_3N_4$, MgO, $CeO_2$; et/ou

la pluralité de couches à basse réfraction (2, 4, 6, 9) comprenant au moins l'un des matériaux: $MgF_2$, SiO, $SiO_2$, silanes, siloxanes, un mélange compre-

nant $SiO_2$ et $Al_2O_3$.

5. Système de couches (110; 120; 130) selon l'une des revendications précédentes, dans lequel les couches de couches comprennent, en commençant par la base du substrat (11), dans l'ordre suivant:

une première couche à indice de réfraction élevé (1);
une première couche à faible indice de réfraction (2);
une deuxième couche à indice de réfraction élevé (3);
une deuxième couche à faible indice de réfraction (4);
une troisième couche à indice de réfraction élevé (5);
une troisième couche à faible indice de réfraction (6);
une quatrième couche à indice de réfraction élevé (7); et
une quatrième couche de couche à faible réfraction (9), en particulier une couche de quartz;

6. Système de couches (110; 120; 130) selon la revendication 5, dans lequel les couches de couches à faible réfraction présentent de manière homogène un matériau à faible réfraction et/ou les couches de couches à haute réfraction présentent de manière homogène un matériau à haute réfraction et dans lequel, de préférence, le matériau à haute réfraction ne présente pas de matériau à très haute réfraction ou à très haute réfraction.

7. Système de couches (110; 120; 130) selon l'une des revendications précédentes, dans lequel les couches de couches comprennent, en commençant par la base du substrat (11), dans l'ordre suivant :

une première couche à indice de réfraction élevé (1) avec une épaisseur de couche $(d_1)$ d'au moins environ 118 nm;
une première couche à faible réfraction (2) ayant une épaisseur de couche $(d_2)$ d'au moins environ 135 nm;
une deuxième couche à indice de réfraction élevé (3) ayant une épaisseur de couche $(d_3)$ d'au moins environ 70 nm;
une deuxième couche à faible réfraction (4) ayant une épaisseur de couche $(d_4)$ d'au moins environ 80 nm ;
une troisième couche à indice de réfraction élevé (5) ayant une épaisseur de couche $(d_5)$ d'au moins environ 5 nm;
une troisième couche de faible réfraction (6) ayant une épaisseur de couche $(d_6)$ d'au moins environ 35 nm;
une quatrième couche à indice de réfraction élevé (7) ayant une épaisseur de couche $(d_7)$ d'au moins environ 55 nm; et
une quatrième couche de faible réfraction (9) ayant une épaisseur de couche $(d_9)$ d'au moins environ 60 nm.

8. Système de couches (110; 120; 130) selon l'une quelconque des revendications précédentes, dans lequel les couches sont disposées dans l'ordre suivant, en commençant par la base du substrat (11):

une première couche à indice de réfraction élevé (1) ayant une épaisseur de couche $(d_1)$ d'au plus environ 130 nm;
une première couche à faible réfraction (2) ayant une épaisseur de couche $(d_2)$ d'environ 160 nm au maximum;
une deuxième couche à indice de réfraction élevé (3) ayant une épaisseur de couche $(d_3)$ d'environ 120 nm au maximum;
une deuxième couche de faible réfraction (4) ayant une épaisseur de couche $(d_4)$ d'environ 105 nm au maximum;
une troisième couche à indice de réfraction élevé (5) ayant une épaisseur de couche $(d_5)$ d'environ 15 nm au maximum;
une troisième couche de faible réfraction (6) ayant une épaisseur de couche $(d_6)$ d'environ 45 nm au maximum;
une quatrième couche à indice de réfraction élevé (7) ayant une épaisseur de couche $(d_7)$ d'environ 80 nm au maximum; et
une quatrième couche de faible réfraction (9) ayant une épaisseur de couche $(d_9)$ d'environ 80 nm au maximum.

9. Système de couches (110; 120; 130) selon l'une quelconque des revendications précédentes, dans lequel les couches de couches comprennent, dans l'ordre suivant, en commençant par la base du substrat (11):

une première couche à indice de réfraction élevé (1) ayant une épaisseur de couche $(d_1)$ d'environ 121,5 nm;
une première couche à faible réfraction (2) ayant une épaisseur de couche $(d_2)$ d'environ 151 nm;
une deuxième couche à indice de réfraction élevé (3) ayant une épaisseur de couche $(d_3)$ d'environ 106,2 nm;
une deuxième couche de faible réfraction (4) ayant une épaisseur de couche $(d_4)$ d'environ 95,2 nm;
une troisième couche à indice de réfraction élevé (5) ayant une épaisseur de couche $(d_5)$ d'environ 12,1 nm;
une troisième couche de faible réfraction (6) ayant une épaisseur de couche $(d_6)$ d'environ

42 nm ;

une quatrième couche à indice de réfraction élevé (7) ayant une épaisseur de couche ($d_7$) d'environ 59,6 nm; et

une quatrième couche de faible réfraction (9) ayant une épaisseur de couche ($d_9$) d'environ 74,9 nm.

10. Système de couches (110; 130) selon l'une quelconque des revendications précédentes, comprenant en outre

une couche fonctionnelle (8), comprenant en particulier $Al_2O_3$, et présentant une épaisseur de couche ($d_8$) d'au moins environ 8 nm et d'au plus environ 11 nm; et de préférence une couche d'entretien (10) ayant une épaisseur de couche ($d_{10}$) d'au moins environ 1 nm et d'au plus environ 20 nm.

11. Système de couches (110; 130) selon l'une quelconque des revendications précédentes, dans lequel la base du substrat comprend en outre :

une couche de protection (b), comprenant notamment une couche de vernis ou une couche organique, avec une épaisseur de couche ($d_a$) d'au moins environ 500 nm et d'au plus environ 5 μm; et de préférence une couche d'adhérence (c), comprenant en particulier des oxydes métalliques à basse réfraction, du chrome, des silanes et/ou des siloxanes, avec une épaisseur de couche ($d_b$) d'au moins environ 1 nm et d'au plus environ 20 nm.

12. Système de couches (100; 110; 120; 130) selon l'une des revendications précédentes, dans lequel la base de substrat (11) comprend un élément optique, en particulier une lentille et de préférence un verre de lunettes; et/ou la base de substrat (11) comprenant une vitre, notamment une vitre d'un écran et/ou notamment une vitre de véhicule et de préférence un pare-brise et/ou une lunette arrière d'un véhicule.

13. Système de couches (100; 110; 120; 130) selon l'une des revendications précédentes, dans lequel la réflectivité (R) du rayonnement électromagnétique dans une plage de longueurs d'onde comprise entre environ 560 nm et environ 1000 nm présente, au moins pour une section partielle de la plage de longueurs d'onde, une pente comprise entre environ 20 % pour 100 nm et environ 80 % pour 100 nm, de préférence entre environ 30 % pour 100 nm et environ 60 % pour 100 nm et de manière particulièrement préférée entre environ 35 % pour 100 nm et environ 45 % pour 100 nm ;

et/ou

la réflectivité à un angle d'observation α d'environ 45° et à une longueur d'onde de

• environ 630 nm, présente une valeur comprise entre environ 10 % et environ 20 %, en particulier entre environ 13 % et environ 17 %;
• environ 680 nm a une valeur comprise entre environ 30 % et environ 40 %, en particulier entre environ 33 % et environ 39 %; et
• environ 730 nm a une valeur comprise entre environ 43 % et environ 53 %, en particulier entre environ 45 % et environ 50 %.

14. Verre de lunettes, dans lequel un système de couches (100; 110; 120; 130) avec un reflet infrarouge selon l'une des revendications précédentes est disposé sur le côté objet du verre de lunettes de telle sorte que le verre de lunettes forme la base de substrat (11) du système de couches (100; 110; 120; 130);
le verre de lunettes présentant notamment sur son côté œil une réflectivité pour le rayonnement électromagnétique de R ≤ 5 % pour une plage de longueurs d'onde d'environ 400 nm à environ 1100 nm.

15. Procédé de fabrication d'un système de couches (100; 110; 120; 130) avec un reflet infrarouge comprenant

fournir une base de substrat (11) comprenant une couche de substrat (a) ayant une surface de substrat ($F_a$); et
disposer sur la surface de substrat ($F_a$) une pluralité de couches à faible indice de réfraction (2, 4, 6, 9) et une pluralité de couches à indice de réfraction élevé (1, 3, 5, 7), une couche à indice de réfraction élevé et une couche à indice de réfraction faible étant disposées en alternance, de sorte que le système de couches (100; 110; 120; 130), pour un angle de détection d'environ 0° avec une normale au substrat ($N_1$, $N_2$, $N_3$; $N_a$, $N_b$) de la surface du substrat ($F_a$)

a une réflectivité du rayonnement électromagnétique de R ≥ 15 % pour au moins une plage de longueurs d'onde comprise entre environ 680 nm et environ 1100 nm; et
a une réflectivité du rayonnement électromagnétique de R ≤ 5 % pour au moins une plage de longueurs d'onde comprise entre environ 400 nm et environ 680 nm;

**caractérisé en ce que** la réflectivité du système de couches (100; 110; 120; 130) à partir d'une longueur d'onde d'environ 630 nm, en particulier à environ 680 nm pour un angle d'observation α d'environ 45°.

• entre environ 10 % et 20 %, en particulier environ 15 % de plus que pour un angle d'observation α d'environ 30°;

• entre environ 20 % et 30 %, en particulier environ 25 % de plus que pour un angle d'observation α d'environ 15°; et

• est comprise entre environ 23 % et 33 %, en particulier environ 27 %, de plus que pour un angle d'observation α d'environ 0°.

Fig. 1

Fig. 2

110

Fig. 3

Fig. 4

130

| Luft | Schichtlagendicke [nm] | |
|---|---|---|
| 10 — clean effect/Pflegeschichtlage | 8,0 | $d_{10}$ |
| 9 — SiO2 | 74,9 | $d_9$ |
| 8 — Funktionale Schichtlage(Al2O3) | 9,8 | $d_8$ |
| 7 — ZrO2 | 59,6 | $d_7$ |
| 6 — SiO2 | 42,0 | $d_6$ |
| 5 — ZrO2 | 12,1 | $d_5$ |
| 4 — SiO2 | 95,2 | $d_4$ |
| 3 — ZrO2 | 106,2 | $d_3$ |
| 2 — SiO2 | 151,0 | $d_2$ |
| 1 — ZrO2 | 121,5 | $d_1$ |
| c — Adhäsionslage | 10,0 | $d_c$ |
| b — Hartschicht | 2700,0 | $d_b$ |
| a — Substrat | | |

11

$B_1$

Fig. 5

EP 4 327 143 B1

EP 4 327 143 B1

Fig. 6

Wellenlänge [nm]

## Fig. 7

[L*=4,74; C*=2,81; h*=195,14; Rv=0,524; Rv'=0,771]  ------- AOI=0,000  S4

[L*=4,84; C*=2,02; h*=317,65; Rv=0,535; Rv'=0,779]  —·—·— AOI=15,000°  S3

[L*=7,37; C*=21,36; h*=356,89; Rv=0,817; Rv'=0,85]  — — — AOI=30,000°  α  S2

[L*=18,81; C*=41,22; h*=10,69; Rv=2,708; Rv'=1,367]  ——— AOI=45,000°  S1

EP 4 327 143 B1

Fig. 8 a)

Fig. 8 b)

EP 4 327 143 B1

Quelle der Fig. 8a), 8b) und 8c): Veröffentlichung PerkinElmer „Gerichtete Transmission/Reflexion"

Fig. 9

| | 0° | 15° | 30° | 45° |
|---|---|---|---|---|
| L* | 4,7 | 4,8 | 7,4 | 18,8 |
| C* | 2,8 | 2,0 | 21,4 | 41,2 |
| h [°] | 195,1 | 317,7 | 356,9 | 10,7 |
| Rv [%] | 0,52 | 0,54 | 0,82 | 2,7 |
| Rv' [%] | 0,77 | 0,78 | 0,85 | 1,4 |
| RM_380-780 [%] | 8,0 | 8,7 | 11,4 | 16,7 |
| RM_780-1150 [%] | 35,8 | 34,4 | 30,3 | 23,6 |

Colour

Fig. 10 b)

α=AOl=0,000°   grün

α=AOl=23,000°

α=AOl=45,000°   rot

Fig. 10 d)

C*h* Plot

Fig. 10 a)

α=45°

grün      rot

α=0°

Colour Values Plot

Fig. 10 c)

Fig. 10 e)

EP 4 327 143 B1

**IN DER BESCHREIBUNG AUFGEFÜHRTE DOKUMENTE**

**In der Beschreibung aufgeführte Patentdokumente**

- WO 2016110339 A1
- EP 3702830 A1
- US 20150293284 A1
- US 4556599 A